# EUROPEAN PATENT SPECIFICATION

(11) **EP 0 698 878 B1**
(45) Date of publication and mention of the grant of the patent: **24.05.2000**
(21) Application number: 95305980.5
(22) Date of filing: 25.08.1995
(51) Int. Cl.: G11B 5/31, G11B 5/127, G11B 5/33

(54) **Thin film magnetic head and method of fabricating the same**
Dünnfilmmagnetkopf und Verfahren zu seiner Herstellung
Tête magnétique avec film mince et procédé pour sa fabrication

(30) Priority: 26.08.1994 US 296388; 26.08.1994 US 296389; 26.08.1994 US 296617; 26.08.1994 US 296776; 26.08.1994 US 296821; 26.08.1994 US 296839; 26.08.1994 US 296840; 26.08.1994 US 297183; 26.08.1994 US 297185; 26.08.1994 US 297186
(43) Date of publication of application: 28.02.1996
(73) Proprietor: AIWA CO., LTD., Taito-ku, Tokyo 110 (JP)
(72) Inventor: Malhotra, Arun, San Jose, CA 95129 (US); Ang, Jane, San Mateo, AC 94403 (US); Gray, G. Robert, Fremont, CA 94536 (US); Watterston, James, Sunnyvale, CA 94086 (US)
(74) Representative: Senior, Alan Murray

(56) References cited:
- EP-A- 0 516 288
- EP-A- 0 549 035
- EP-A- 0 584 707

## Description

### BACKGROUND OF THE INVENTION

### Field of the Invention

This invention relates in general to magnetic recording and playback heads and fabricating methods thereof and, more particularly, to thin film magnetic recording and playback heads and fabricating methods thereof.

### Description of Related Art

In the continuing drive for increased storage density in magnetic media storage devices, thin film magnetic heads have been developed. As opposed to earlier types of magnetic heads, the fabrication of which involves significant piecework and manual handling of individual parts, thin film magnetic heads take advantage of semiconductor fabrication processes to form a large number of heads simultaneously on a common substrate or wafer.

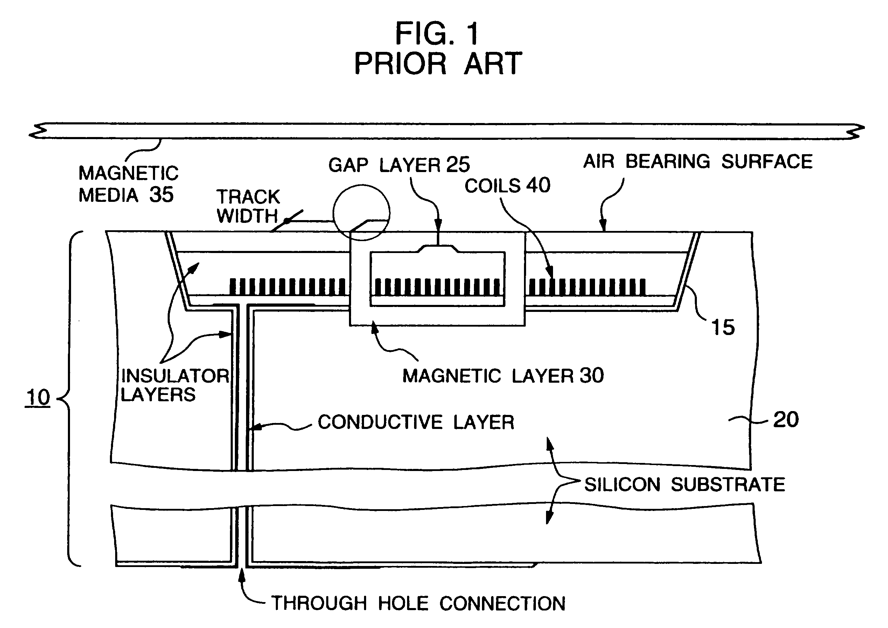

One such head which is formed by a semiconductor thin film process is disclosed in the article, "A New Thin Film Head Generation IC Head" by J.P. Lazzari et al., IEEE Transactions on Magnetics, Vol. 25, No. 5, September 1989. A cross-sectional view of the Lazzari head is illustrated in FIG. 1 as head 10. Head 10 is fabricated within a recess 15 in a silicon substrate 20. A gap 25 is shown in the uppermost portion of a magnetic layer or yoke 30 situated within recess 15. Head 10 is shown positioned adjacent magnetic recording media 35. A magnetic coil 40 is wound around magnetic yoke 30. A plurality of sliders with respective heads 10 thereon are fabricated from a common silicon wafer or substrate using semiconductor thin film processes. The sliders are then diced up into individual slider assemblies.

### SUMMARY OF THE INVENTION

In fabricating thin film heads and other thin film structures, difficulties are often encountered in maintaining the planarity of the various layers which form the head. It is possible that if planarity is not maintained in some structures of the thin film head during head fabrication, the resulting irregularities can cause failure in the operation of the resultant head or degraded operation of the head.

Unfortunately, thin film magnetic heads are subject to substantial wear when the head contacts magnetic recording media such as tape, for example. Over time, this wear can be very considerable and ultimately may be a cause for head failure if accumulated wear significantly damages the head.

To achieve electrical connection to the coils of the head, a through hole connection is made in the silicon substrate. The walls of the hole are coated with an insulator layer and the center of the hole is filled with a conductive layer.

Efficient connection to the ends of the coil structure of a thin film head is one problem which the thin film head designer faces. Such connections need to be achieved in a manner which is compatible with the fabrication of the remaining structures of the thin film head.

To attenuate the amplitude of undesired signals which might otherwise reach a recording/playback head, shielding can be used between the head and the potential noise source. Unfortunately, providing separate shield structures between head and noise sources can contribute significantly to the ultimate cost of the head.

The gap width is defined to be the distance between the magnetic pole pieces which form the gap of a thin film head. The gap length of a particular head is generally related to the track width of the magnetic media on which the head records and plays back. In other words, the narrower the gap length of the head, the narrower the track width of the media becomes.

In recent times, the trend has been toward magnetic media exhibiting smaller and smaller track widths. This trend has been necessary in order to increase the storage density of data on magnetic media. Each magnetic medium of a particular track density has a corresponding magnetic head with a particular gap width. Unfortunately, a thin film head made for one track width tends not be compatible with media of another track width. This limitation has generally meant that a recording/playback device using a particular thin film head can only use media having a track width corresponding to that head.

In view of the aforesaid problems of the related art, an object of the present invention to provide thin film magnetic heads, fabricating methods thereof, thin film magnetic head assemblies and fabricating methods thereof which can attain the following aim.

To fabricate the thin film head of the present invention without excavating a recess within the substrate to contain the head.

Furthermore, certain aspects or preferred embodiments of the invention can attain the following aims:

To make the thin film head of the present invention have a narrow gap width which results in correspondingly high density magnetic recording capabilities.

To fabricate the thin film head of the present invention in large quantities using thin film semiconductor fabrication equipment.

To provide a method of fabricating a thin film head by which layer planarity is maintained in selected areas of the head.

To significantly reduce head wear.

To establish electrical connections to the coil structure of a thin film head using a minimum number of connective structures.

To provide a method for fabricating a thin film head of the present invention by which head wear is significantly reduced.

To provide a method of fabricating a thin film head by which the pole pieces of the head can be placed very close to the magnetic recording media.

To provide a method of fabricating a thin film head by which the head can be fabricated in large quantities using thin film semiconductor fabrication equipment.

To improve coupling of the magnetic field in the gap region.

To shield head from undesired noise sources which could otherwise contaminate the recording and playback signal associated with the head, without raising cost.

To this end, to integrate a shield within the thin film head itself.

To make the thin film head of the present invention compatible with magnetic media exhibiting different respective track widths.

The four different aspects of the invention are defined in claims 1, 21, 28 and 45, respectively.

### BRIEF DESCRIPTION OF THE DRAWINGS

FIG. 1 is a cross section of a conventional thin film magnetic head.

FIG. 2A is a plan view of a substrate with via holes employed by one embodiment of the magnetic head of the invention.

FIG. 2B is a cross section of the magnetic head of FIG. 2A taken along section line 2B-2B.

FIG. 3 is a plan view of the magnetic head of FIG. 2A with a seed layer added.

FIG. 4A is a plan view of the magnetic head of FIG. 3 with an insulative layer and open region formed therein.

FIG. 4B is a cross sectional view of the magnetic head of FIG. 4A taken along section line 4B-4B.

FIG. 5 illustrates a plurality of magnetic heads being fabricated on a common substrate.

FIG. 6A is a plan view of the magnetic head of FIG. 4A showing an early stage of side pole build-up.

FIG. 6B is a cross sectional view of the magnetic head of FIG. 6A taken along section line 6B-6B.

FIG. 7A is a plan view of the magnetic head of FIG. 6A showing the placement of a lower coil structure.

FIGS. 7B and 7C are cross sectional views of the magnetic head of FIG. 7A taken along section lines 7B-7B and 7C-7C respectively.

FIG. 8A is a plan view of the magnetic head of FIG. 7A showing an insulative layer on the lower coil structure.

FIG. 8B is a cross sectional view of the magnetic head of FIG. 8A taken along section line 8B-8B.

FIG. 9A is a plan view of the magnetic head of FIG. 8A showing placement of an upper coil structure.

FIGS. 9B, 9C and 9D are cross sectional views of the magnetic head of FIG. 9A taken along section lines 9B-9B, 9C-9C and 9D-9D respectively.

FIG. 10A is a plan view of the magnetic head of FIG. 9A showing an insulative layer on the upper coil structure.

FIG. 10B is a cross sectional view of the magnetic head of FIG. 10A taken along section line 10B-10B.

FIG. 11A is a plan view of the magnetic head of FIG. 10A showing placement of a seed layer and a connective grounding strip.

FIG. 11B is a cross sectional view of the magnetic head of FIG. 11A taken along section line 11B-11B.

FIG. 12 is a cross sectional view of the magnetic head of FIG. 11B showing placement of an insulative pedestal thereon.

FIG. 13A is a cross sectional view of the magnetic head of FIG. 13B showing the further build-up of the magnetic side poles.

FIG. 13B is a close-up plan view of a portion of the head of FIG. 13A showing the side pole and insulative pedestal area.

FIG. 14A is a close-up plan view of a portion of the head of FIG. 14B showing the first magnetic pole.

FIG. 14B is a cross sectional view of the magnetic head of FIG. 14A showing the addition of a first magnetic pole at the top of the magnetic yoke structure of the head.

FIG. 14C is a cross-sectional view of the head showing a photoresist layer with an open region in which gap material is to be deposited.

FIG. 15A is a close-up plan view of a portion of the head of FIG. 14A showing the gap region of the head.

FIG. 15B is a cross sectional view of the magnetic head of FIG. 15A showing the addition of a gap region.

FIG. 16A is a close-up plan view of the side pole and gap region of the magnetic head of FIG. 15A showing the addition of a second magnetic pole at the top of the magnetic yoke structure of the head.

FIG. 16B is a cross sectional view of the magnetic head of FIG. 16A taken along section line 16B-16B and showing the addition of a second magnetic pole.

FIG. 17A is a close-up plan view of the side pole and gap region of the magnetic head of FIG. 16A after addition of an adhesion layer and a diamond-like carbon wear layer to the top of the head.

FIG. 17B is a cross sectional view of the magnetic head of FIG. 17A taken along section line 17B-17B.

FIG. 18A is a cross sectional view of the magnetic head of FIG. 17B showing the magnetic head after a diamond-like carbon wear layer and adhesion layer are patterned and etched in regions other than the insulative pedestal.

FIG. 18B is a close-up view of the upper portion of the head of FIG. 18A.

FIG. 19A is a close-up view of the side pole and gap region of the magnetic head when fabrication is complete.

FIG. 19B is a cross section view of the magnetic head of FIG. 19A taken along section line 19B-19B.

FIG. 19C is a close-up view of the uppermost portion of the head of FIG. 19B.

FIG. 20 is a perspective view showing the magnetic head fabricated on a slider substrate.

FIG. 21 is a representation of an E-beam curing system used in fabricating the magnetic head.

FIG. 22 is a plan view of the bottom side of the thin film head of the present invention.

FIG. 23A is a top plan view of one embodiment of the thin film magnetic head of the present invention prior to completion of the pole structure.

FIG. 23B is a cross-sectional view of the thin film head of FIG. 2A taking along section line 23B-23B.

FIG. 24A is a close-up top plan view of the pole region of the thin film head of FIG. 2A after a lower diamond-like carbon (DLC) layer has been deposited on the head.

FIG. 24B is a cross-sectional view of the thin film head of FIG. 24A taking along section line 24B-24B.

FIG. 25A is a top plan view of the head of FIG. 24A after first and second pole wells have been etched in the lower DLC layer to form a gap region.

FIG. 25B is a cross-sectional view of the thin film head of FIG. 25A taking along section line 25B-25B.

FIG. 26A is a top plan view of the head of FIG. 25A after first and second magnetic poles have been deposited in the first and second pole wells.

FIG. 26B is a cross-sectional view of the thin film head of FIG. 26A taking along section line 26B-26B.

FIG. 27A is a top plan view of the head of FIG. 26A after an upper DLC layer has been deposited on the head.

FIG. 27B is a cross-sectional view of the thin film head of FIG. 27A taking along section line 27B-27B.

FIG. 27C is a cross-sectional view of the thin film head of FIG. 27B after the upper DLC layer is etched to substantially align with the lower DLC layer.

FIG. 28A is a top plan view of the head of FIG. 27C after the upper DLC layer is machined to expose the first and second magnetic poles and the DLC gap region between the poles.

FIG. 28B is a cross-sectional view of the thin film head of FIG. 28A taking along section line 28B-28B.

FIG. 29A is a top plan view of the head of FIG. 24A after a pole well is etched in a lower DLC layer.

FIG. 29B is a cross-sectional view of the thin film head of FIG. 29A taking along section line 29B-29B.

FIG. 30A is a top plan view of the head of FIG. 29A after a first magnetic pole is deposited in the pole well.

FIG. 30B is a cross-sectional view of the thin film head of FIG. 30A taking along section line 30B-30B.

FIG. 31A is a top plan view of the head of FIG. 30A after a DLC gap region is deposited in the pole well on the head.

FIG. 31B is a cross-sectional view of the thin film head of FIG. 30A taking along section line 31B-31B.

FIG. 32A is a top plan view of the head of FIG. 31A after a non-magnetic gap region is plated in the pole well on the head.

FIG. 32B is a cross-sectional view of the thin film head of FIG. 32A taking along section line 32B-32B.

FIG. 33A is a top plan view of the head of FIG. 32A after a second magnetic pole is deposited in the pole well.

FIG. 33B is a cross-sectional view of the thin film head of FIG. 33A taking along section line 33B-33B.

FIG. 34A is a top plan view of the head of FIG. 33A after the magnetic control regions are removed from the magnetic control wells.

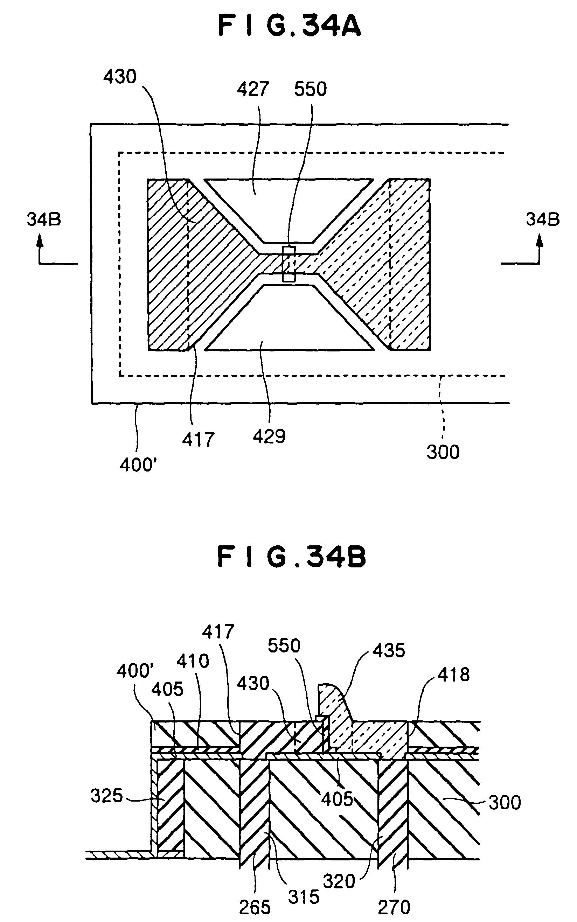

FIG. 34Bis a cross-sectional view of the thin film head of FIG. 34A taking along section line 34B-34B.

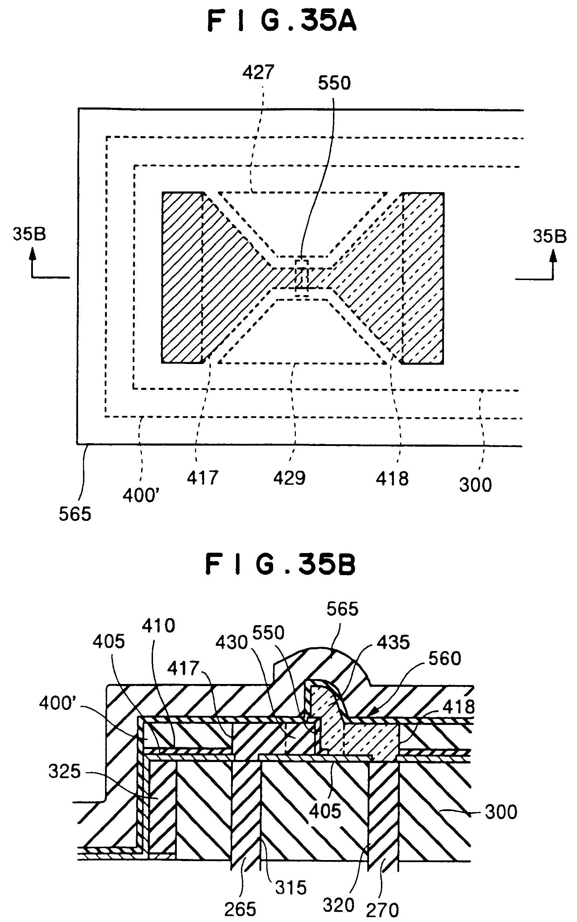

FIG. 35A is a top plan view of the head of FIG. 34A after an upper DLC layer has been deposited on the head.

FIG. 35B is a cross-sectional view of the thin film head of FIG. 35A taking along section line 35B-35B.

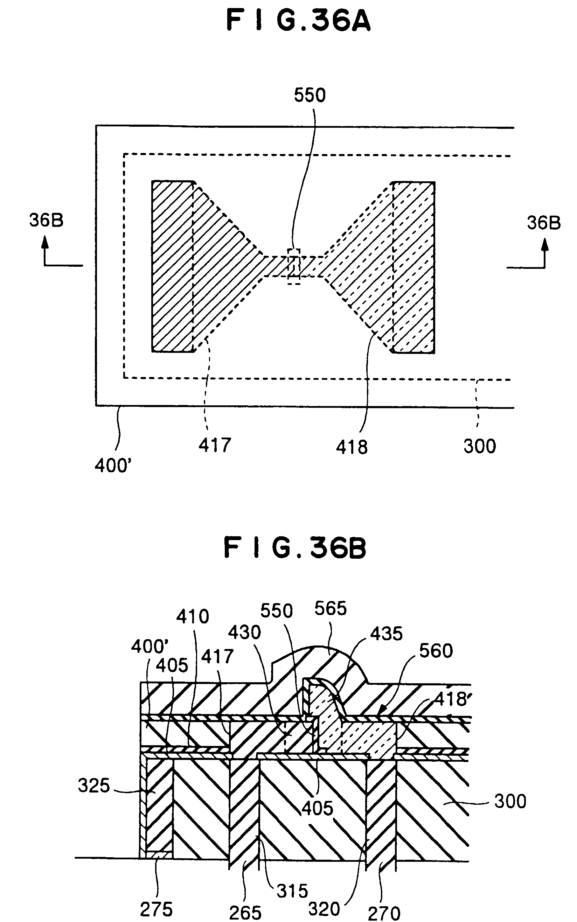

FIG. 36A is a top plan view of the head of FIG. 35A after the area of the head outside of the DLC frame is removed.

FIG. 36B is a cross-sectional view of the thin film head of FIG. 36A taking along section line 36B-36B.

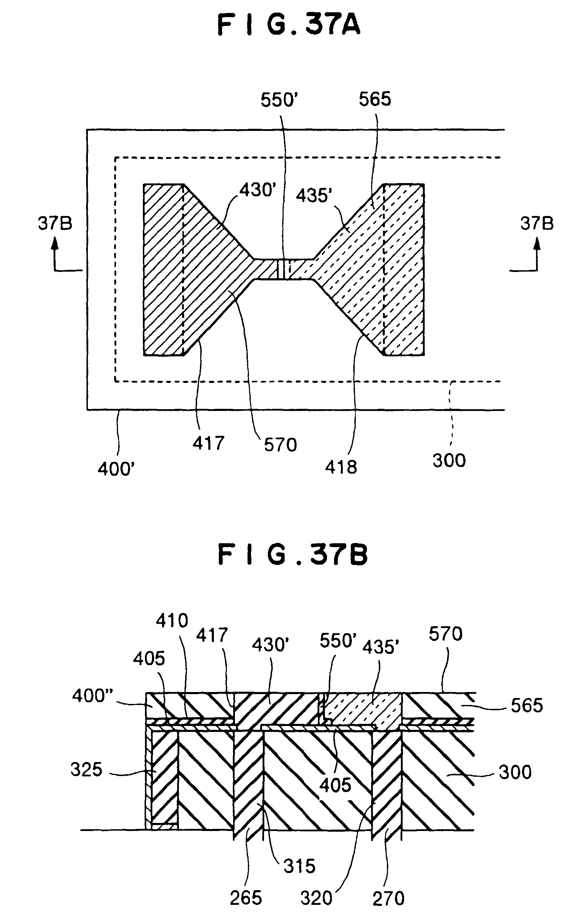

FIG. 37A is a top plan view of the head of FIG. 36A after the upper DLC layer is machined to expose the first and second magnetic poles and the DLC gap region between the poles.

FIG. 37B is a cross-sectional view of the thin film head of FIG. 37A taking along section line 37B-37B.

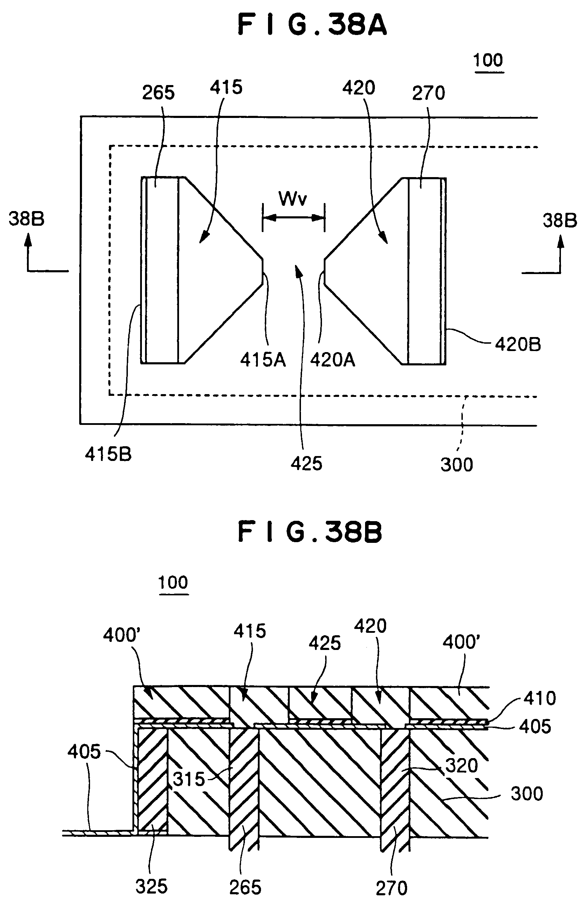

FIG. 38A is a top plan view of the thin film head after pole support wells are formed in the lower DLC layer.

FIG. 38B is a cross-sectional view of the thin film head of FIG. 38A taken along section line 38B-38B.

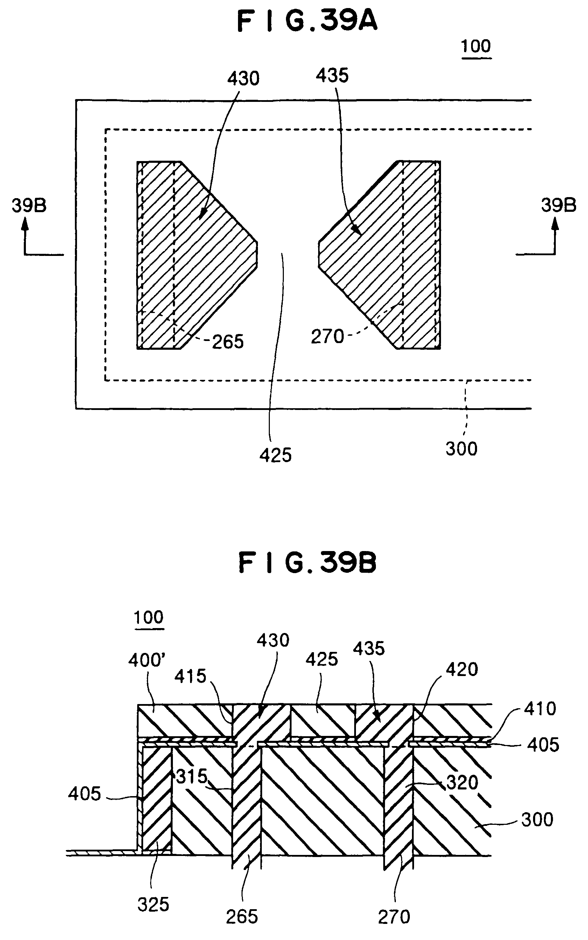

FIG. 39A is a top plan view of the thin film head after pole supports are formed in the pole support wells.

FIG. 39B is a cross-sectional view of the thin film head of FIG. 39A taken along section line 39B-39B.

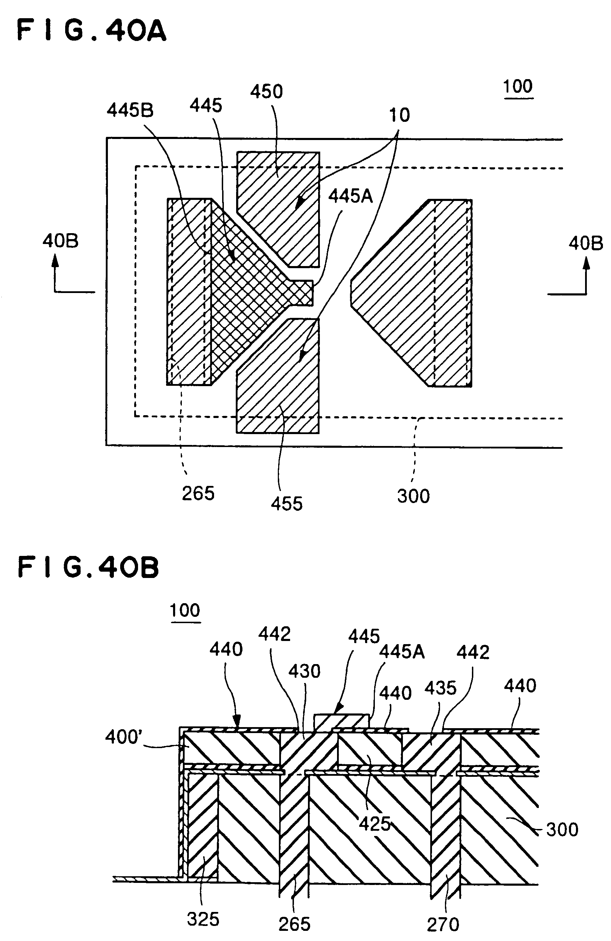

FIG. 40A is a top plan view of the thin film head after a first pole extension is formed on one of the pole support members.

FIG. 40B is a cross-sectional view of the thin film head of FIG. 40A taken along section line 40B-40B.

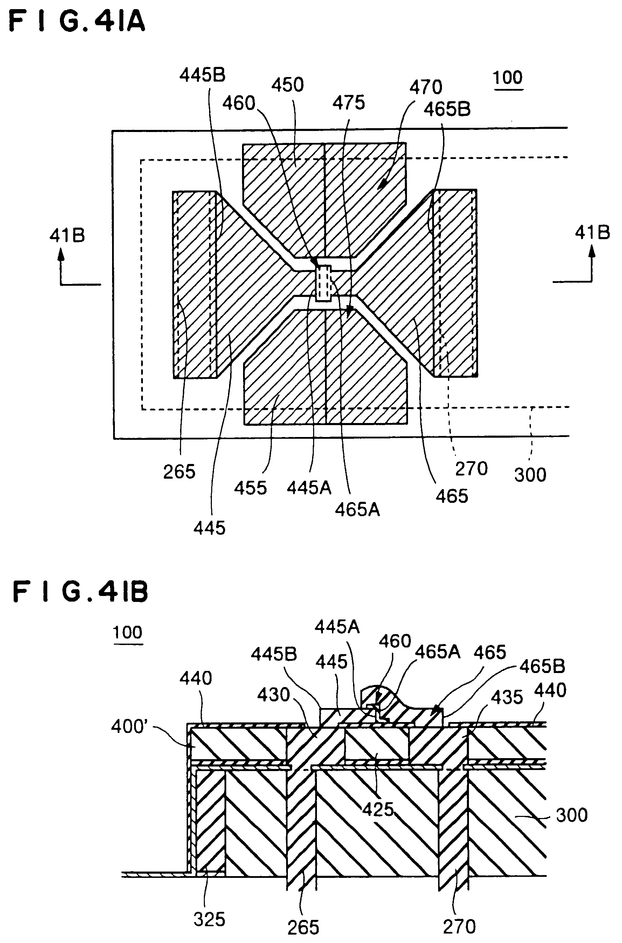

FIG. 41A is a top plan view of the thin film head after a second pole extension an a gap region are formed on the head.

FIG. 41B is a cross-sectional view of the thin film head of FIG. 41A taken along section line 41B-41B.

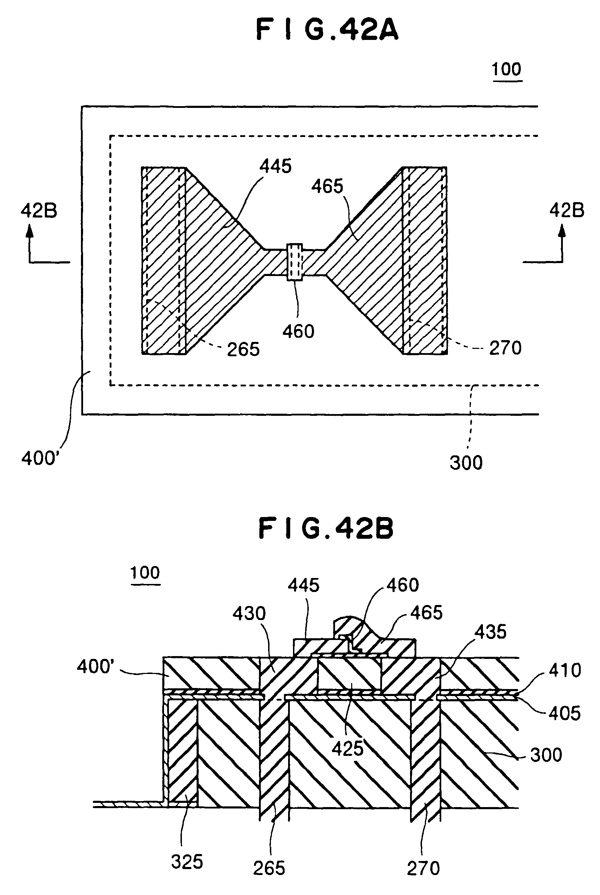

FIG. 42A is a top plan view of the thin film head after the magnetic control regions have been removed.

FIG. 42B is a cross-sectional view of the thin film head of FIG. 42A taken along section line 42B-42B.

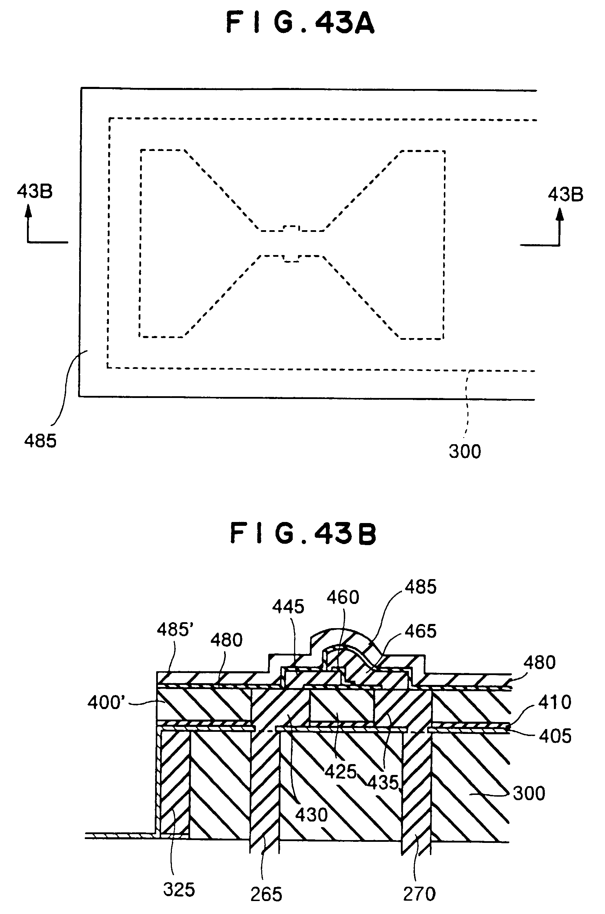

FIG. 43A is a top plan view of the thin film head after the upper surface of the head is covered with a diamond-like carbon (DLC) layer.

FIG. 43B is a cross-sectional view of the thin film head of FIG. 43A taken along section line 43B-43B.

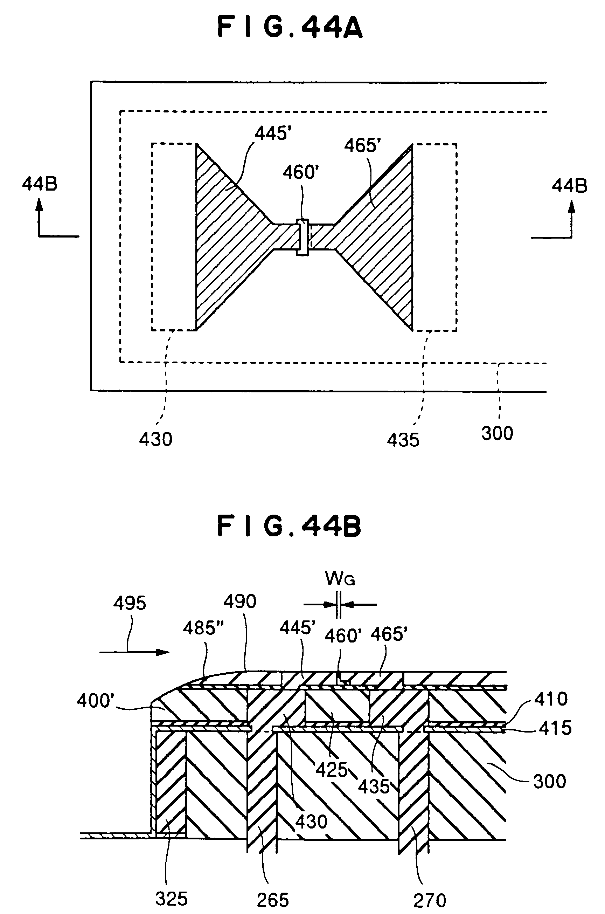

FIG. 44A is a top plan view of the thin film head after the upper surface of the head is machined.

FIG. 44B is a cross-sectional view of the thin film head of FIG. 44A taken along section line 44B-44B.

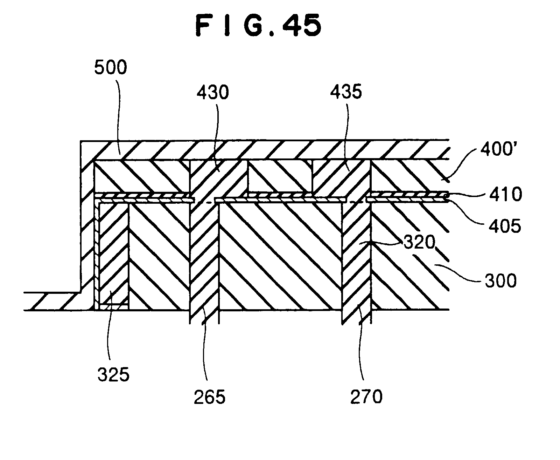

FIG. 45 is a top plan view of a partially complete thin film head which is an alternative embodiment of the invention.

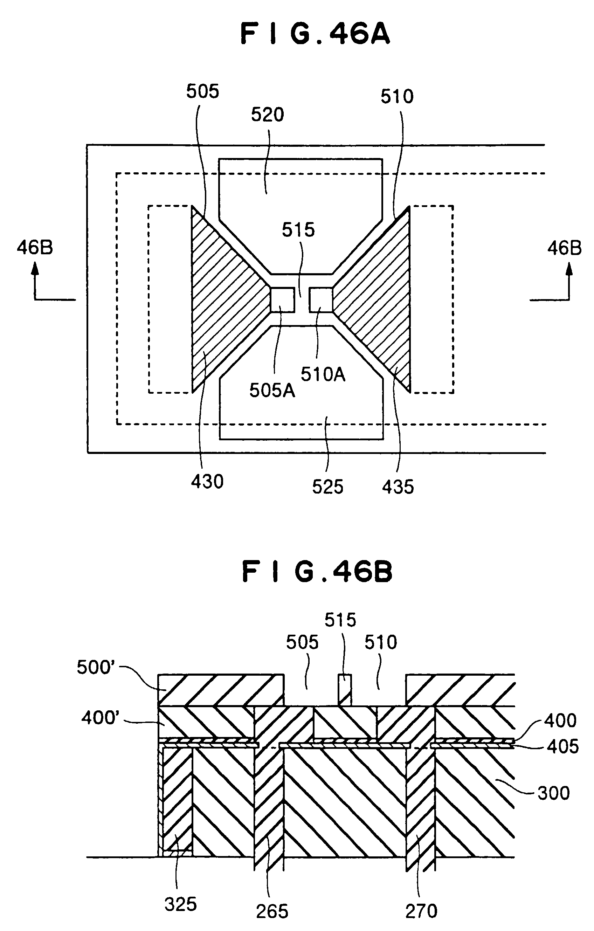

FIG. 46A is a top plan view of the thin film head of FIG. 45 after pole support wells and magnetic control wells are formed in the DLC layer.

FIG. 46B is a cross-sectional view of the thin film head of FIG. 46A taken along section line 46B-46B.

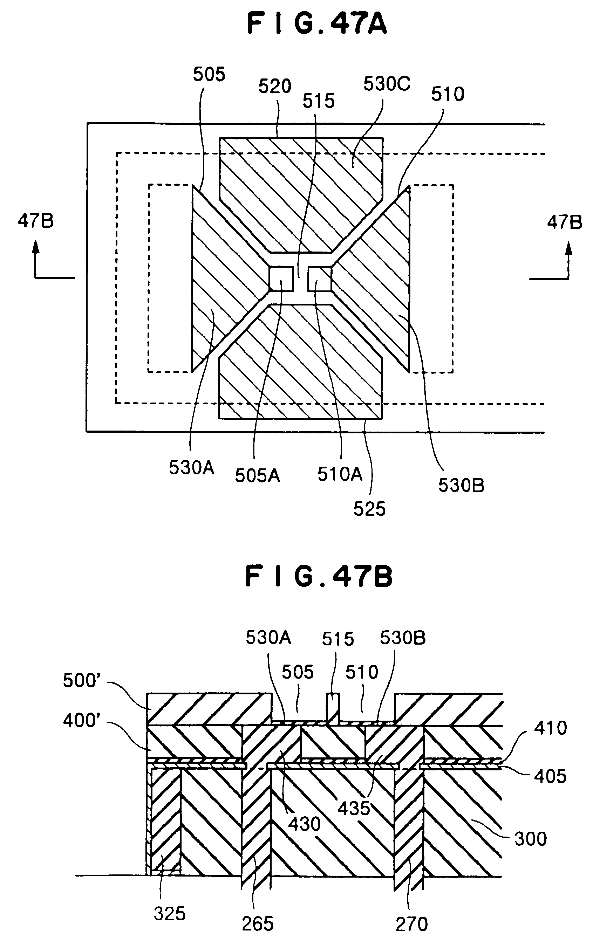

FIG. 47A is a top plan view of the thin film head after a second DLC layer is deposited on the head and after pole extension wells are formed in the second DLC layer.

FIG. 47B is a cross-sectional view of the thin film head of FIG. 47A taken along section line 47B-47B.

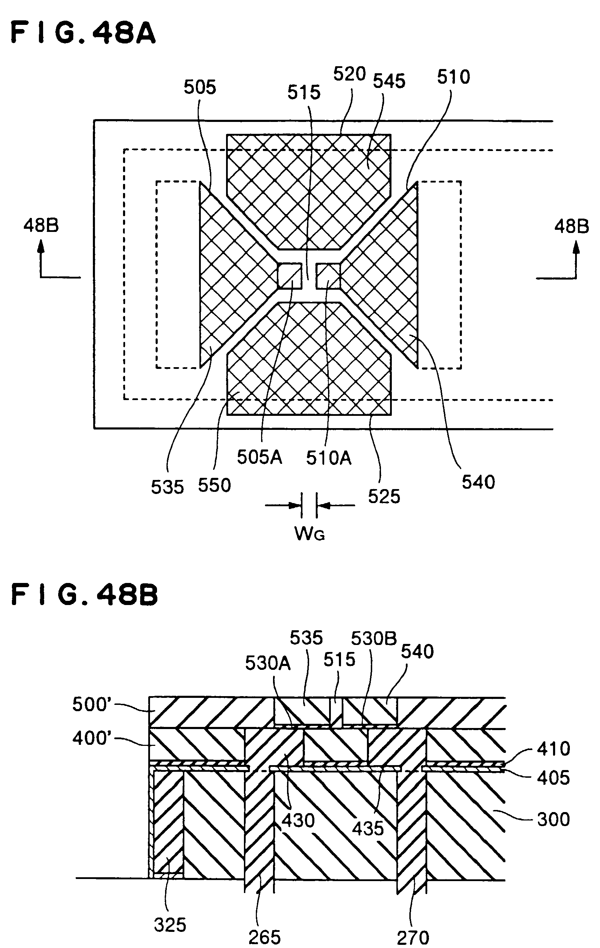

FIG. 48A is a top plan view of the thin film head after the pole extension wells are filled with magnetic pole extensions.

FIG. 48B is a cross-sectional view of the thin film head of FIG. 48A taken along section line 48B-48B.

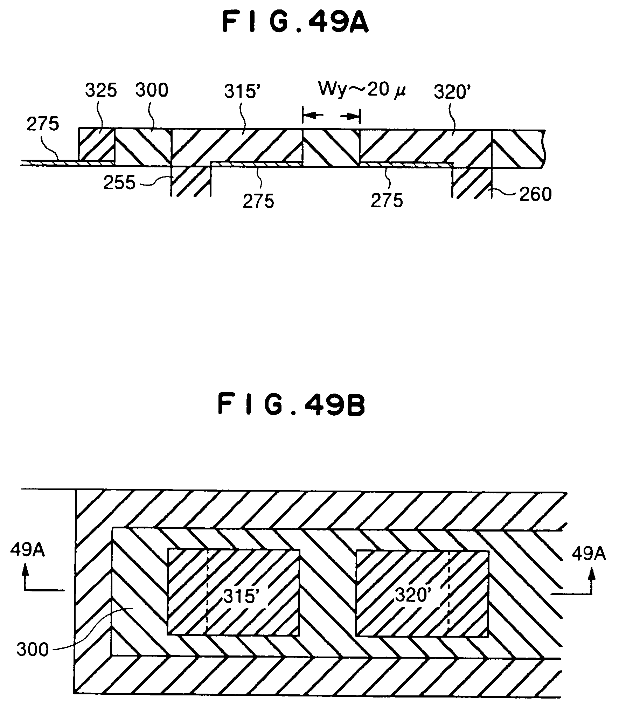

FIG. 49A is a cross-sectional view of process steps in the fabrication of an alternative embodiment of the invention taken along section line 49A-49A in FIG. 49B.

FIG. 49B is a plan view of process steps shown in FIG. 49A.

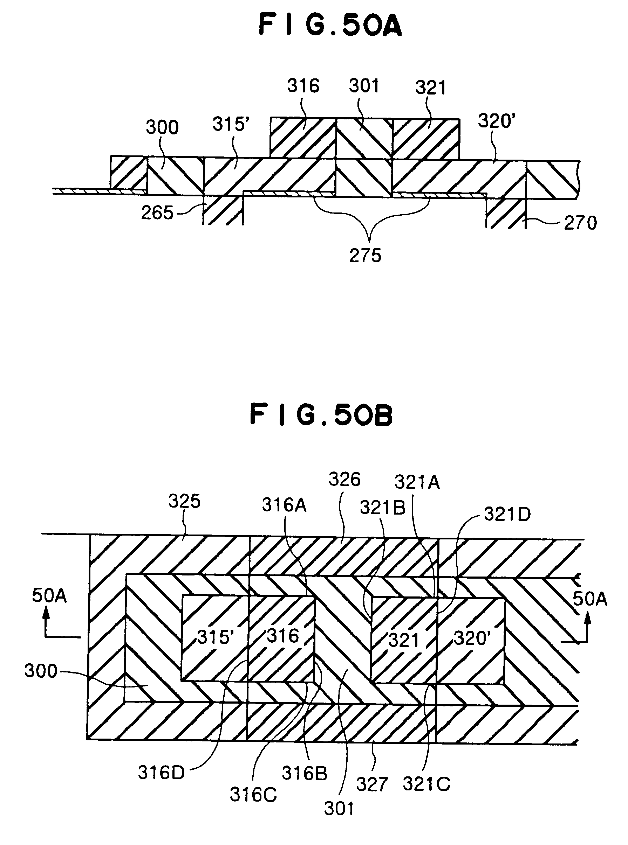

FIG. 50A is a cross-sectional view of process steps in the fabrication of an alternative embodiment of the invention taken along section line 50A-50A in FIG. 50B.

FIG. 50B is a plan view of process steps shown in FIG. 50A.

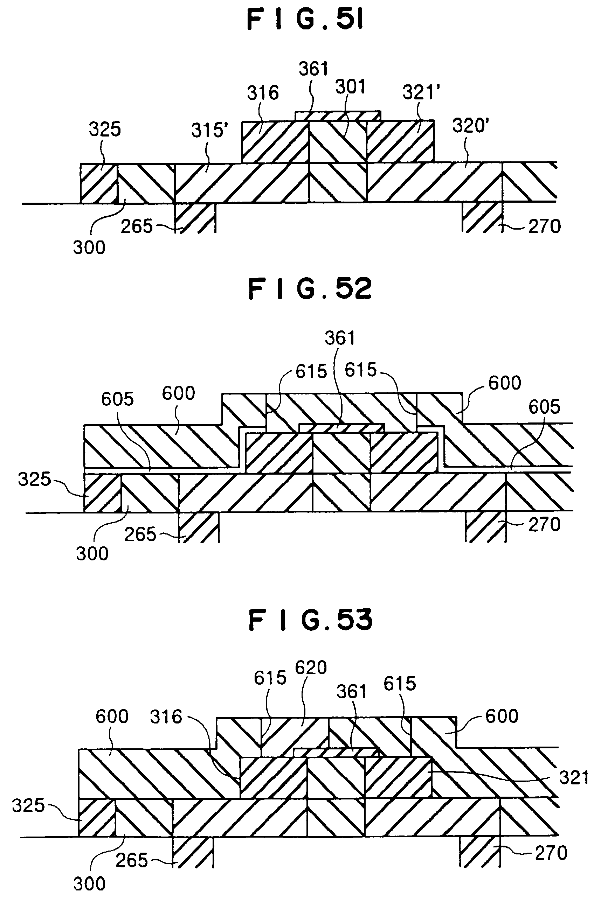

FIG. 51 is a cross-sectional view of process steps in the fabrication of an alternative embodiment of the invention.

FIG. 52 is a cross-sectional view of process steps in the fabrication of an alternative embodiment of the invention.

FIG. 53 is a cross-sectional view of process steps in the fabrication of an alternative embodiment of the invention.

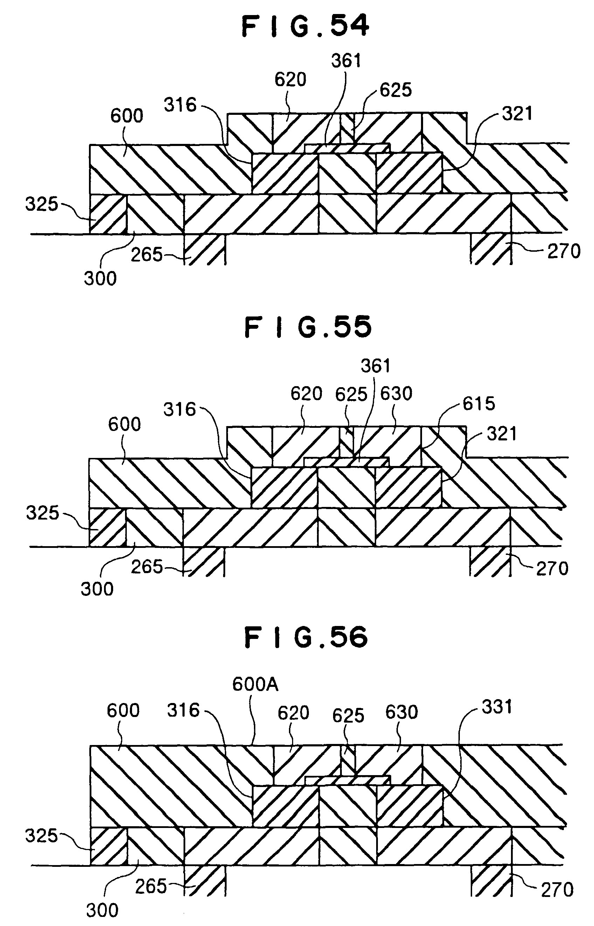

FIG. 54 is a cross-sectional view of process steps in the fabrication of an alternative embodiment of the invention.

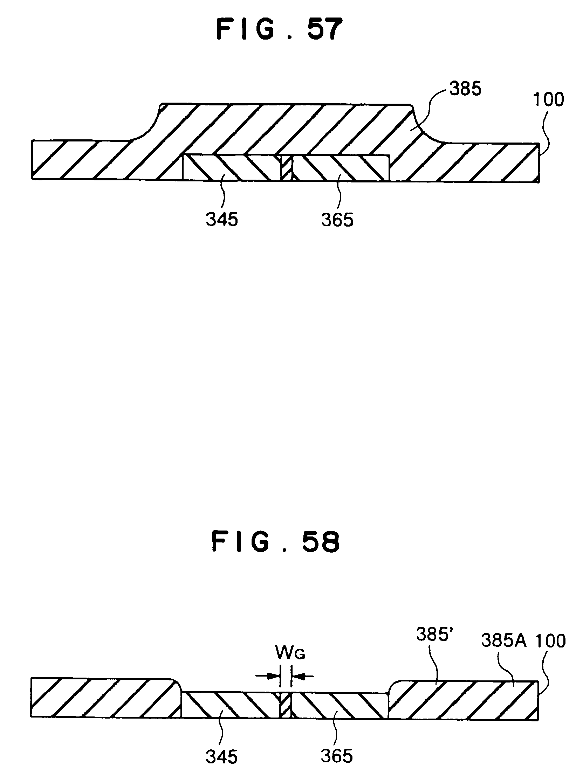

FIG. 55 is a cross-sectional view of process steps in the fabrication of an alternative embodiment of the invention.

FIG. 56 is a cross-sectional view of process steps in the fabrication of an alternative embodiment of the invention.

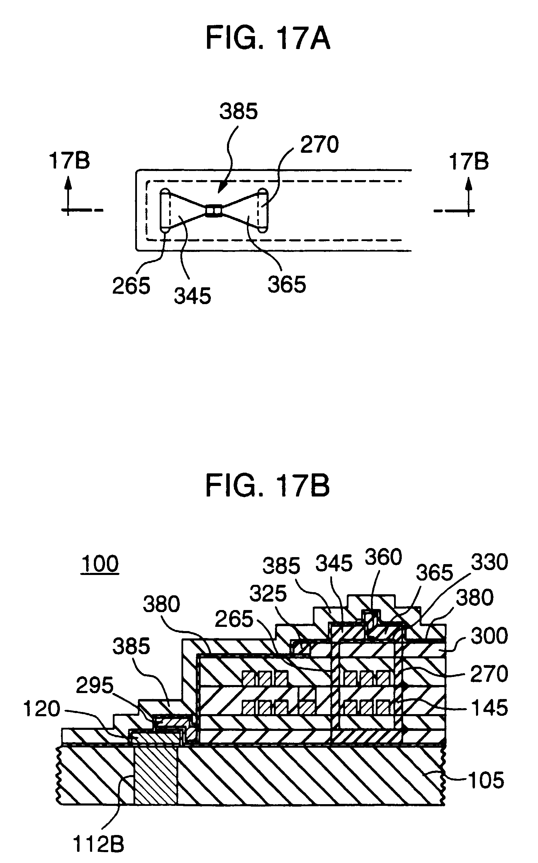

FIG. 57 is a cross-sectional view of the uppermost portion of the thin film head of FIG. 17B after application of a protective wear layer to the uppermost surfaces thereof.

FIG. 58 is a cross-sectional view of the thin film head of FIG. 57 after the upper surface of the protective wear layer is machined.

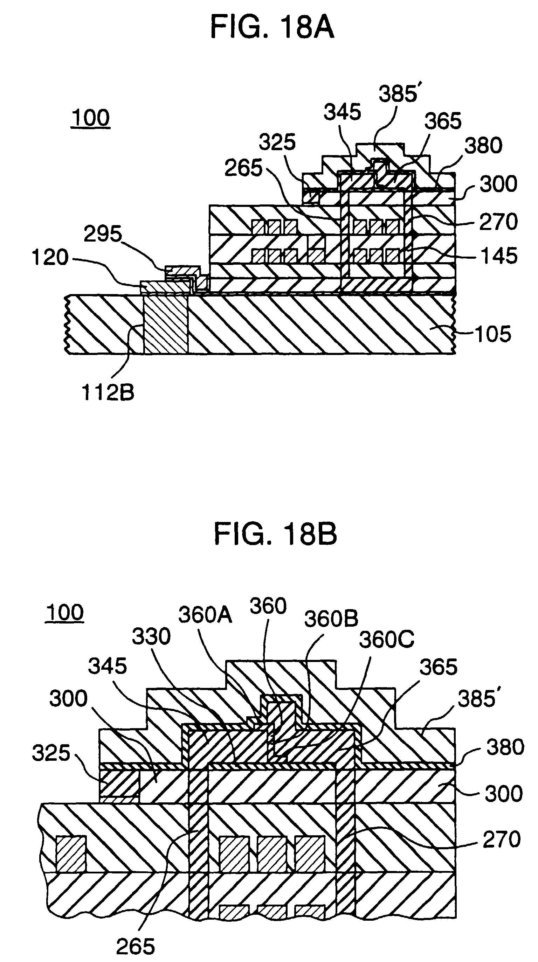

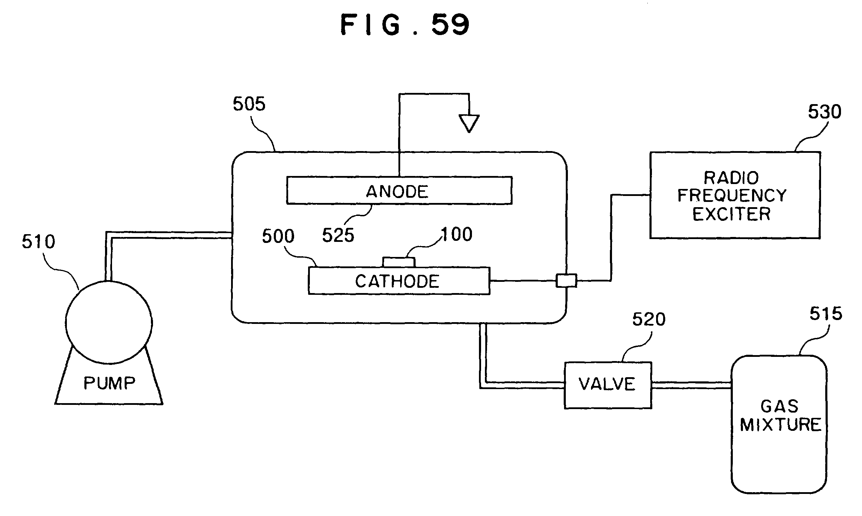

FIG. 59 is a block diagram of apparatus for etching the wear layer of the thin film head of FIG. 18A.

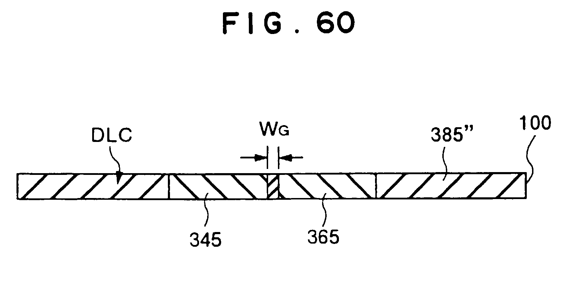

FIG. 60 is cross-sectional view of the uppermost portion of head 100 after the wear layer is etched.

FIG. 61A is a plan view of a substrate with via holes and showing a shield employed by one embodiment of the magnetic head of the invention.

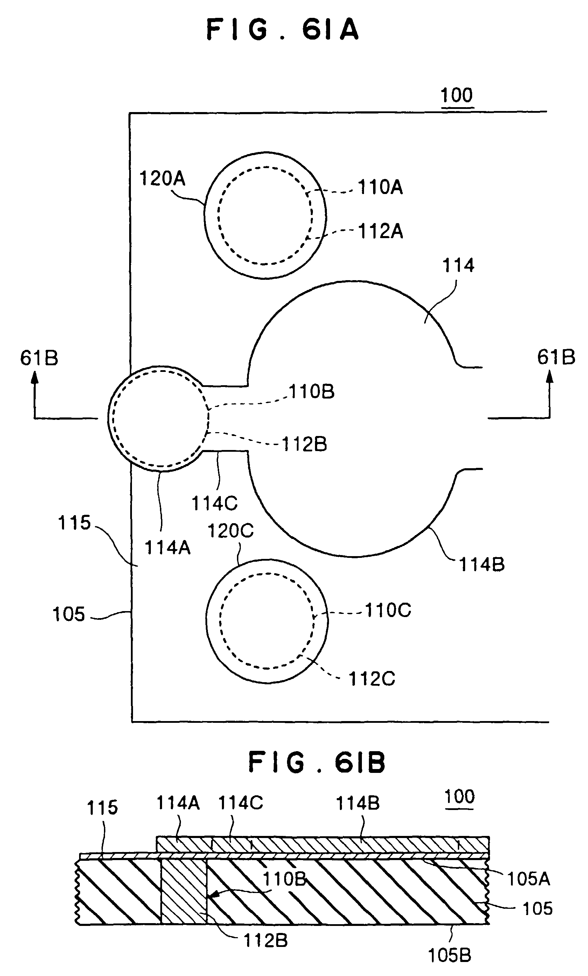

FIG. 61B is a cross section of the magnetic head of FIG. 61A taken along section line 61B-61B.

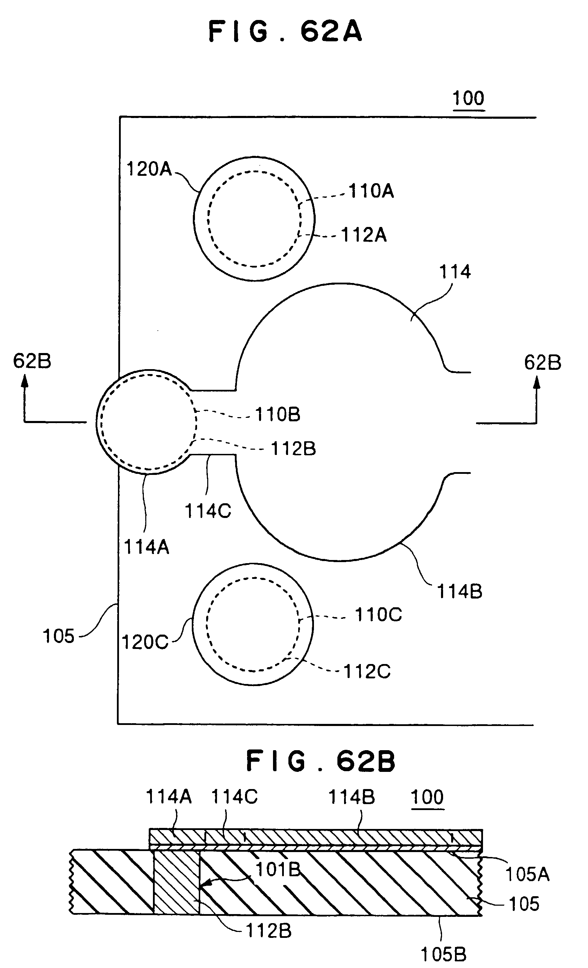

FIG. 62A is a plan view of the magnetic head of FIG. 61A with a bottom shield layer.

FIG. 62B is a cross section of the magnetic head of FIG. 62A taken along section line 62B-62B.

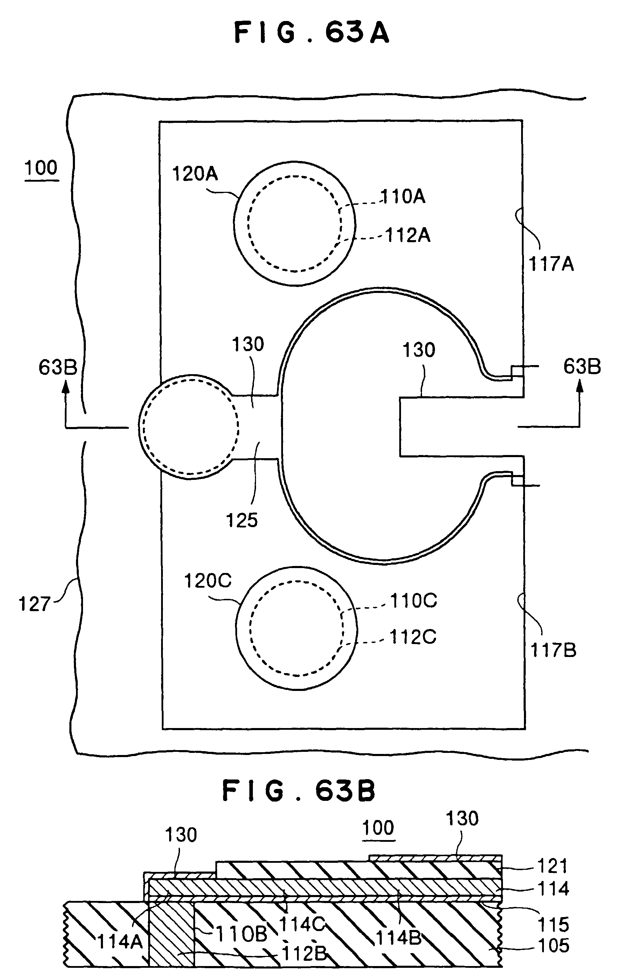

FIG. 63A is a plan view of the magnetic head of FIG. 62A with an insulative layer and seed layer thereon.

FIG. 63B is a cross sectional view of the magnetic head of FIG. 63A taken along section line 63B-63B.

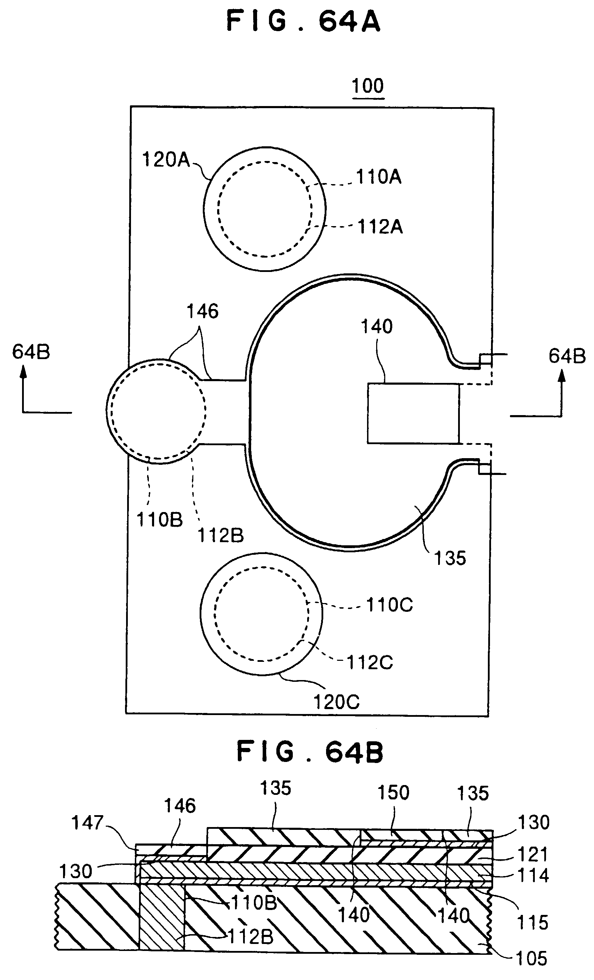

FIG. 64A is a plan view of the magnetic head of FIG. 63A showing the formation of a side shield and a seed layer with an opening therein.

FIG. 64B is a cross sectional view of the magnetic head of FIG. 64A taken along section line 64B-64B.

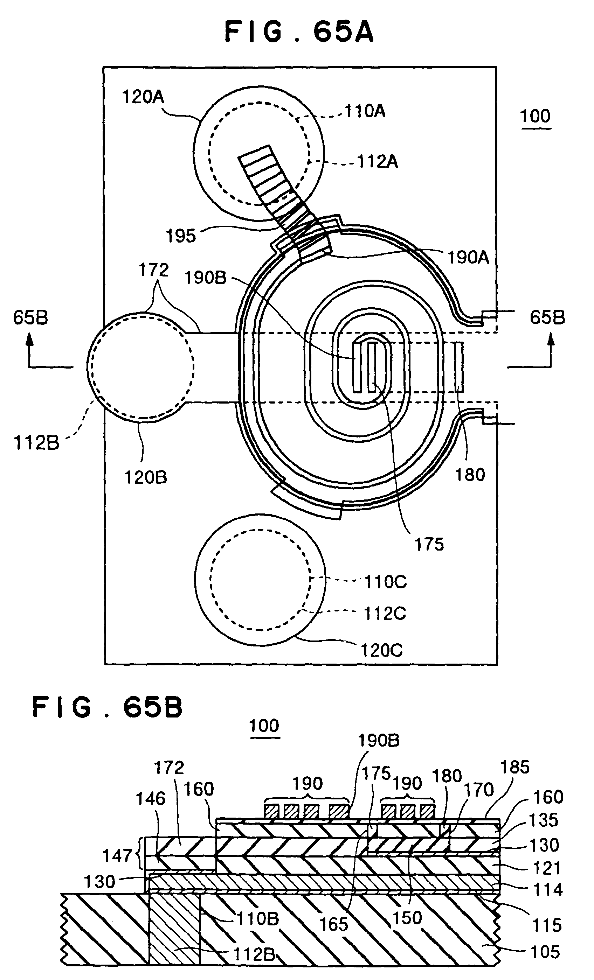

FIG. 65A is a plan view of the magnetic head showing an early stage of side pole build-up and the formation of first coil layer.

FIG. 65B is a cross sectional view of the magnetic head of FIG. 65A taken along section line 65B-65B.

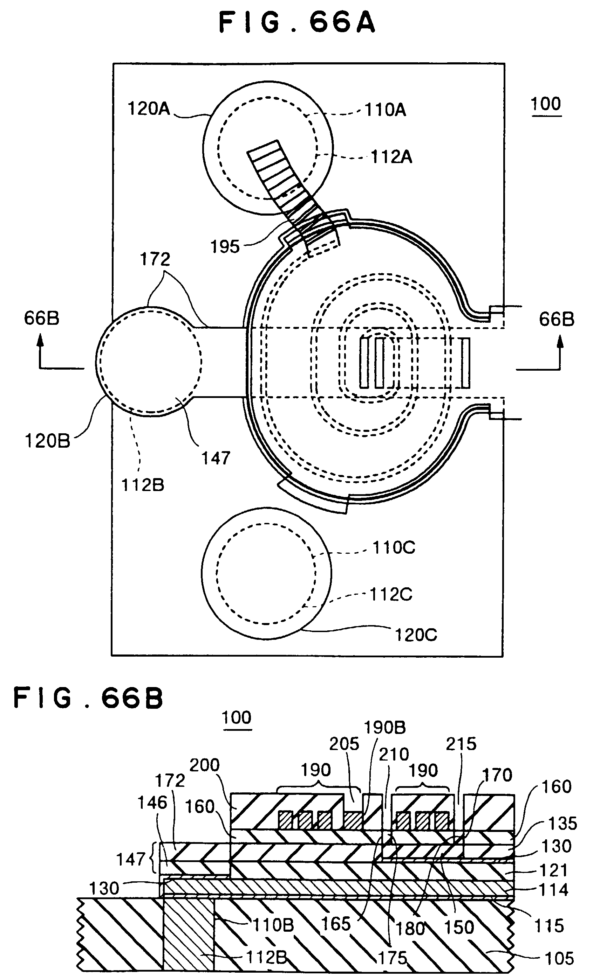

FIG. 66A is a plan view of the magnetic head of FIG. 65A showing the formation of an insulative layer on the lower coil structure.

FIG. 66B is a cross sectional view of the magnetic head of FIG. 66A taken along section line 66B-66B.

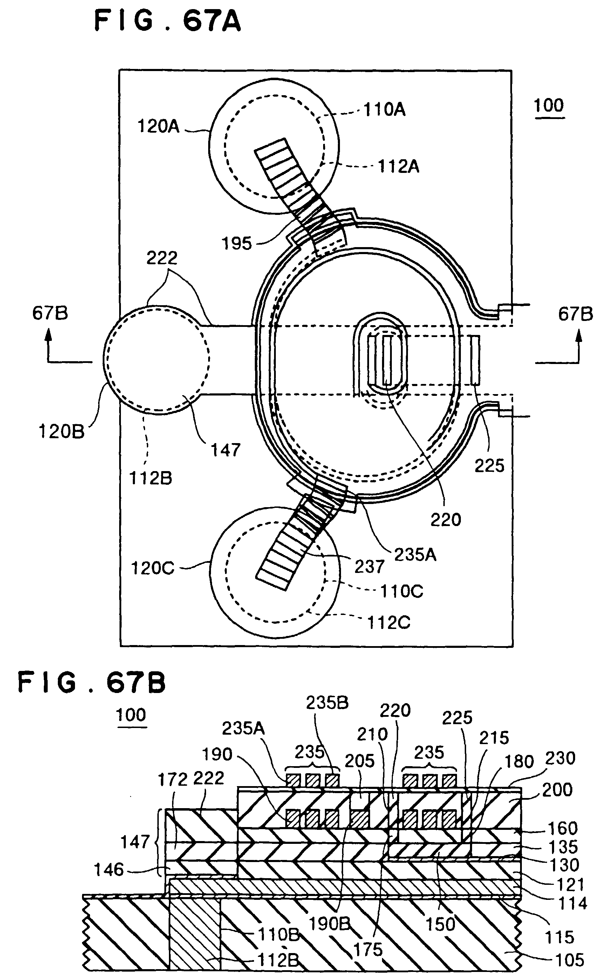

FIG. 67A is a plan view of the magnetic head of FIG. 66A showing placement of an upper coil structure thereon.

FIG. 67B is a cross sectional view of the magnetic head of FIG. 67A taken along section line 67B-67B.

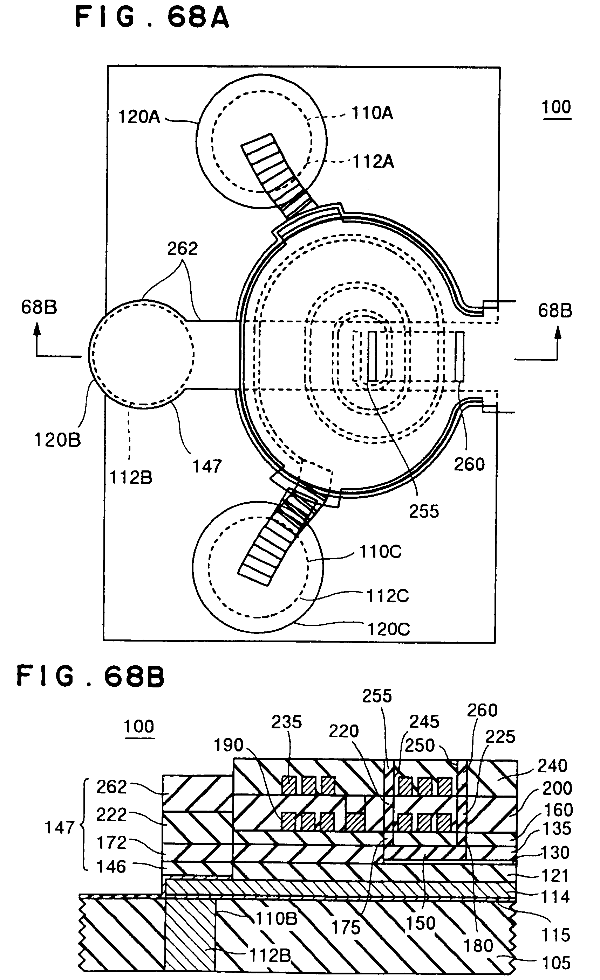

FIG. 68A is a plan view of the magnetic head of FIG. 67A showing the formation of an insulative layer on the upper coil structure.

FIG. 68B is a cross sectional view of the magnetic head of FIG. 68A taken along section line 68B-68B.

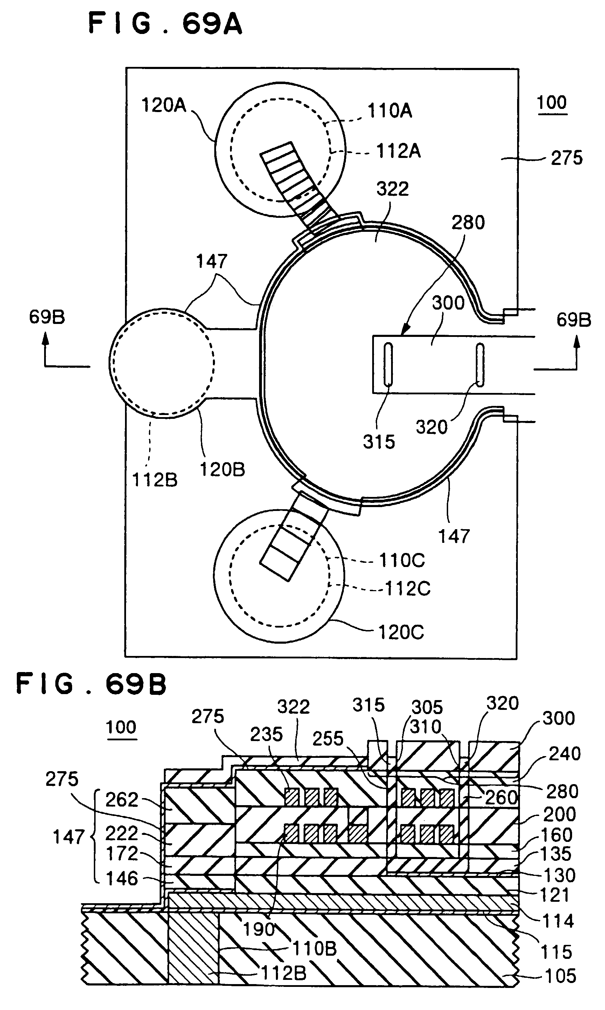

FIG. 69A is a plan view of the magnetic head of FIG. 68A showing formation of a cover shield and a pedestal.

FIG. 69B is a cross sectional view of the magnetic head of FIG. 69A taken along section line 69B-69B.

FIG. 70A is a plan view of the magnetic head of FIG. 69A showing formation of a frame for the pedestal.

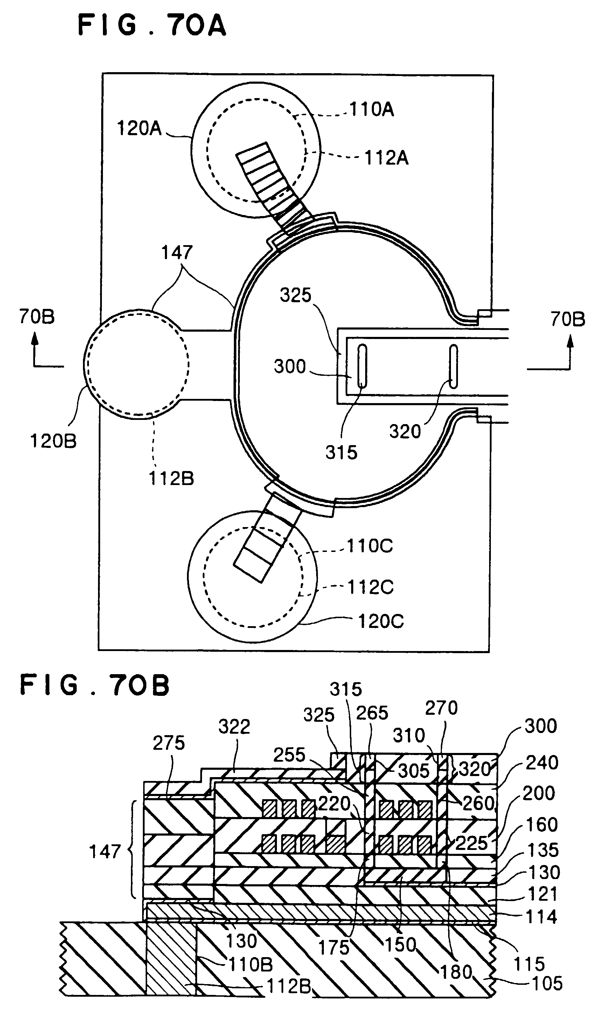

FIG. 70B is a cross sectional view of the magnetic head of FIG. 70A taken along section line 70B-70B.

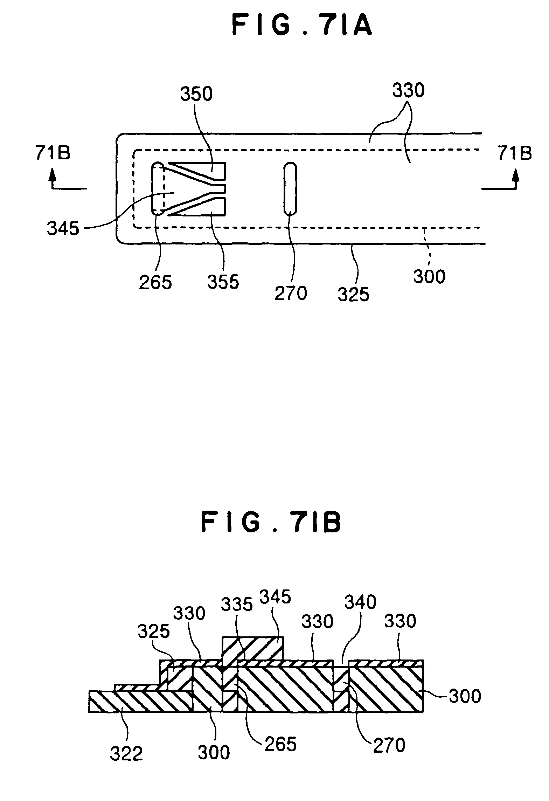

FIG. 71A is a plan view of the magnetic head showing the addition of a first magnetic pole at the top of the magnetic yoke structure of the head.

FIG. 71B is a cross sectional view of the magnetic head of FIG. 71A taken along section line 71B-71B.

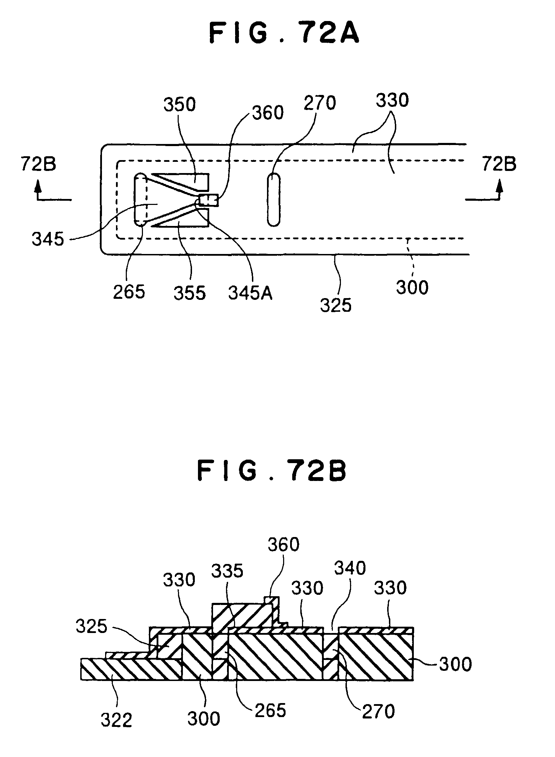

FIG. 72A is a plan view of the magnetic head showing the addition of a gap region at the top of the magnetic yoke structure of the head.

FIG. 72B is a cross sectional view of the magnetic head of FIG. 72A taken along section line 72B-72B.

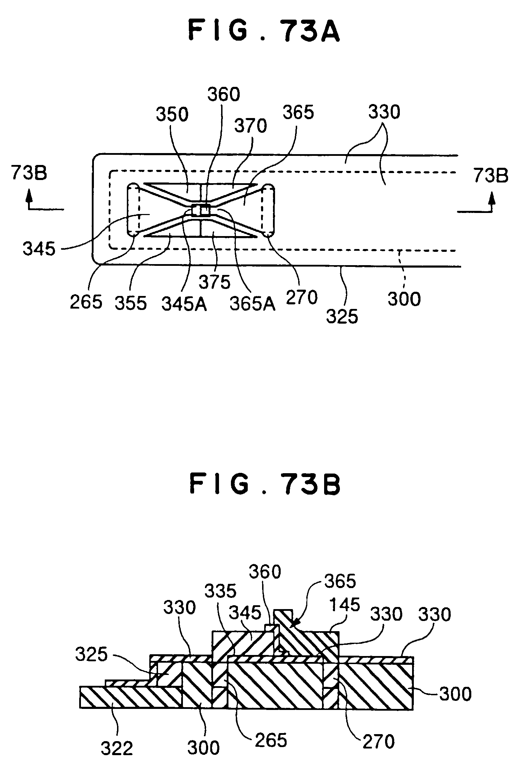

FIG. 73A is a plan view of the magnetic head showing the addition of a second magnetic pole at the top of the magnetic yoke structure of the head.

FIG. 73B is a cross sectional view of the magnetic head of FIG. 73A taken along section line 73B-73B.

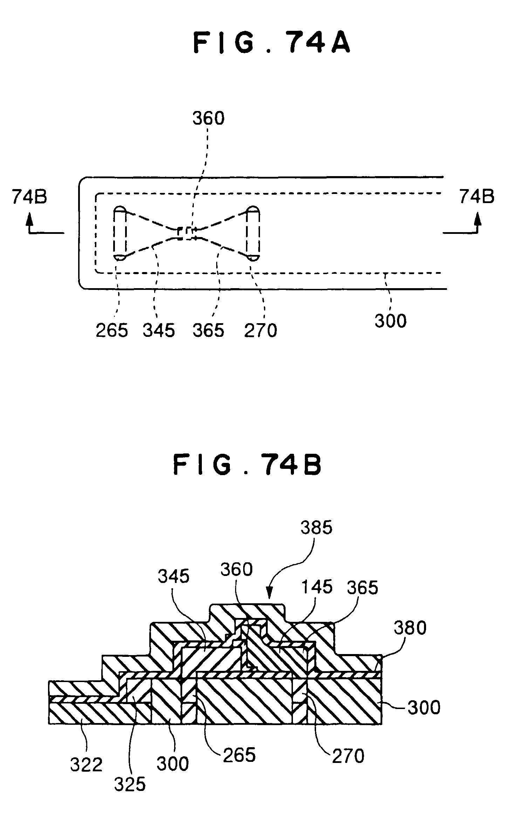

FIG. 74A is a close-up plan view of the side pole and gap region of the magnetic head of FIG. 73A after addition of an adhesion layer and a diamond-like carbon wear layer to the top of the head.

FIG. 74B is a cross sectional view of the magnetic head of FIG. 74A taken along section line 74B-74B.

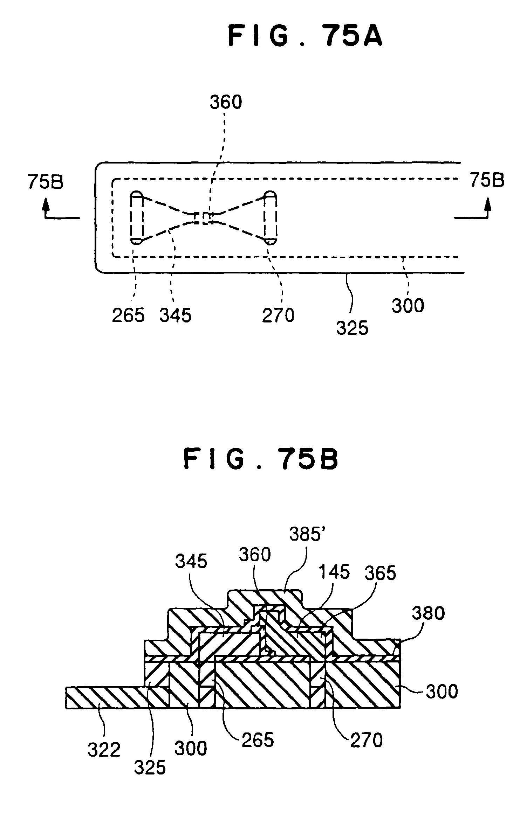

FIG. 75A is a plan view of the magnetic head of FIG. 74B showing the magnetic head after a diamond-like carbon wear layer and adhesion layer are patterned and etched in regions other than the insulative pedestal.

FIG. 75B is a cross sectional view of the magnetic head of FIG. 75A taken along section line 75B-75B.

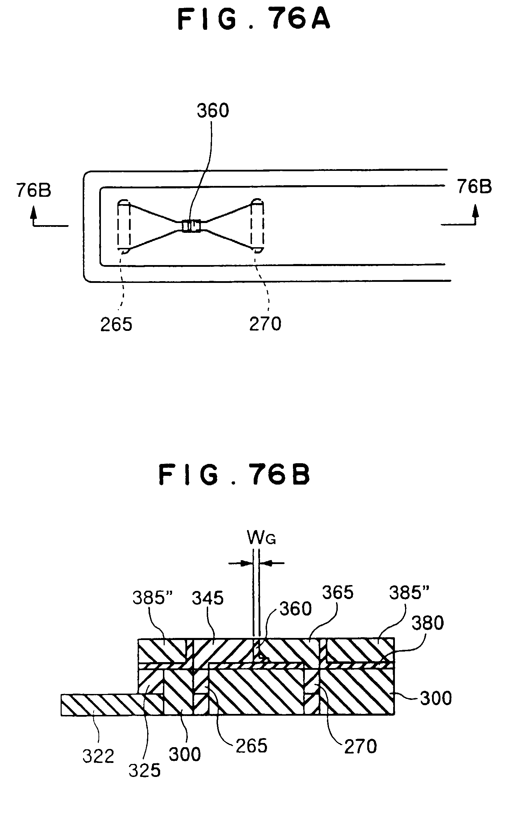

FIG. 76A is a close-up view of the side pole and gap region of the magnetic head when fabrication is complete.

FIG. 76B is a cross section view of the magnetic head of FIG. 76A taken along section line 76B-76B.

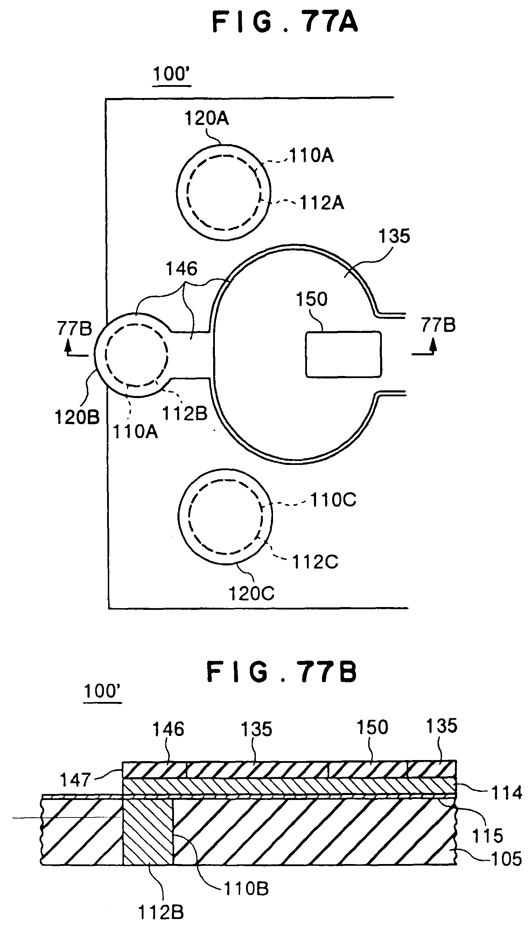

FIG. 77A is a plan view of the partially completed magnetic head showing a modification of the head shown in FIG. 63A.

FIG. 77B is a cross sectional view of the magnetic head of FIG. 77A taken along section line 77B-77B.

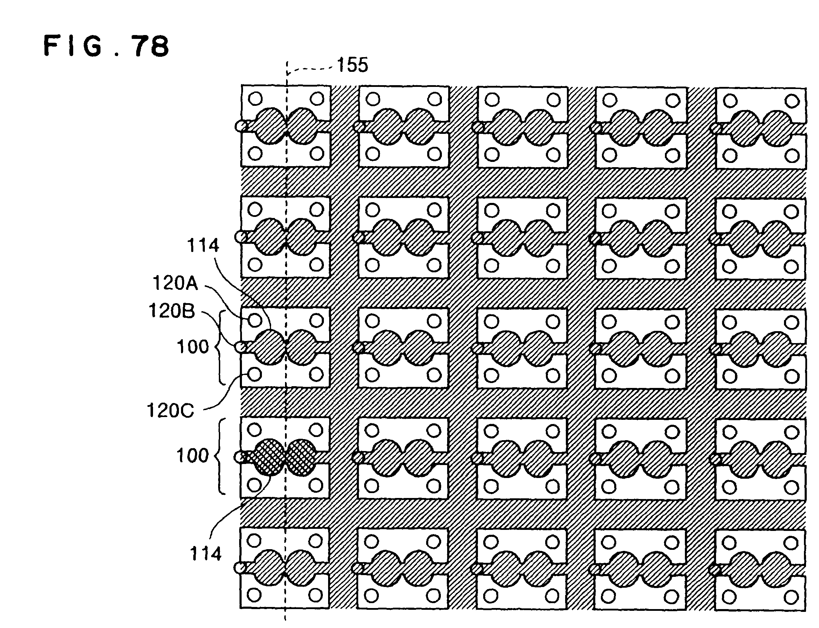

FIG. 78 illustrates a plurality of magnetic heads being fabricated on a common substrate.

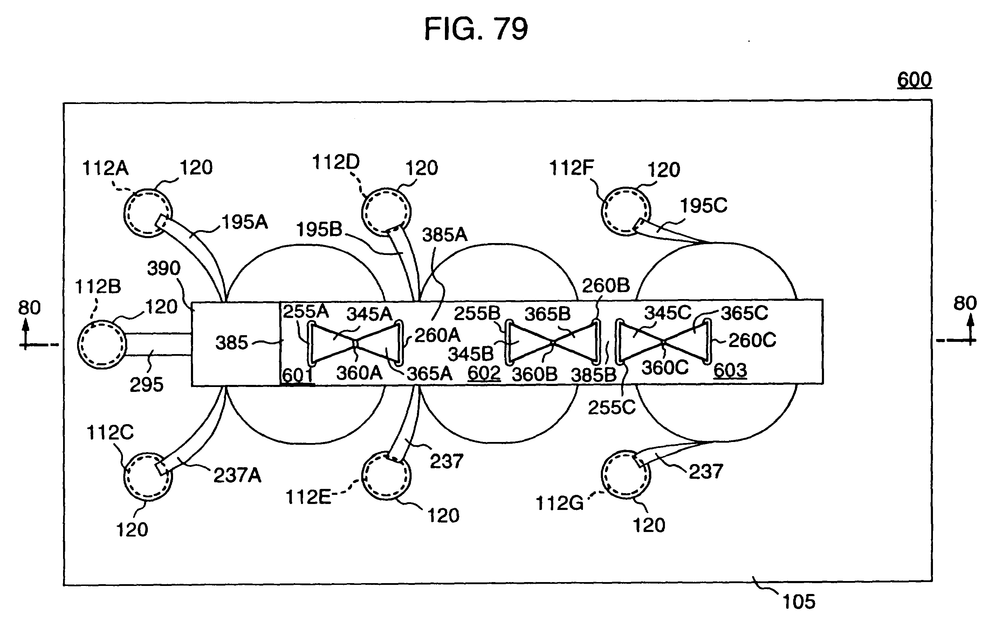

FIG. 79 is a plan view of the upper surface of a thin film magnetic head assembly including a plurality of heads exhibiting different pole piece geometries.

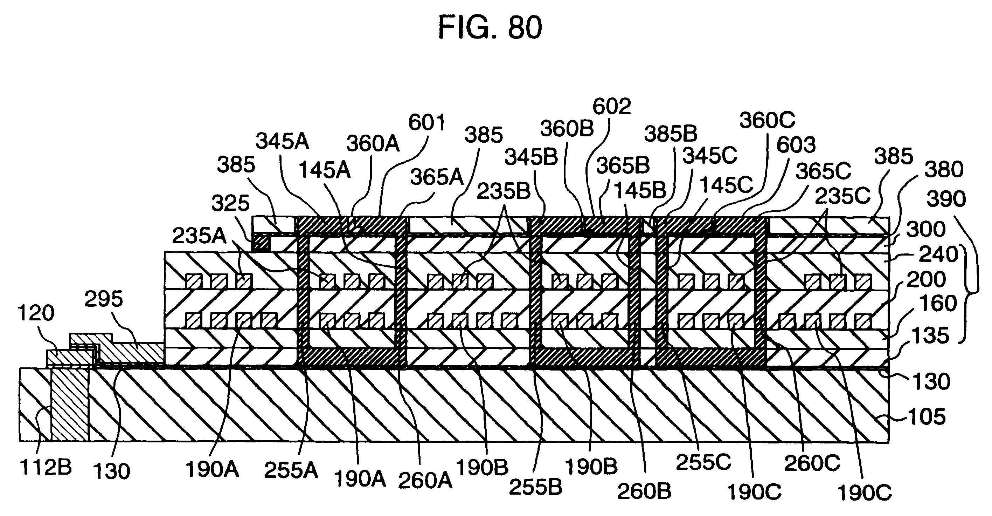

FIG. 80 is a cross section of the head assembly of FIG. 79 taken along section line 79B-79B.

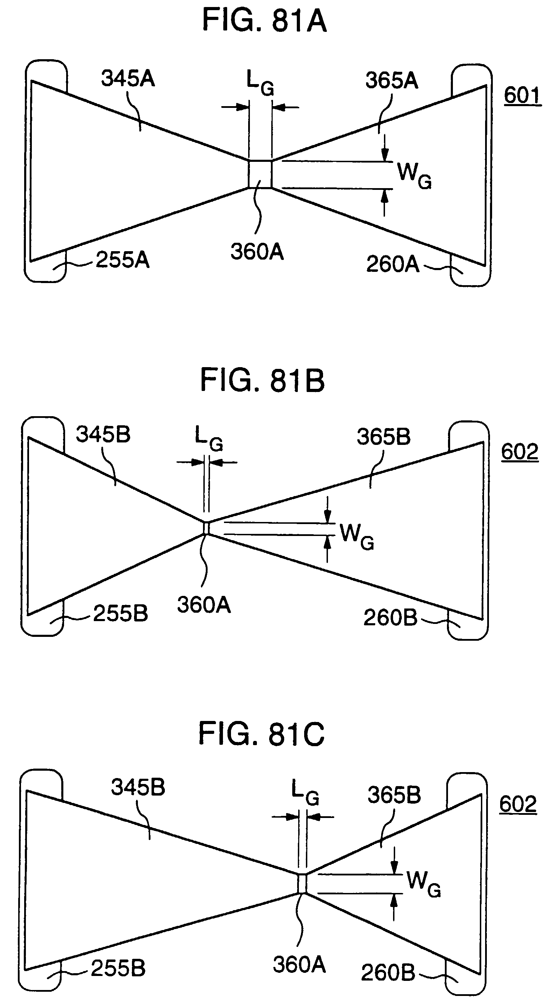

FIG. 81A is a simplified plan view of a portion of the upper surface of the head assembly showing one pole piece pair thereof.

FIG. 81B is a simplified plan view of another portion of the upper surface of the head assembly showing another pole piece pair thereof.

FIG. 81C is a simplified plan view of still another portion of the upper surface of the head assembly showing yet another pole piece pair thereof.

### DESCRIPTION OF THE PREFERRED EMBODIMENTS

Thin film magnetic heads and methods of fabricating them according to embodiments of the present invention will be described with reference to the accompanying drawings, in which like parts are marked with the same symbols or references.

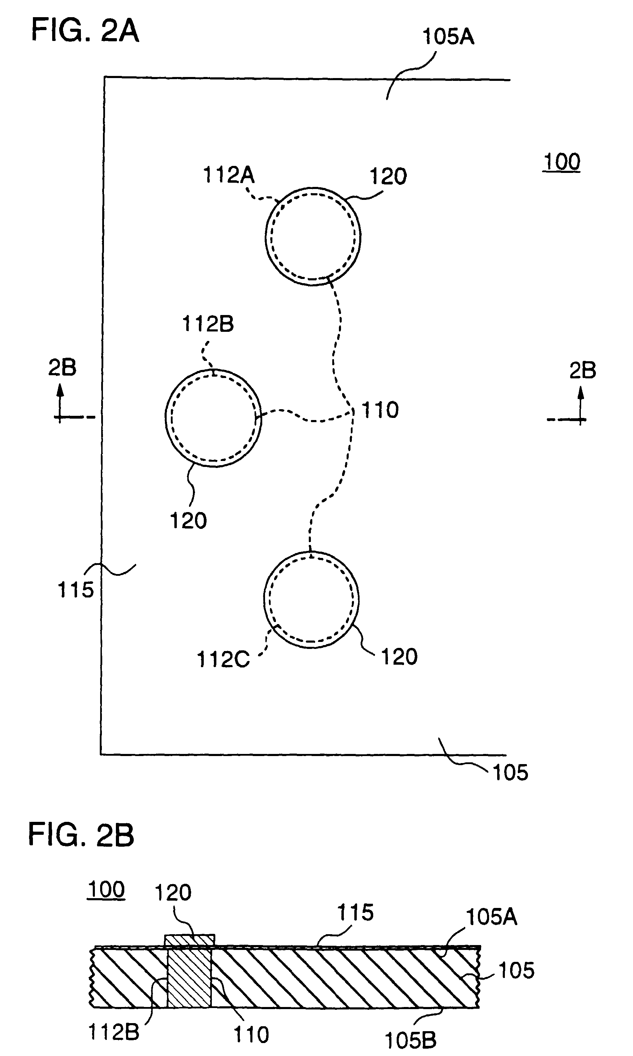

FIG. 2A shows a portion of a thin film head 100 which is situated on an insulative substrate 105 such as a ceramic, alumina or other nonconductive substrate. Substrate 105 includes opposed surfaces 105A and 105B. Via holes 110 are formed in substrate 105 and are filled with an electrically conductive material to create conductive paths through substrate 105 at the locations shown. Laser drilling or other high precision via formation technique may be employed to form via holes 110. Via holes 110 are filled with electrically conductive material such as plated copper, thick film processed gold, or sintered tungsten and copper, for example, to form via connective members 112A, 112B and 112C. Connective members 112A and 112C will subsequently be coupled to the ends of a coil structure and connective member 112B will be coupled to ground.

A seed layer 115 of an electrically conductive material suitable for plating is sputtered on substrate surface 105A. For example, seed layer 115 may be fabricated from Cr-NiV, namely, a chrome or other adhesion-promoting layer followed by a non-magnetic nickel-vanadium 7% film. Via caps 120 are patterned using photolithographic techniques and plated on seed layer 115 at the tops of vias 110 as shown in FIGS. 2A and 2B. More specifically, to pattern via caps 120, a photoresist layer (not shown) is deposited on seed layer 115 and patterned to include openings above connective members 112A, 112B and 112C at which the formation of respective via caps 120 is desired. Plating is then conducted in these openings using seed layer 115 as the seed. The photoresist is then removed, thus leaving patterned via caps 120. As used in this document, the term "patterning" will mean the formation of a particular layer such that the layer exhibits a specified pattern, such as described with respect to the formation of via caps 120 above, for example.

Via caps 120 are fabricated from NiFe by any suitable deposition or plating process. It is noted that later in the process described herein, portions of seed layer 115 will be removed by sputter etching. While in the particular example described, via caps 120 are fabricated from NiFe, in actual practice via caps 120 can be fabricated from other conductive materials which would not be attacked by the particular etchant used to later remove Cr-Cu seed layers 185, 230 and 275. Via caps 120 are regarded as being a part of via connective members 112A, 112B and 112C.

Seed layer 115 is also used to pattern and NiFe plate photolithographic alignment targets (not shown) for registration of subsequent layers. The exposed portions of seed layer 115 are then sputter etched away leaving via caps 120 and the alignment targets intact. It should be appreciated that seed layer 115 served as a sacrificial layer for the purpose of enabling plating of via caps 120.

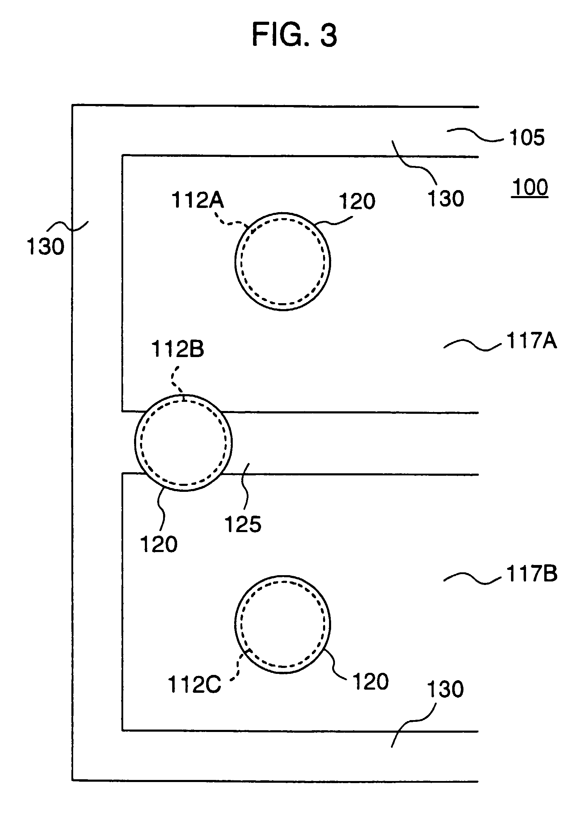

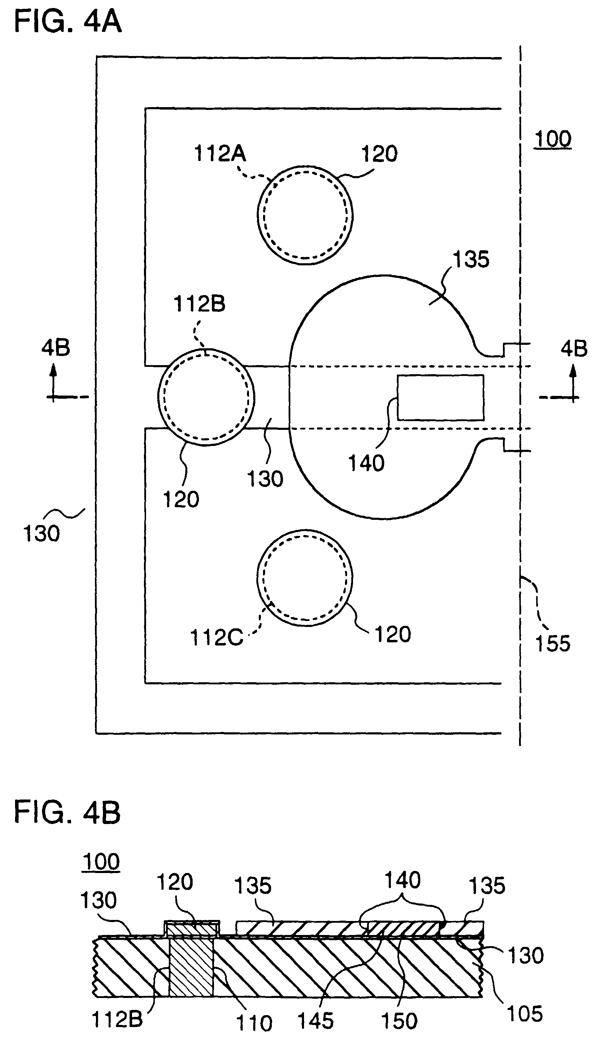

In the next step of the process, a Cr-NiV seed layer 130 is formed on the structure of FIG. 2B after seed layer 115 is etched away. Seed layer 130 is formed in the shape of a ground structure 125 which extends around the periphery of head 100 on substrate 105 and laterally across the middle of head 100 as shown in FIG. 3. Open regions 117A and 117B are thus formed in seed layer 130 which respectively isolate via connective members 112A and 112C from ground structure 125 and via connective member 112B. In the embodiment depicted in FIG. 3, via connective member 112B is coupled to ground structure 125. To actually form seed layer 130, a "lift-off" process is used. In this "lift-off" process, photoresist (not shown) is patterned covering open regions 117A and 117B (see FIG. 3). Seed layer 130 is then sputtered on the entire upper surface of the partially completed head 100. The photo-resist which covers open regions 117A and 117B is now "lifted-off" head 100. To accomplish this lift-off, the partially complete head 100 is placed in an ultrasonic bath including a photoresist solvent such as acetone, for example. The seed layer 130 is sufficiently thin such that it does not cover photoresist layer at open regions 117A and 117B very well. In this manner, there are sufficient avenues of attack by which the solvent can get through seed layer 130 at the edges of open regions 117A and 117B to dissolve the photoresist layer at open regions 117A and 117B. When the photoresist layer at open regions 117A and 117B is thus dissolved, the portions of seed layer 130 immediately above open regions 117A and 117B lift-off and float away. The region of head 100 at open regions 117A and 117B is thus void of seed layer 130 as shown in FIG. 4A.

An insulative layer 135 of photoresist is patterned on head 100 as shown in FIG. 4B. Insulative layer 135 is cured with an electron beam. Exposing the photoresist to an E-beam for a time within the range of approximately 20 minutes to approximately 40 minutes is found to produce acceptable curing results. Insulative layer 135 includes an open region 140 for receiving the lowermost portion of a magnetic yoke 145 therein. More particularly, a layer 150 of magnetic material such as NiFe is patterned and plated on seed layer 130 within open region 140 to form the lowermost portion of magnetic yoke 145. Magnetic layer 150 exhibits a thickness of approximately 5 microns to approximately 6 microns in this particular embodiment. When reference is made to "magnetic layers" or other magnetic structures in this application, it should be understood that layers of magnetically permeable material are being referenced. Magnetic layer 150 forms the bottom pole of magnetic yoke 145. Seed layer 130, or more specifically the middle section of the ground structure 125 thereof, acts as a base upon which magnetic yoke 145 is built up layer by layer. Magnetic layer 150 is plated up to a level such that it is level with insulative layer 135.

It has been found that the order of forming seed layer 130 and insulative layer 135 with opening 140 therein is important with respect to maintaining the planarity of the main body of the thin film head structure. If insulative layer 135 is formed prior to seed layer 130, non planar irregularities in the layers of the head can result. For example, if insulative layer 135 is first formed with opening 140 therein and a seed layer is deposited on insulative layer 135 including opening 140, then when magnetic layer 150 is plated within opening 140, the resultant magnetic layer 150 may be nonplanar. To avoid this undesired situation, seed layer 130 is first formed on substrate 105 and then insulative layer 135 with opening 140 is formed on seed layer 130 as shown in FIG. 4B.

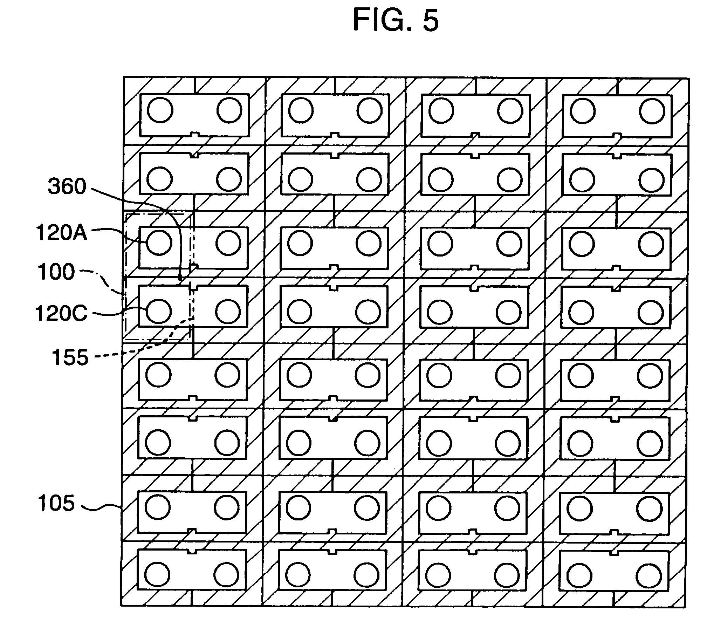

For convenience, one half of head 100 is depicted in FIG. 4A and subsequent figures. It should be understood that substantially the same structure as shown in FIG. 4A and the subsequent figures is repeated to form the actual head. More particularly, in the particular embodiment shown, head 100 is symmetric about major axis 155 such that head 100 actually includes two recording or playback portions. In actual practice, a plurality of heads 100 are fabricated simultaneously on a common semiconductor substrate 105 as shown in FIG. 5. For example, 5000 or more heads may be fabricated at the same time on the same substrate. FIG. 5 shows another embodiment of head 100, namely an ungrounded version in which via connective member 112B is omitted.

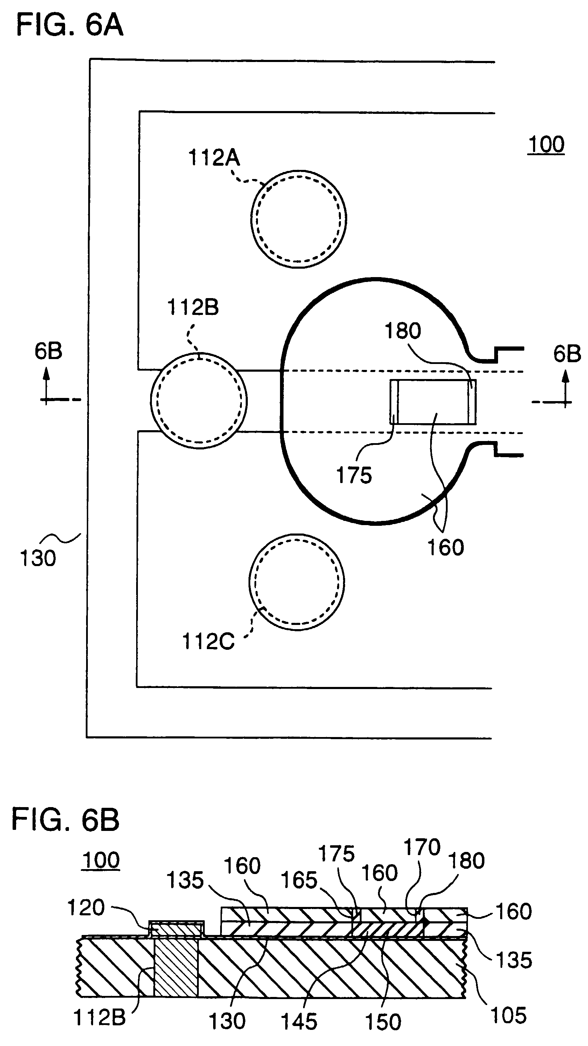

An insulative layer 160 of photoresist is patterned on head 100 as shown in FIGS. 6A and 6B. Insulative layer 160 is electron beam cured to provide a planar surface as illustrated. The thickness of insulative layer 160 in this particular embodiment is approximately 2 microns. Insulative layer 160 includes open regions 165 and 170 in which respective magnetic side poles are built up. More specifically, a magnetic side pole portion 175 is plated in open region 165 up to a height which is level with insulative layer 160, and a magnetic side pole portion 180 is plated in open region 170 up to a height which is level with insulative layer 160.

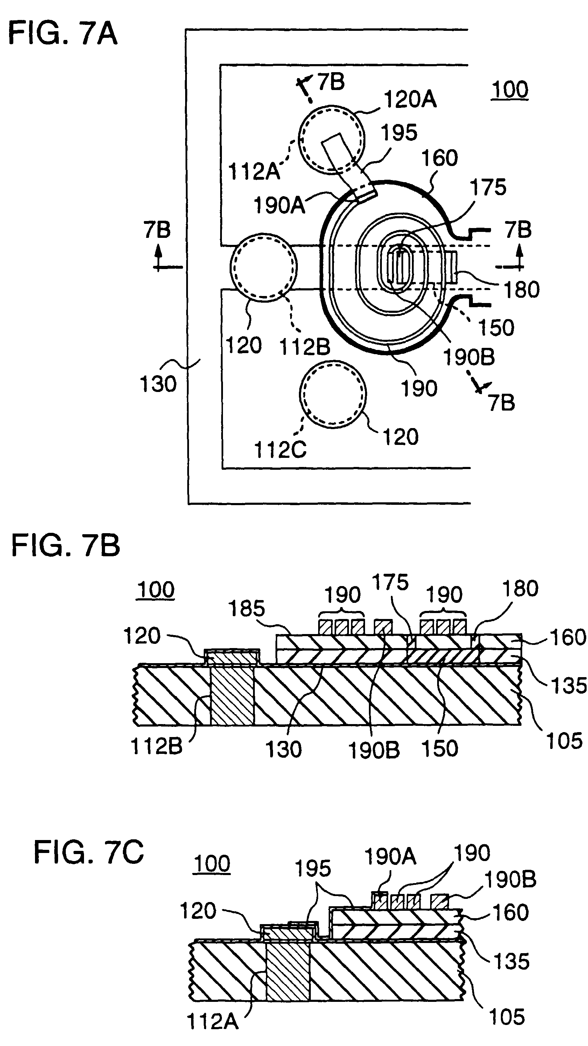

A seed layer 185 is sputtered on insulative layer 160 of the partially formed head 100 of FIG. 6A to form a plating base for a lower coil layer 190 as shown in FIG. 7A. Seed layer 185 is not drawn in FIG. 7A but it is formed to be sufficiently thin in practice. Seed layer 185 is fabricated from CrCu in one embodiment.

A lower coil layer 190 is formed on seed layer 185 as shown. One way to form lower coil member 190 is to deposit a layer of photoresist (not shown) on seed layer 185. This photoresist layer is then patterned using conventional photolithographic techniques which includes photoresist application, masking, exposure, developing, and so forth. More specifically, the photoresist layer is patterned to cover the entire surface of seed layer 185 except for openings at the locations where the coil elements of lower coil layer 190 are to be formed. Head 100 is then subjected to a plating bath of copper. Copper is thus plated in the openings of the photoresist layer to form lower coil layer 190. The thickness of coil layer 190 is within the range of approximately 3µ to approximately 3.5µ at this stage.

Lower coil layer 190 includes a connective strip 195 made of electrically conductive material which couples an end 190A of coil layer 190 to the via cap 120 of via connective member 112A. Copper plating may be used to fabricate connective strip 195 as part of the above step of forming lower coil layer 190. The remaining end 190B of lower coil layer 190 is located at the center of the lower coil layer 190. Head 100 is then etched to remove seed layer 185 from those portions of head 100 not protected by lower coil layer 190. In this manner, the lower coil layer 190 is formed in a spiral fashion between the ends 190A and 190B. In the example shown in FIG. 7A, the lower coil layer is formed such that the coil layer is wound three times around the end 190B merely to simplify the drawing, but practically the lower coil layer may be formed such that the coil layer is wound four times or more around the end 190B.

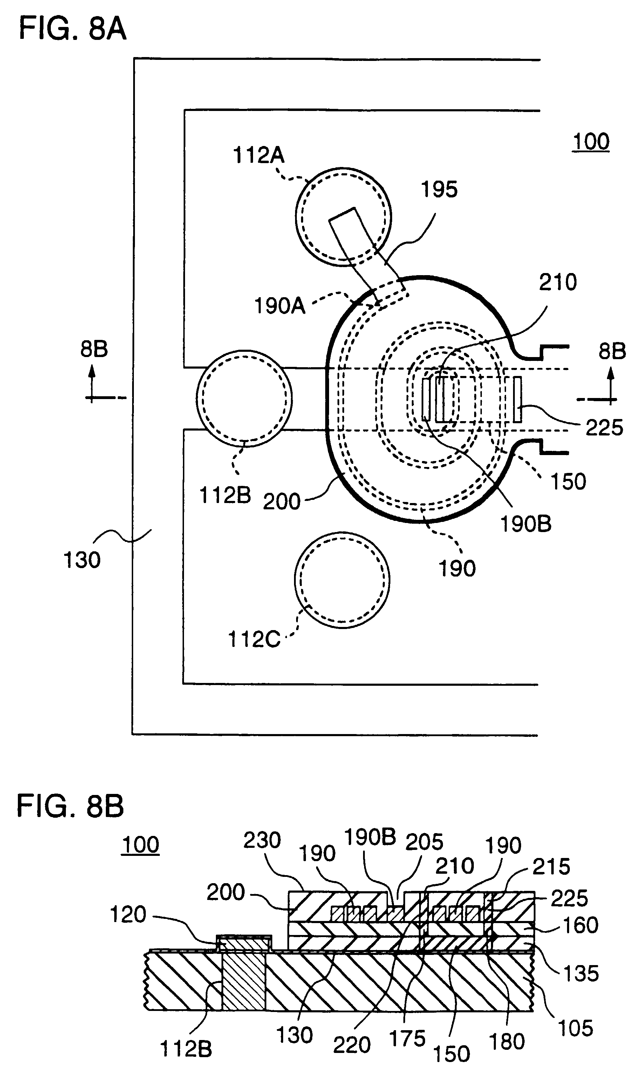

An insulative layer 200 of photoresist is patterned on head 100 above lower coil layer 190 leaving an open region 205 for access to coil end 190B as shown in FIGS. 8A and 8B. The thickness of insulative layer 200 is within the range of approximately 5µ to approximately 6µ. Insulative layer 200 is also patterned to leave open regions 210 and 215 above side pole portion 175 and side pole portion 180, respectively. Insulative layer 200 is electron beam cured. Insulative layer 200 electrically isolates lower coil layer 190 from structures subsequently placed above layer 190.

Magnetic side pole portions 220 and 225 are plated on side pole portions 175 and 180, respectively, as shown in FIGS. 8A and 8B. Side pole portions 220 and 225 are plated with a magnetic material such as NiFe up to a level even with that of insulative layer 200.

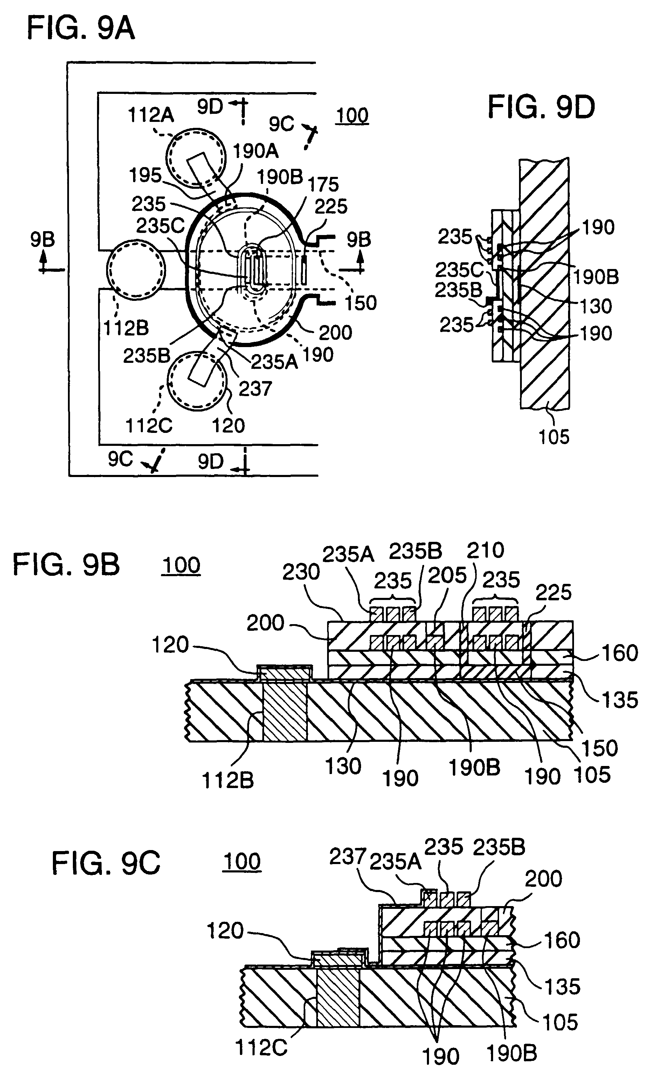

A seed layer 230 is sputtered on insulative layer 200 of the partially formed head 100 of FIG. 8B to form a plating base for an upper coil layer 235. Seed layer 230 is not drawn in FIG. 8B but it is formed to be sufficiently thin in practice. Seed layer 230 is fabricated from CrCu in one embodiment. Upper coil layer 235 is patterned and copper plated on seed layer 230 as shown in FIGS. 9A and 9B. FIG. 9B is a simplified cross-section of head 100 at the described stage of fabrication in which structures in back of upper coil layer 235 are not shown in order to emphasize upper coil layer 235. In this particular embodiment, upper coil layer 235 is substantially similar in geometry to lower coil layer 190 and is fabricated using substantially the same technique. However, other coil arrangements are possible, if desired. Head 100 is then etched to remove seed layer 230 from those portions of head 100 not protected by upper coil layer 235.

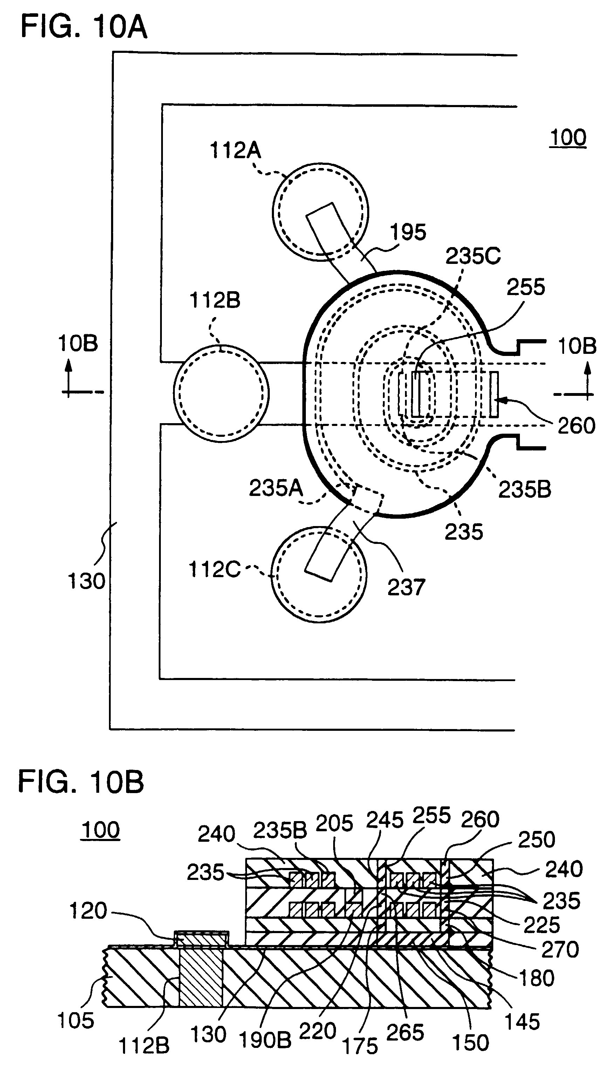

Upper coil layer 235 includes a connective strip 237 made of electrically conductive material which couples an end 235A of upper coil layer 235 to the via cap 120 of via connective member 112C as shown in FIGS. 9A and 9C. Copper may be used to fabricate connective strip 237. The remaining end 235B of upper coil layer 235 is coupled to lower coil end 190B through open region 205, shown later in FIG. 10B, by a connection 235C formed by copper plating, for example, therebetween as shown in FIG. 9D. In this manner, the upper coil layer 235 is formed in a spiral fashion between the ends 235A and 235B. The winding direction of the upper coil layer 235 is opposite to that of the lower coil layer 190. In the example shown in FIG. 10A, the upper coil layer is formed such that the coil layer is wound three times around the end 235B merely to simplify the drawing, but practically the upper coil layer may be formed such that the coil layer is wound four times or more around the end 235B.

An insulative layer 240 of photoresist material is deposited and patterned on head 100 as shown in FIGS. 10A and 10B. Insulative layer 240 electrically isolates upper coil layer 235 from the other structures of head 100. Insulative layer 240 includes open regions 245 and 250 into which magnetic side pole portions 255 and 260 are respectively plated. More specifically, magnetic side pole portions 255 and 260 are plated up to a level even with insulative layer 240 as shown in FIG. 10B.

Magnetic side pole portions 175, 220 and 255 together form a first side pole 265. Magnetic side pole portions 180, 225 and 260 together form a second side pole 270. First side pole 265, second side pole 270 and bottom pole 150 together form a significant portion of magnetic yoke 145.

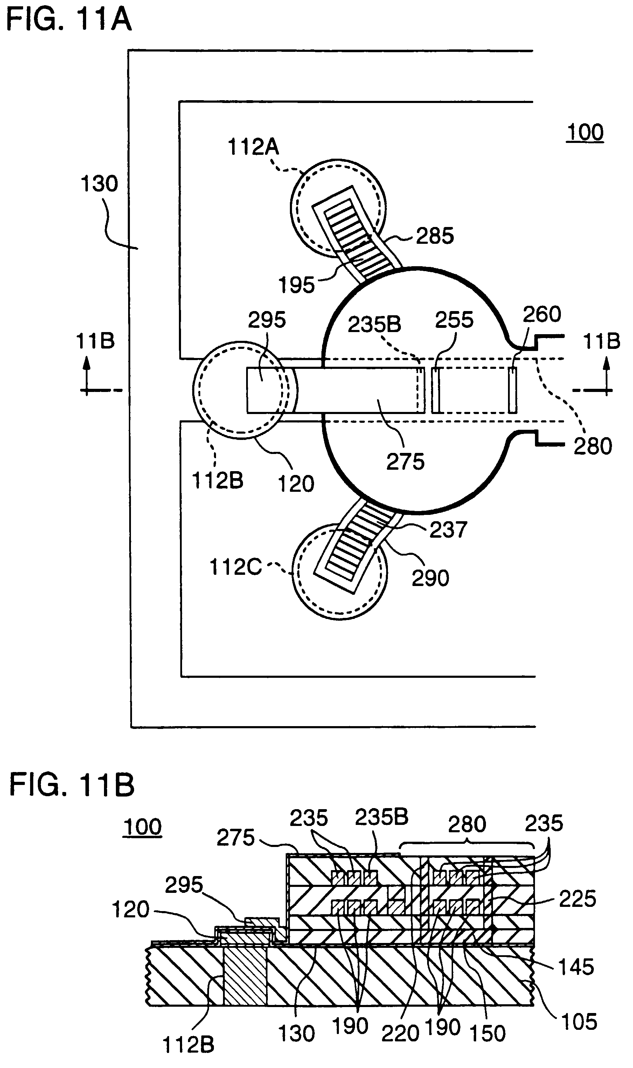

A seed layer 275 fabricated of CrCu material is formed on the upper surface of the head structure 100 as shown in FIG. 11B. Seed layer 275 is sputtered, patterned and chemically etched on the upper surface of head 100 to include an open region 280 above the side pole structure also as shown in FIG. 11B. Seed layer 275 is formed by an adhesion layer of chromium (Cr) on the upper surface of head 100 followed by a layer of copper (Cu). The chromium adhesion layer enhances the adherence of the copper portion of seed layer 275 to upper surface of head 100.

The primary requirement in selection of the material for seed layer 275 is that seed layer 275 be chemically etchable without damage to the exposed NiFe. Copper is an example of a material that meets this requirement and is also used for the coil seed layers. Chrome is used as the adhesion layer for copper. It is noted that a titanium-tungsten seed layer (Ti 10%; W 90%) which wet etches easily can also be used for seed layer 275.

Protective caps 285 and 290 are patterned over connective strips 195 and 237, respectively. Caps 285 and 290 are fabricated from NiFe by plating in one embodiment. A material such as nickel, nickel-phosphorus 7-10%, or gold may be used to provide environmental protection for the underlying plated copper connective strips.

In an embodiment of head 100 wherein head 100 is grounded, a grounding connective strip 295 is also patterned and plated in the same process step as protective caps 285 and 290. Grounding strip 295 connects ground via connective member 112B and magnetic yoke 145 through seed layer 130. Grounding strip 295 is fabricated from the same material as protective caps 285 and 290 in this particular embodiment.

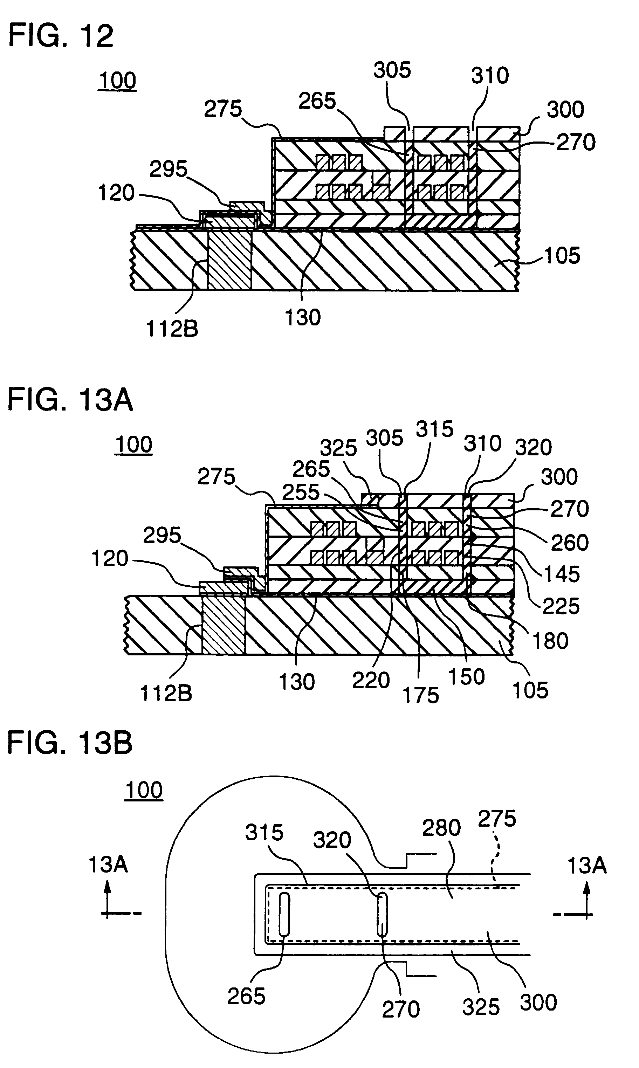

An electrically insulative layer of photo-resist is patterned and electron beam cured to form a protrusion or pedestal 300 on the upper portion of head 100 as shown in FIG. 12. Insulative pedestal 300 exhibits a substantially rectangular geometry with rounded corners in this particular embodiment, although other geometries may be used if desired. Insulative pedestal 300 includes open regions 305 and 310 for side poles 265 and 270 of the magnetic yoke. Open regions 305 and 310 are filled with magnetic material by plating side poles 265 and 270 with NiFe up to the level of the top of insulative layer 300 as shown in FIG. 13A. Magnetic side pole portions 315 and 320 are thus formed in open regions 305 and 310. Magnetic side pole portions 315 and 320 form the uppermost parts of first side pole 265 and second side pole 270, respectively.

A frame 325 of magnetic material, for example NiFe, is patterned around insulative pedestal 300 at the same time that magnetic side pole portions 315 and 320 are plated. Plating or other suitable deposition technique is used to form frame 325. Frame 325 exhibits a thickness of approximately 5µ in this particular embodiment. Seed layer 275 acts as the seed for the plating of frame 325. Frame 325 exhibits a substantially rectangular shape in this particular embodiment and surrounds insulative pedestal 300 which forms the inner boundary of frame 325 as seen in FIG. 13B. Shapes other than rectangular can be used for frame 235 as long as frame 325 substantially surrounds, and is located immediately adjacent to, pedestal 300. Frame 325 serves to stiffen insulative pedestal 300 and may provide electrical shielding of the contained structures. In other words, the frame 325 provides structural integrity to the pedestal 300. FIG. 13B is a close-up view of the coil and side pole regions of head 100 at the present stage in the fabrication of head 100. Alternatively, side pole portions 315 and 320 are fabricated as before, but frame 325 is subsequently patterned and plated with non-magnetic NiP alloy up to a level even with the top of insulative pedestal 300. The innermost boundary of seed layer 275 which abuts its open region 280 is shown in dashed line in FIG. 13B. The exposed CrCu seed layer 275 is removed by wet chemical etching.

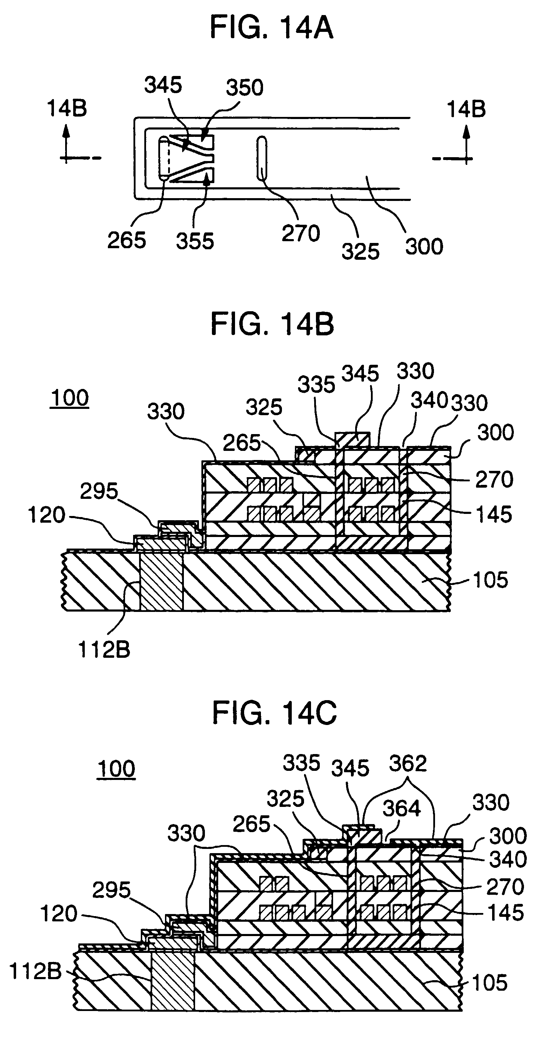

Referring now to FIGS. 3, 14A and 14B, a layer of photoresist is patterned covering open regions 117A and 117B (see FIG. 3) and further covering side poles 265 and 270 (see FIGS. 14A and 14B). A Cr-NiV seed layer 330 is sputtered on the exposed upper surfaces of head 100. The photo-resist is stripped as in the earlier-described "lift-off" process, thus "lifting off" the sputtered Cr-NiV film from regions 117A and 117B. During this photoresist stripping step, the photoresist above side poles 265 and 270 is removed to form open regions 335 and 340 as shown in FIG. 14A. Side poles 265 and 270 are thus exposed.

A first magnetic pole 345 is patterned at the top of magnetic yoke 145 as shown in FIG. 14A and 14B. First magnetic pole 345 is fabricated by plating a magnetic material such as NiFe on side pole 265 and on a portion of seed layer 330 adjacent side pole 265. Magnetic control regions 350 and 355, which are adjacent both sides of first magnetic pole 345, may be patterned and plated at the same time as first pole 345. Magnetic control regions 350 and 355 serve to better control local plating current density which influences NiFe composition and enhances the effect of the easy axis magnetic orienting field of between approximately 1000 Gauss to approximately 10,000 Gauss, provided by an external magnet during the first magnetic pole plating step, to give a desired magnetic domain structure in the magnetic pole piece. Head 100 is exposed to the same magnetic field throughout the duration of building up the various magnetic layers thereof.

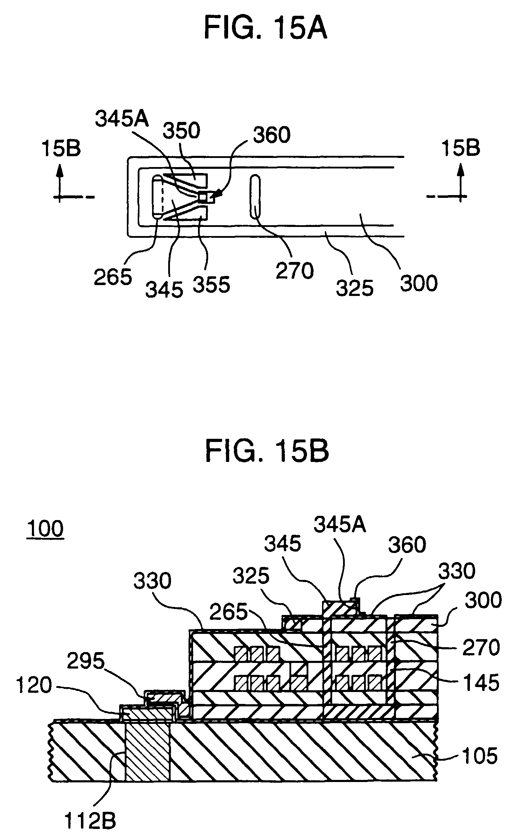

A substantially rectangular gap region 360 of non-magnetic material is patterned adjacent pole end 345A as shown in FIG. 15A and the head cross section of FIG. 15B. One non-magnetic material which may be used to plate gap region 360 on head 100 is NiP. Other non-magnetic materials which are acceptable for plating as gap region 360 are chrome and rhodium, for example. While in this particular embodiment, plating is used to lay down gap region 360, other suitable deposition techniques such as chemical vapor deposition (CVD), patterning and etching unwanted CVD film, may also be employed.

In actual practice, to pattern non-magnetic gap region 360 on head 100, the upper surface of head 100 is coated with photoresist except for the portion shown as gap region 360 in FIG. 15B. More particularly, FIG. 14C illustrates the formation of such a photoresist layer as photoresist layer 362 with an open region 364 in which non-magnetic gap region 360 is to be plated. Non-magnetic material such as NiP is then plated above seed layer 330 and in open region 364 to form gap region 360. In this particular embodiment, gap region 360 is approximately mid way between side poles 265 and 270. Other embodiments are possible wherein gap region 360 is offset either toward side pole 265 or side pole 270.

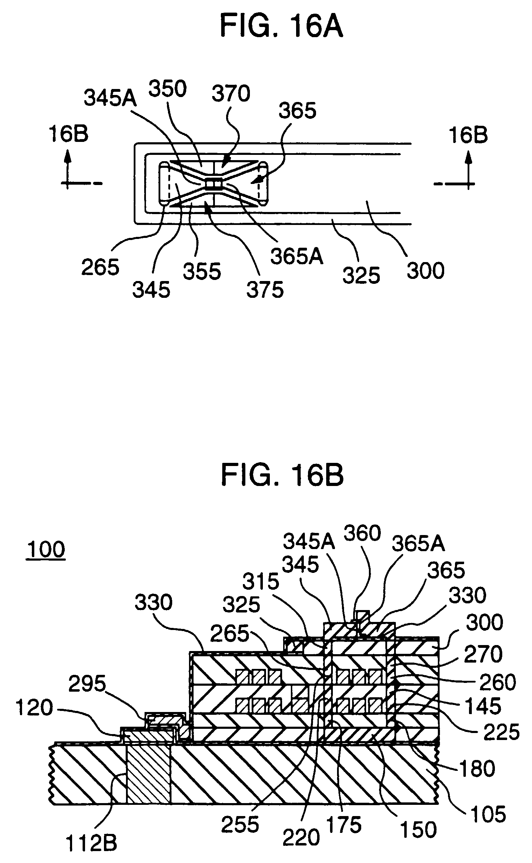

A second magnetic pole 365 is patterned and plated at side pole 270 at the top of magnetic yoke 145 as shown in FIGS. 16A and 16B. Second magnetic pole 365 includes a pole end 365A which is situated adjacent pole end 345A and which is separated from pole end 345A by gap region 360. It is noted that pole 345 becomes narrower from side pole 265 to pole end 345A. Similarly, pole 365 becomes narrower from side pole 270 to pole end 365A. This gives poles 345 and 365 a bow tie-like appearance in this particular embodiment. Other pole geometries may be used as well. Pole ends 345A and 365A are alternatively referred to as gap ends. First magnetic pole 345 and second magnetic pole 365 exhibit a thickness of approximately 5µ.

Magnetic control regions 370 and 375 are patterned and plated adjacent both sides of second pole 365 to enhance magnetic control as shown in FIG. 16A. Control regions 350, 355, 370 and 375 are fabricated from a magnetic material such as the material used to fabricate second magnetic pole 365. For optimal wear performance, the area of NiFe exposed to the recording media should be minimized. Thus, to avoid possible magnetic effects that may degrade recording performance, NiFe plated magnetic control regions 350, 355, 370 and 375 are patterned with photoresist and etched away leaving a pole geometry seen in FIG. 17A.

Magnetic side pole portions 175, 220, 255 and 315 together make up a first side pole which is shown collectively as side pole 265 in FIG. 16B. Magnetic side pole portions 180, 225, 260 and 320 together make up a second magnetic side pole which is shown collectively as side pole 270 in FIG. 16B. Magnetic yoke 145 is collectively made up of bottom magnetic layer 150, side poles 265 and 270, and magnetic poles 345 and 365.

The exposed seed layer 330 is removed by sputter etching. Alternatively, seed layer 330 is not etched, but is permitted to remain. A silicon adhesion layer 380 is sputtered on the exposed upper surface of head 100 as shown in FIG. 17B. A protective wear layer 385 formed by diamond-like carbon (DLC), for example, is then deposited on adhesion layer 380. Adhesion layer 380 enables DLC layer 385 to stick to the upper surface of head 100. This silicon adhesion layer typically exhibits a thickness within the range of approximately 400A° to approximately 1000A°. This silicon adhesion layer exhibits a nominal thickness of approximately 600A° in a preferred embodiment.

DLC layer 385 covers at least the top of magnetic yoke 145 and the immediately surrounding area of the head. As seen in FIG. 17A and more clearly in FIG. 17B, a hard protective wear layer 385 covers magnetic yoke 145 and insulative pedestal 300. Protective layer 385 exhibits a Knoop hardness greater than 700 Knoop and preferably greater than 800 Knoop. The hardness of the protective layer 385 should be within the range of greater than approximately 700 Knoop to approximately 2000 Knoop. One material that is satisfactory for formation of protective wear layer 385 is diamond like carbon (DLC).

To form such a DLC wear layer 385, DLC layer 385 is chemically vapor deposited and patterned. More specifically, both DLC layer 385 and adhesion layer 380 are reactive ion etched to leave a DLC wear layer 385' over magnetic yoke 145 and insulative pedestal 300 as shown in FIG. 18A. Prior to exposing head 100 to this reactive ion etch, the upper surface of head 100 is covered with a layer of photoresist (not shown). The photoresist layer is patterned to include unprotected open regions for those portions of the head external to frame 325. In this manner, when the head is subjected to the reactive ion etch, the portion of DLC layer 385 external to frame 325 is etched away and the remaining portion of DLC layer 385 is protected and remains as DLC layer 385'.

An alternative to the above described photoresist masking approach to patterning DLC layer 385 into DLC layer 385' is to cover head 100 with a metal layer such as chromium. For example, a relatively thin photomask layer (not shown) of chromium is sputtered over the DLC layer. In this particular example, the photomask layer is approximately 500A° thick. The metal photomask layer is photo-patterned and etched to expose DLC areas which are to be excavated by reactive ion etching. The DLC layer is then reactive ion etched to the desired DLC structure.

More detail is now provided with respect to the formation of DLC protective wear layer 385. Before DLC protective wear layer 385 is actually laid down on silicon adhesion layer 380, adhesion layer 380 is sputter cleaned. In the course of performing this sputter cleaning, approximately 200A° of the upper surface of silicon adhesion layer 380 is removed. More particularly, the silicon adhesion layer is sputter cleaned in a SAMCO plasma machine, Model No. PD-200D (Plasma Enhanced CVD System For DLC Deposition and Etching), hereafter the "plasma machine". This sputter cleaning is performed with Argon in a plasma within the plasma machine vessel at a pressure of 70 mTorr with 180 watts RF input power at a frequency of 13.56 MHz. The flow rate of Argon is approximately 100 sccm. The partially complete head 100 is situated on a 6 inch diameter cathode (ie. the energized electrode) of the SAMCO plasma machine, Model PD-200D, for approximately 3 to approximately 4 minutes.

Immediately after the Argon plasma cleaning (sputter etching) is complete, the input power is reduced to 110 - 150 Watts to the same 6 inch cathode electrode. The Argon source is turned off and a source of liquid hydrocarbon DLC source material is turned on. For example, one DLC source material that may be used is Part No. S-12 available from SAMCO, Sunnyvale, CA. The pressure within the vessel is approximately 20-approximately 25 mTorr at a flow rate of source material of approximately 25cm³/min. Although the temperature is not specifically controlled during this process, the wafer on which the head is fabricated is situated on a water-cooled cathode while in the plasma machine. Under these conditions, a DLC deposition rate of approximately 1000A/min is obtained which is maintained until the desired DLC thickness is reached, namely approximately 5µ.

DLC fabricated in this manner results in a DLC layer 385 with a Knoop hardness of approximately 800. It is found that DLC layer Knoop hardnesses of greater than 700 up to approximately 2000 Knoop produce an acceptably hard wear layer 385 for wear protection purposes. DLC wear layer 385 is then reactive ion etched as described to form DLC wear layer 385'.

FIG. 18B is a close-up view of the upper portion of head 100 at the stage of fabrication depicted in FIG. 18A. In this close-up view, it can be seen that gap region 360 includes a main gap portion 360B which is substantially normal to seed layer 330 and the substrate therebelow. Gap region 360 also includes a top 360A which extends from the uppermost part of main gap portion 360B and generally parallel to seed layer 330 and magnetic pole 345. Top 360A overlies a portion of magnetic pole 345 and extends from main gap portion 360B toward side pole 265. Gap region 360 further includes a bottom portion 360C which extends from the lowermost part of main gap portion 360B and generally parallel to seed layer 330 and magnetic pole 365. Bottom portion 360 underlies a portion of magnetic pole 365 and extends from main gap portion 360B toward side pole 270.

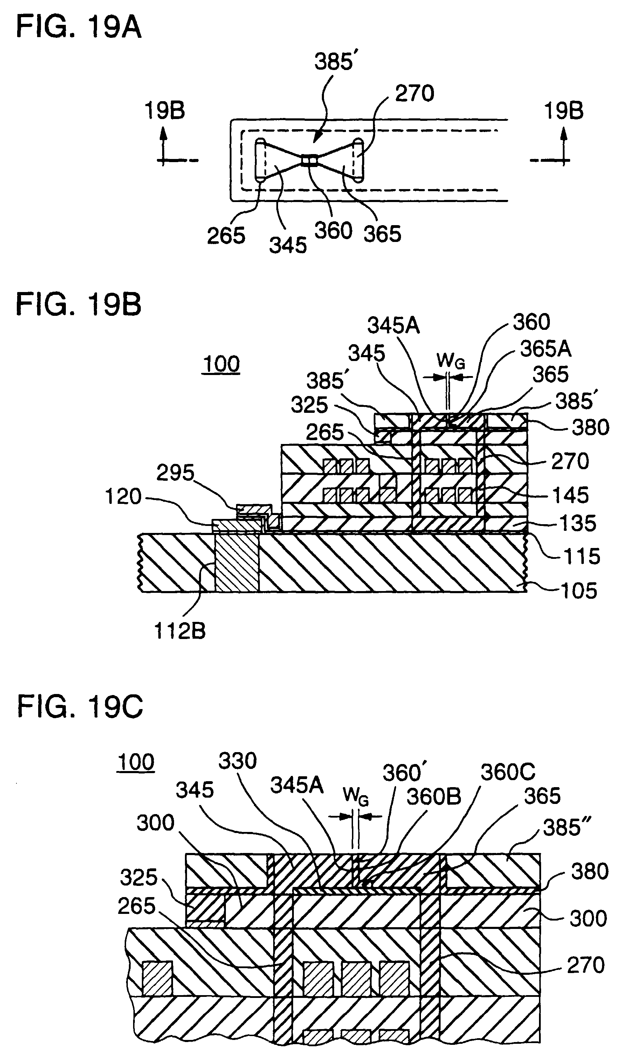

DLC wear layer 385' is machined as shown in FIG. 19B to expose and shape magnetic gap region 360' as shown in both FIG. 19A and 19B. A machined wear layer 385'' thus results. The gap region 360' exposed and shaped by this machining step exhibits a substantially L-shaped cross section as seen in FIG. 19B and more clearly in the close-up view of FIG. 19C. DLC wear layer 385'' protects head 100, specifically gap region 360 and magnetic poles 345, 365, from wear when head 100 is brought into contact with a magnetic media for recording or playback purposes. Wear layer 385'' which is relatively hard compared with the relatively soft gap region 360' and magnetic poles 345 and 365, acts as protective bumper when head 100 comes into contact with the magnetic media. It is noted that in this particular embodiment, the upper surface of wear layer 385 is substantially flush with the upper surface of magnetic poles 345, 365 and gap region 360'. Wear layer 385' surrounds magnetic poles 345, 365 and gap region 385'. Wear layer 385' provides structural support for the magnetic poles 345, 365 and gap region 360' contained within its bounds. In this manner, wear layer 385' contributes to the structural integrity of head 100 and enhances the wear capabilities of the head.

By using the techniques described herein, very narrow gap regions can be produced. The gap width, *W*_{*G*}₁ is defined to be the width of gap region 360, namely the distance between pole end 345A and pole end 365A as seen in FIGS. 19B and 19C. Typical gap widths for head 100 are approximately .2 microns to approximately 1 micron.

It is noted that in one embodiment of the invention, the upper magnetic pole elements 345 and 365 are plated directly on magnetic side poles 265 and 270, respectively. Advantageously, no intervening structures are required between upper magnetic pole element 345 and magnetic side pole 265 or between magnetic pole element 365 and magnetic side pole 270. The magnetic pole elements 345 and 365 are thus integral with the magnetic side poles 265 and 270, respectively.

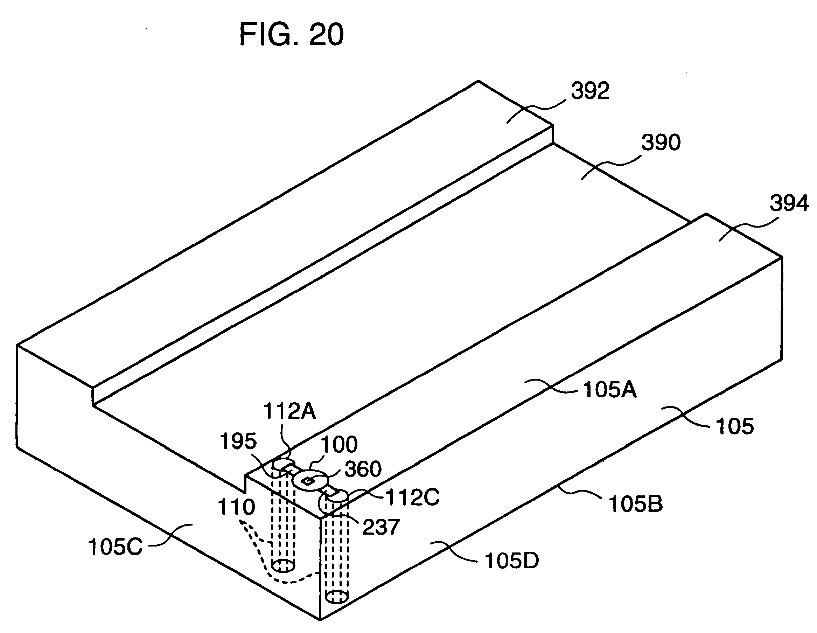

FIG. 20 shows a perspective view of head 100 wherein the head 100 is situated on a slider. More particularly, the substrate 105 which is used in the fabrication of head 100 is shaped as a slider and will be referred to as slider substrate 105 or slider 105. Slider 105 is generally attached to the movable arm (not shown) of stepping mechanism or actuator associated with a media drive.

Slider 105 includes upper planar surface 105A (a first axis surface), a lower planar surface 105B, a front side surface 105C (a second axis surface), and lateral side surface 10D (a third axis surface), each surface corresponding to a different respective axis of the slider. In FIG. 1B, magnetic head 20 is located on front side surface 20B and is thus said to be a "second axis" head. A "first axis" head is a head which is located on upper planar surface 10A. In the particular embodiment shown in FIG. 20, only one head/coil assembly is shown for simplicity.

As seen in FIG. 20, a channel 390 is machined in the upper planar surface 105A (first axis surface) of the head/slider assembly. Channel 390 is machined in the "media side" of the head/slider assembly, namely the side of assembly which faces the magnetic recording media. When channel 390 is so machined, substantially parallel rails 392 and 394 are formed. The recording media (not shown) is positioned parallel with and in close proximity to upper planar surface 105A of slider 105. The recording media may be a magnetic disk, tape or other moving magnetic media. Angled flying surfaces may be incorporated in rails 392 and 394 to enhance the flying characteristics of slider 105 over the moving magnetic media.

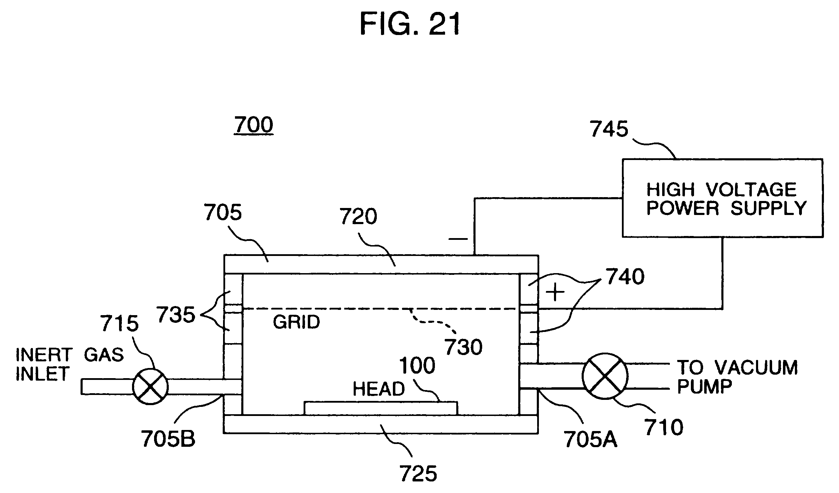

In the aforesaid embodiment, an insulative layer 135 of photoresist is patterned on head 100 as shown in FIG. 4B. Insulative layer 135 is cured with an electron beam or E-beam. To cure insulative layer 135, the partially complete head 100 with insulative layer 135 thereon is placed in the E-beam curing system 700 of FIG. 21. More particularly, head 100 is placed in a vacuum chamber 705 which is shown in cross section in FIG. 21. The vacuum chamber 705 includes a pump port 705A which is coupled to a vacuum pump by a valve 710. Chamber 705 further includes an inlet gas port 705B which is coupled to an inlet gas source via a valve 715. Chamber 705 also includes a wide area electron emitter 720 and a grounded anode 725. A extraction grid 730 is supported by insulators 735 and 740. A high voltage power supply 745 is coupled between grid 730 and emitter 720.

System 700 is pumped down to a rough vacuum of approximately 20 mTorr. The flow of inert gas such as nitrogen or argon is started though valve 715 to inlet port 705B. A high voltage within the range of approximately 17-22 KV is applied between extraction grid 730 and the electron emitting cathode emitter 720 thus creating a plasma. Free electrons are accelerated though grid 730 and bombard head 100 and cross-link the polymer photoresist material of photoresist layer 135. The amount of cross-linking is determined by the coulomb (charge) dose. A coulomb dose of approximately 6700 µC is found to be sufficient to cure a 7-8 micron thick photoresist film. The rate of cross-linking of the photoresist is determined by the E-beam current which may be controlled from approximately 1 mA to approximately 5 mA in one embodiment. Other photoresist layers fabricated in head 100 can be E-beam cured as well using this technique.

Then, explanation will be made as to a method of fabricating the via connection.

From the above discussion it will be appreciated that via connective members 112A, 112B and 112C permit the connection of coil structures (190, 235) on one side of substrate 105 to be electrically coupled to structures on the other side of substrate 105. Unlike other approaches which employ an electrically conductive substrate such as silicon, each via hole in the disclosed head 100 need not be internally coated with insulative material. The disclosed thin film head 100 employs an electrically insulative substrate through which via holes 110 are formed by laser drilling or other highly positionally accurate hole formation technique.

In one embodiment of the invention, via connective members 112A, 112B and 112C are formed as follows: Tungsten (W) is sintered into each via hole. The tungsten is then fired such that it bonds with the tungsten to form a spongy, porous material in the hole. The wafer or substrate with the via holes therein is then exposed to molten copper. When this occurs, the copper wicks up into the porous material in the hole to form a tungsten/copper combination within the hole. Alternatively, the via holes could be plated with copper, or a thick film copper or gold paste is placed in the via holes and fired to form the via connective members.

It is noted that subsequent to the formation of via connective members 112A, 112B and 112C, a number of etching steps occur which could potentially cause damage to these via connective members. For example, assuming that via connective members 112A, 112B and 112C are fabricated by plating copper in the corresponding via holes 110 in one embodiment of the invention, then if coil layers 190 and 235 are likewise fabricated from copper, the via connective members could potentially be damaged by the etchant which is used to pattern coil layers 190 and 235.

In one embodiment of the invention wherein coil layers 190 and 235 are fabricated from copper, an ammonium persulfate - ammonium hydroxide solution is used to pattern or etch these layers. To form this etchant, in one liter of deionized water, dissolve 120 gm of ammonium persulfate, and add 64 ml of 30% ammonium hydroxide solution. This is a relatively mild selective etchant which etches copper but does not attack materials such as Ni or NiFe. Via caps 120 are made of a material which is not attacked by the selective etchant used to etch coil layers 190 and 235 and which is not attacked by the etchant used to etch seed layer 115 away. (It will be recalled that seed layer 115 is the seed layer on which via caps 120 are plated.) In this example, via caps 120 are made of Ni or NiFe. After via caps 120 are plated, the exposed portions of seed layer 115 are sputtered etched away in one embodiment of the invention.

Via caps 120 extend beyond the periphery of via connective members 112A, 112B and 112C by approximately 20 to approximately 30 microns at the tops thereof in one embodiment where vias 110 exhibit a diameter of approximately 150 microns. Via caps 120 thus form a protective coverings for the tops of via connective members 112A, 112B and 112C which prevent the via connective members from being exposed to etchants in the steps of head fabrication subsequent to via connective member formation. The selective etchants employed in the subsequent etching steps selectively attack the subject target material or layer (for example, copper coil layers 190 and 235) but do not substantially erode via caps 120. In this manner, the integrity of via connective members 112A, 112B and 112C is preserved.

The material requirements for via caps 120 are that the cap material be platable and that the material should not be significantly attacked by etchants employed in fabrication steps after via cap formation. Protective material other than Ni and NiFe may be employed as long as such other materials are not affected by the selective etchant. The material requirements for the selective etchant are that it must be able to etch the particular electrically conductive material selected for coil layers 190, 235 and seed layer 275 while not significantly attacking the via cap 120 material.

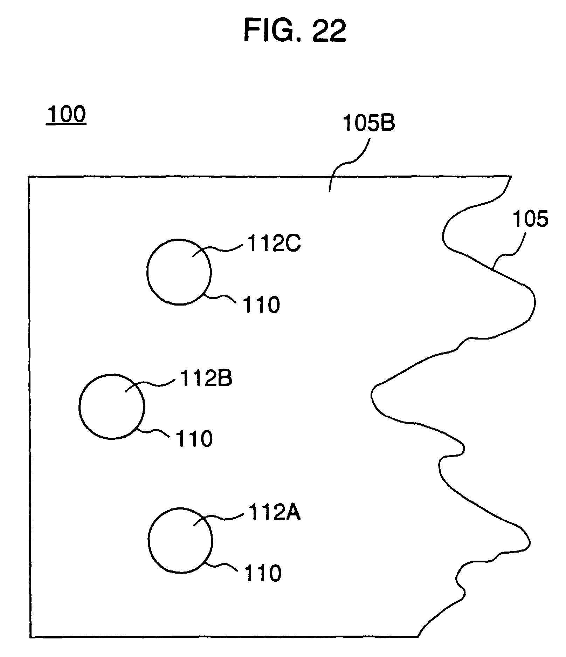

In this particular embodiment of the invention, while via caps 120 are used to protect via connective members 112A, 112B and 112C on substrate surface 105A from etchants, exposed vias on the reverse side 105B (see FIG. 22) of substrate 105 are protected from etchants with photoresist (not shown) during such etching steps. Such a layer of photoresist is coated and cured on reverse side 105B to provide protection from etchants. The lowermost portions of via connective members 112A, 112B and 112C appear in FIG. 22 as well as the bottoms of the via holes 110 through which such via connective members run.

Another method of fabricating the gap portion of the aforesaid embodiment will be described.

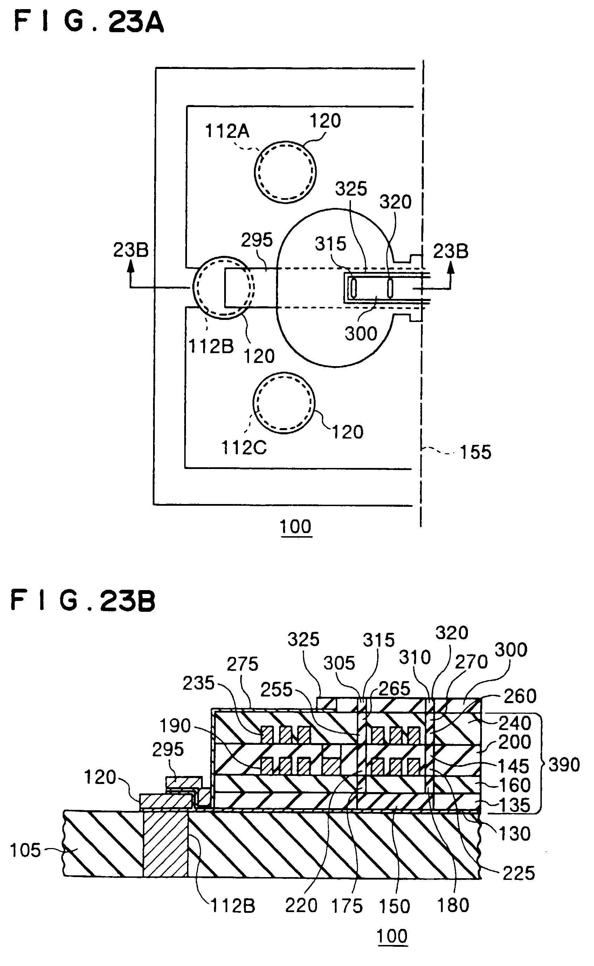

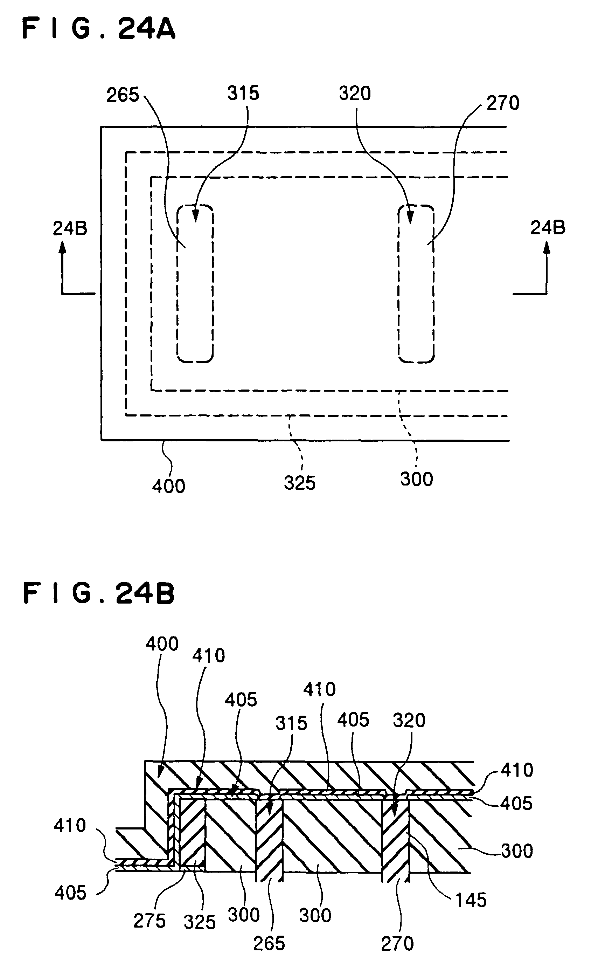

Before DLC wear layer 400 is deposited on the side pole region of head 100, the upper surface of the side pole region is prepared by sputtering a Cr-NiV seed layer 405 thereon, as shown in FIG. 24B from a state of FIG. 23B corresponding to FIG. 13A of the aforesaid embodiment. Seed layer 405 will be used later as the seed electrode for plating the magnetic poles of the head. However, seed layer 405 must includes openings above magnetic side pole portions 315 and 320.

To accomplish this end, a seed layer "lift-off process" is used. More particularly, in this "lift-off" process, photoresist (not shown) is patterned covering the tops of magnetic side pole portions 315 and 320 of FIG. 24A and 24B. Seed layer 405 is then sputtered on the entire upper surface of the partially completed head 100. The photo-resist which covers the tops of side pole portions 315 and 320 is now "lifted-off" head 100. To accomplish this lift-off, the partially complete head 100 is placed in an ultrasonic bath including a photo-resist solvent such as acetone, for example. The seed layer 405 is sufficiently thin such that it does not cover the photoresist layer at the tops of side pole portions 315 and 320 very well. In this manner, there are sufficient avenues of attack by which the solvent can get through seed layer 130 at the edges of the tops of side pole portions 315 and 320 to dissolve the photo-resist layer at the tops of side pole portions 315 and 320. When the photoresist layer at the tops of side pole portions 315 and 320 is thus dissolved, the portions of seed layer 130 immediately above the tops of side pole portions 315 and 320 lift-off and float away. The region of head 100 at the tops of side pole portions 315 and 320 is thus void of seed layer 405 as shown in FIG. 24B.

A silicon layer 410 is sputtered on seed layer 405 to act as an adhesion layer for the subsequent deposition of DLC layer 400. DLC layer 400 is deposited on silicon adhesion layer 410 as seen in FIGS. 24A and 24B. Adhesion layer 410 enhances the adhesion of DLC layer 400 to the layers of head 100 below.

This silicon adhesion layer typically exhibits a thickness within the range of approximately 400A° to approximately 1000A°. This silicon adhesion layer exhibits a nominal thickness of approximately 600A° in a preferred embodiment.

DLC layer 400 covers at least the top of magnetic yoke 145 and the immediately surrounding area of the head. As seen in FIG. 24A and more clearly in FIG. 24B, a hard protective wear layer 400 covers magnetic yoke 145 and insulative pedestal 300. Protective layer 400 exhibits a Knoop hardness greater than 700 Knoop and preferably greater than 800 Knoop. The hardness of protective layer should be within the range of greater than approximately 700 Knoop to approximately 2000 Knoop. One material that is satisfactory for formation of protective wear layer 400 is diamond like carbon (DLC).

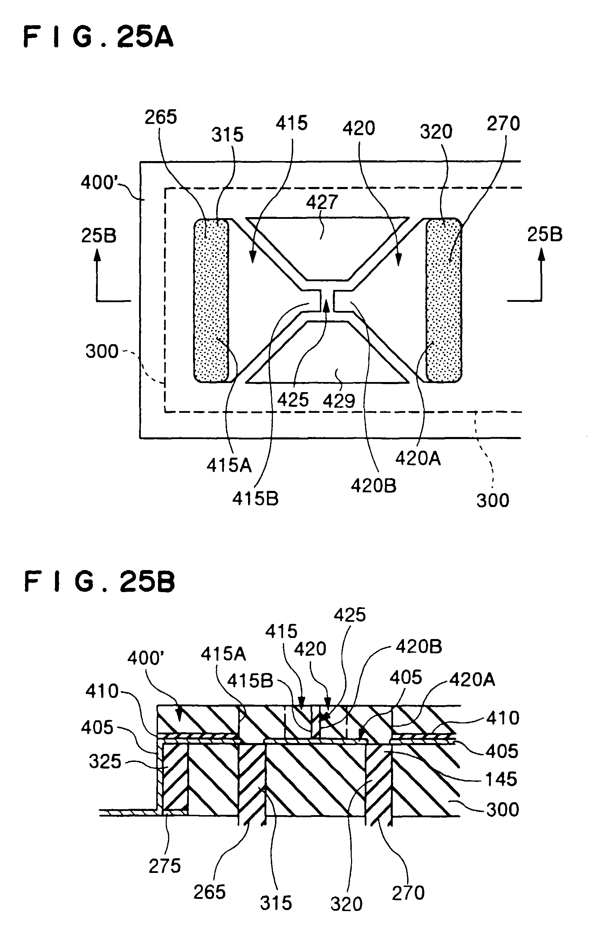

DLC wear layer 400 is then reactive ion etched to form DLC wear layer 400' as shown in FIGS. 25A and 25B.

A thin (approximately 500A°) masking layer (not shown) of metal such an Chromium is sputtered over DLC layer 400 and photo-patterned and etched to expose areas to be reactive ion etched. The exposed areas include the substantially rectangular area in which DLC frame 400' is to located. DLC layer 400 is then reactive ion etched to form a DLC frame 400' which overlies the NiFe frame 325 and the side pole region therein.

As part of these patterning and reactive ion etching steps which from DLC frame 400', the masking layer is patterned and etched to form pole wells 415 and 420 which together exhibit a bow-tie like shape. Pole wells 415 and 420 are excavations in DLC wear layer 400' in which respective magnetic poles will be formed. Pole well 415 includes a wide end 415A and a narrow end 415B. Pole well 420 includes a wide end 420A and a narrow end 420B. Pole wells 415 and 420 are spaced apart to form a DLC gap region 425 between narrow end 415B and narrow end 420B. DLC gap region 425 is the portion of DLC layer 400' between narrow end 415B and narrow end 420B which remains unetched in the reactive ion etching step.

As part of the same reactive ion etching step, the portion of silicon adhesion layer 410 between side poles 265 and 270 is ion etched away to expose seed layer 405 to permit subsequent pole plating thereon. More specifically, silicon adhesion layer 410 is reactive ion etched in a 80-90% CF₄ : 20-10% O₂ plasma. Also, the portion of silicon adhesion layer 410 outside of DLC frame 400' is reactive ion etched away. Additional magnetic control wells 427 and 429 are optionally excavated in DLC layer 400' by reactive ion etching at the same time that pole wells 415 and 420 are formed. The metal masking layer (not shown) remaining over DLC layer 400' is then etched away.

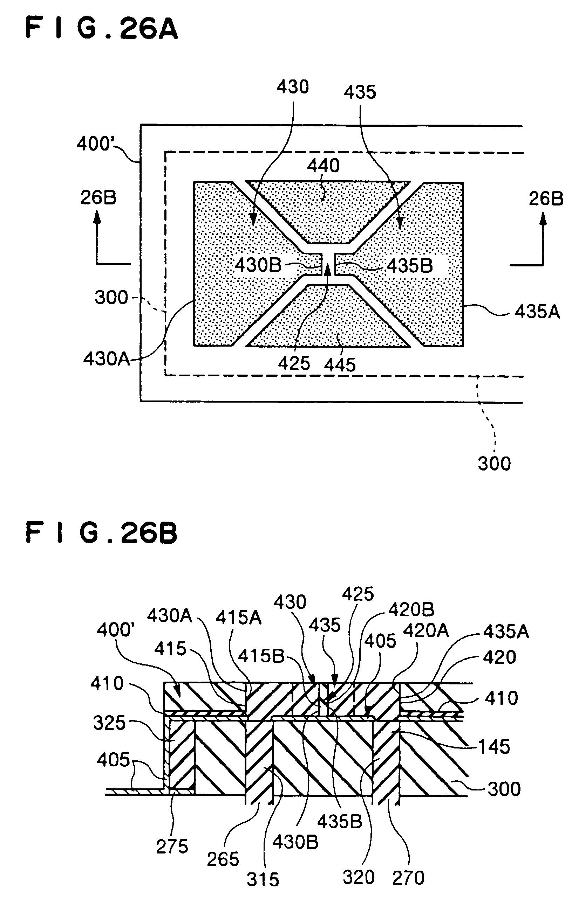

A first magnetic pole 430 is plated in pole well 415 and atop side pole 265 to fill pole well 415 and the open region above side pole 265 up to a level even with the top of DLC layer 400' as shown in FIGS. 26A and 26B. First magnetic pole 430 is electrically and magnetically coupled to side pole 265. At the same time that first magnetic pole 430 is formed, a second magnetic pole 435 is plated in pole well 420 and atop side pole 270 to fill pole well 420 and the region above side pole 270 up to a level even with the top of DLC layer 400'. Second magnetic pole 435 is electrically and magnetically coupled to side pole 270. The narrow ends 430B and 435B of poles 430 and 435 are separated by DLC gap region 425 as illustrated in FIGS. 26A and 26B. With the plating of first magnetic pole 430 and second magnetic pole 435, the formation of magnetic yoke 145 is complete. Magnetic yoke 145 thus includes bottom magnetic layer 150, first side pole 265, second side pole 270, first magnetic pole 430 and second magnetic pole 435.

At the same time that first magnetic pole 430 and second magnetic pole 435 are plated, additional magnetic control layers 440 and 445 are plated in control wells 427 and 429, respectively. While optional, it has been found that plating additional magnetic control layers 440 and 445 at the same time as plating first magnetic pole 430 and second magnetic pole 435 serves to better control local plating current density. Such current density influences NiFe composition and enhances the effect of the easy axis magnetic orienting field. Magnetic yoke 145, first magnetic pole 430 and second magnetic pole 435 are all subjected to an easy axis magnetic orienting field of approximately 1000 Gauss to approximately 10,000 Gauss, provided by an external magnet, to give a desired magnetic domain structure in first magnetic pole 430 and second magnetic pole 435. It is noted that all plating of magnetic material in head 100 is conducted while the head is subjected to the magnetic orienting field.

DLC frame 400' is patterned with photoresist to protect yoke 145, namely magnetic poles 430 and 435, and to expose additional magnetic control layers 440 and 445. Magnetic control layers 440 and 445 are then etched away leaving control wells 427 and 429.

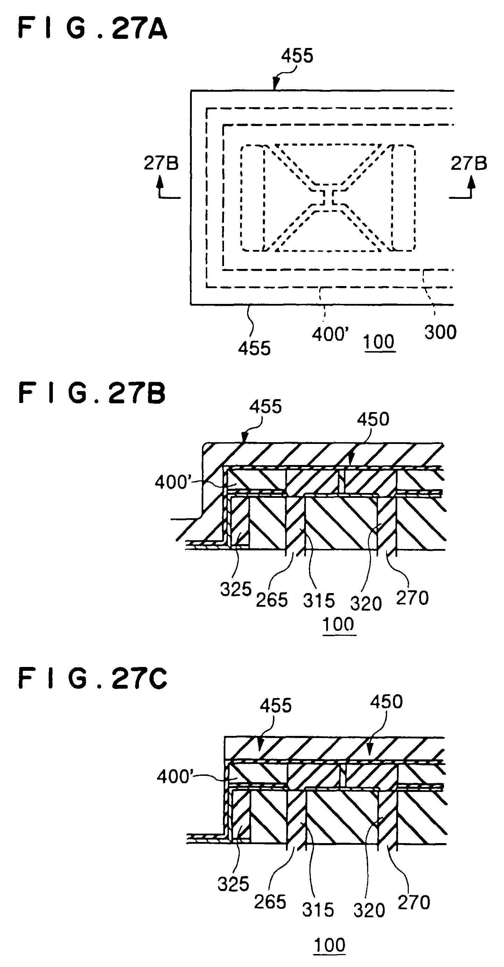

A silicon adhesion layer 450 is deposited on the upper surface of head 100 of FIG. 26A as shown in FIG. 27B. Another DLC layer 455 equal in thickness to the depth of control wells 427 and 420 is then deposited on the exposed upper surface of head 100 of FIG. 27B using the process already described. Control wells 427 and 429 are thus again filled with DLC and the upper surface of head 100 of FIGS. 27A and 27B is covered with DLC. Silicon adhesion layer 450 enhances the adhesion of DLC layer 455 to the layers of head 10 below. DLC layer 455 is designated as an upper DLC layer and DLC layer 400 is designated as a lower DLC layer in this particular embodiment.

A thin masking layer of metal such as Chromium is sputtered over DLC layer 455 and photo patterned and etched to expose DLC areas to be reactive ion etched while protecting DLC wear layer frame 400' below. In other words, the exposed DLC layer 455 is reactive ion etched to achieve the head 100 structure of FIG. 27C. The upper surface of the head 100 structure of FIG. 27C is then machined to remove DLC layer 455 (except for the portions of layer 455 deposited in control wells 427 and 429) and to remove silicon adhesion layer 450. In other words, DLC layer 455 and silicon adhesion layer 450 are machined down to a sufficient depth to expose poles 430 and 435 of magnetic yoke 145 and gap region 425. The exposed poles 430 and 435 and gap region 425 form the head surface which is situated either touching or in close proximity with a magnetic recording media for playback or recording purposes.

A simplified embodiment of the invention is formed when the optional additional magnetic control layers 440 and 445 are omitted. In this embodiment, formation of control wells 427 and 429 is omitted when pole wells 415 and 420 are formed by etching DLC frame 400. First magnetic pole 430 and second magnetic pole 435 are plated in pole wells 415 and 420 as before. However, since there are no control wells 427 and 429 which require refilling with DLC, the step of depositing a second or upper DLC layer 455 is omitted. The upper surface of the head 100 thus formed is still machined to shape or contour gap region 425 and magnetic poles 430 and 435. In this particular embodiment, gap region 425 and magnetic poles 430 and 435 are provided with a substantially flat contour whereas other embodiments are possible wherein this contour is rounded or curved.

It is noted that top poles 430 and 435 are advantageously directly coupled to side poles 265 and 270, respectively, without the use of intermediate layers therebetween in one particular embodiment. Side poles 430 and 435 are simultaneously fabricated and are situated entirely in the same plane as the DLC wear layer 400' in one embodiment.

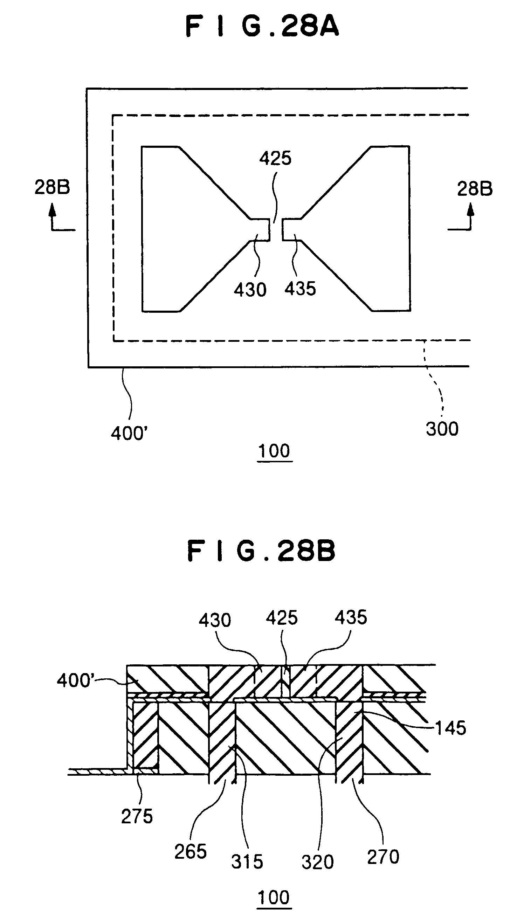

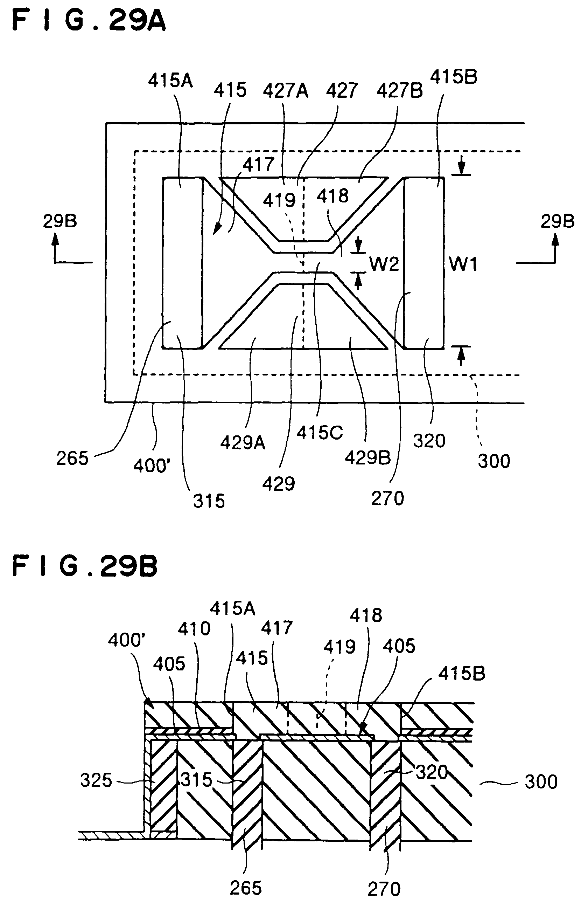

Another embodiment of method of fabricating the gap portion of the aforesaid embodiment shown in FIGS. 23 to 28 will be described with reference to FIGS. 29 to 37.

DLC layer 400 is patterned via reactive ion etching to form a DLC frame 400' which overlies magnetic frame 325 and the side pole region therein. DLC frame 400' exhibits a substantially rectangular shape slightly larger than the substantially rectangular shape of magnetic frame 325 as seen in FIGS. 29A and 29B. DLC frame 400' is substantially vertically aligned with magnetic frame 325. DLC frame 400' may be the same size as the frame or somewhat larger.

As part of these patterning and reactive ion etching steps which form DLC frame 400', DLC layer 400 is patterned and etched to form a pole well 415 which exhibits a bow-tie like shape. Pole well 415 includes pole well end portions 415A and 415B which are significantly wider than the relatively narrow width of middle pole well portion 415C. In one particular embodiment, pole well end portions 415A and 415B exhibit a width, W1, of approximately 50µ and middle pole well portion 415C exhibits a width, W2, of approximately 14 to approximately 22µ. These dimensions will vary according to the particular application. Pole well end portion 415A opens onto the region of head 100 above side pole 265 as shown in FIG. 29B. Similarly, pole well end portion 415B opens onto the region of head 100 above side pole 270. Pole well 415 is an excavation in DLC wear layer 400' in which first and second magnetic poles will be formed.

More detail is now provided with respect to the patterning of DLC layer 400 to form DLC frame 400' which includes poles well 415 and magnetic control wells 427 and 429 therein. A relatively thin photomask layer (not shown) of metal such as chromium is sputtered over DLC layer 400. In this particular example, the metal photomask layer is approximately 500A° thick. The metal photomask layer is photo-patterned and etched to expose DLC areas which are to be excavated by reactive ion etching. DLC layer 400 is then reactive ion etched to form DLC frame 400' which overlays magnetic frame 325 and the side pole region therein. As part of these patterning and reactive ion etching steps which form pole well 415, the portion of silicon adhesion layer 410 between side poles 265 and 270 is ion etched away to expose seed layer 405 to permit subsequent pole plating thereon. Additional magnetic control wells 427 and 429 are optionally excavated in DLC layer 400' by patterning via reactive ion etching at the same time that pole well 415 is formed.

Pole well 415 includes a well region 417 in which plating of a first magnetic pole is desired and a second well region 418 in which plating of a second magnetic pole is desired. Well regions 417 and 418 are shown separated by a dashed line 419 in FIG. 29A. Magnetic control well 427 includes magnetic control subwells 427A and 427B. Magnetic control well 429 includes magnetic control subwells 429A and 429B.

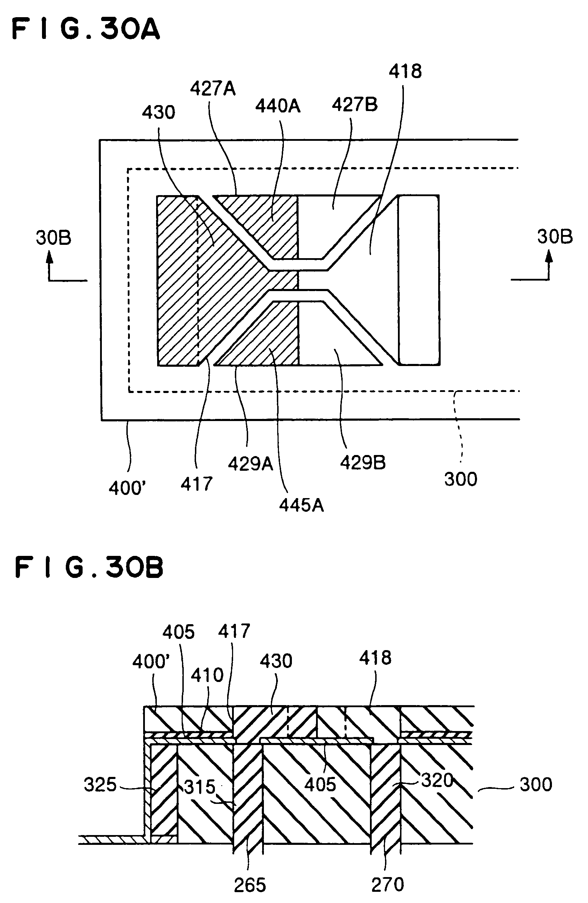

A first magnetic pole 430 is plated in well region 417 atop side pole 265 and seed layer 405 to fill well region 417 up to a level even with the top of DLC layer 400' as shown in FIGS. 30A and 30B. First magnetic pole 430 is electrically and magnetically coupled to side pole 265. More specifically, to plate first magnetic pole 430, the upper surface of head 100 of FIG. 29A and 29B is masked off with a layer photoresist (not shown) except for well region 417. Well region 417 is then plated with magnetic material such as NiFe. First magnetic pole 430 is thus patterned and formed. Well region 418 remains unplated in this plating step because it is protected by the photoresist layer which acts as a mask. This photoresist layer is now washed away leaving an unprotected well region 418.

It is noted that simultaneously with the above first magnetic pole plating step, magnetic control subregions 440A and 445A are plated in magnetic control subwells 427A and 429A, respectively. Magnetic control subwells 427B and 429B are masked off with photoresist (not shown) during this plating step to prevent subwells 427B and 429B from being filling with plating material. The photoresist is subsequently removed.

Magnetic control regions subregions 440A and 445A serve to better control local plating current density which influences NiFe composition and enhances the effect of the easy axis magnetic orienting field of between approximately 1000 Gauss to approximately 10,000 Gauss, provided by an external magnet during the first magnetic pole plating step, to give a desired magnetic domain structure in the magnetic pole piece. It is noted that lower magnetic layer 150 and side poles 265, 270 are subject to the same magnetic orienting field when those structures are plated.

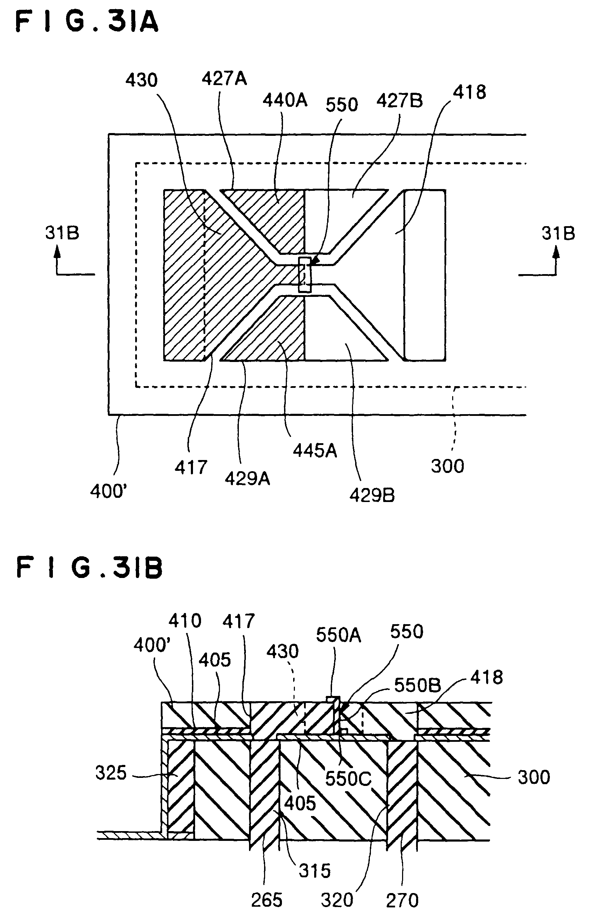

A layer of DLC is then deposited by chemical vapor deposition on the uppermost surfaces of the partially formed head 100, such DLC layer then being patterned and reactive ion etched to leave a DLC gap region 550 remaining as shown in FIG. 31B. In more detail, a DLC layer (not shown) is deposited by the deposition process described earlier over all the substrate or wafer on which the partially formed head 100 (and other like heads 100) are situated. This DLC layer is then masked off with photoresist so as to only expose the DLC layer at the location of gap region 550 which is shown in FIG. 31B. A DLC gap region 550 is thus formed by removal of this DLC layer except for the portion thereof in gap region 550. Reactive ion etching is used to achieve removal of the exposed portions of the DLC layer.

In FIG. 31B, it can be seen that DLC gap region 550 includes a main gap portion 550B which is substantially normal to seed layer 405 and the substrate therebelow. Gap region 550 also includes a top portion 550A which extends from the uppermost part of main gap portion 550B and generally parallel to seed layer 405 and first magnetic pole 430. Top 550A overlies a portion of magnetic pole 430 and extends from main gap portion 550B toward side pole 265. Gap region 550 further includes a bottom portion 550C which extends from the lowermost part of main gap portion 550B and generally parallel to seed layer 405 and a second magnetic pole (not shown) which is subsequently deposited. Bottom portion 550C underlies a portion of such second magnetic pole and extends from main gap portion 550B toward side pole 270.

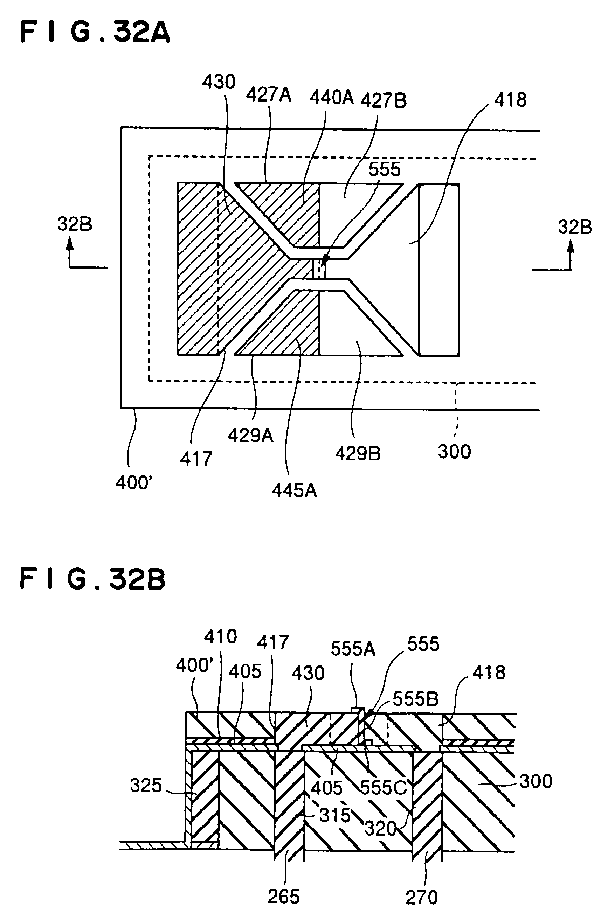

In an alternative embodiment of the invention, rather than depositing a DLC gap region 550 as described above with reference to FIGS. 31A and 31B, a gap region 555 of a non-magnetic material such as nickel-phosphorus (NiP) is plated on seed layer 405 in place of DLC gap region 550 as shown in FIGS. 32A and 32B. The gap material plates only on the conductive surfaces and not DLC frame 400'. To prevent the gap material from being plated on head 100 at locations other than the desired gap region 555 location shown in FIG. 32A and 32B, the remainder of the head 100 other than gap region 555 is temporarily covered with a photoresist mask (not shown) during the gap plating operation. The photoresist is subsequently removed.

As seen in FIG. 32B, the gap region 555 thus formed includes a main gap portion 555B which is substantially normal to seed layer 405 and the substrate therebelow. Gap region 555 also includes a top portion 555A which extends from the uppermost part of main gap portion 555B and generally parallel to seed layer 405 and first magnetic pole 430. Top 555A overlies a portion of magnetic pole 430 and extends from main gap portion 550B toward side pole 265. Gap region 555 further includes a bottom portion 555C which extends from the lowermost part of main gap portion 555B and generally parallel to seed layer 405 and a second magnetic pole (not shown) which is subsequently deposited. Bottom portion 555C underlies a portion of such second magnetic pole and extends from main gap portion 555B toward side pole 270.

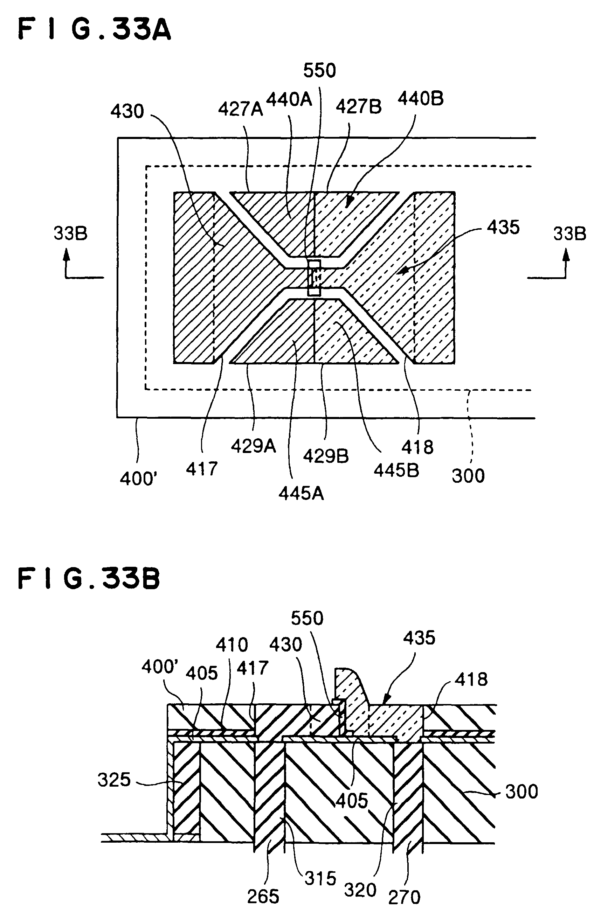

Preparations are now made for the plating of second magnetic pole 435 on seed layer 405 in well region 418. Simultaneously with this second magnetic pole plating step, magnetic control regions 440B and 445B are plated in magnetic control subwells 427B and 429B, respectively. To implement this plating only in the areas specified above, the remaining areas of the upper surface of partially completed head 100 are covered with photoresist (not shown). NiFe plating is then conducted to form second magnetic pole 435 and magnetic control regions 440B and 445B. The photoresist is then removed leaving the pole/gap structure shown in FIGS. 33A and 33B.

Magnetic control subregions 440B and 445B serve to better control local plating current density which influences NiFe composition and enhances the effect of the easy axis magnetic orienting field of between approximately 1000 Gauss to approximately 10,000 Gauss, provided by an external magnet during the second magnetic pole plating step, to give a desired magnetic domain structure in the magnetic pole piece.

DLC frame 400' and the structures therein are patterned with photoresist to expose magnetic control regions 427 and 429, but to protect the remaining structures on the substrate. The remainder of head 100 is also covered with photoresist. Head 100 is then subjected to an etch which removes magnetic control regions 440 and 445 from magnetic control wells 427 and 429, respectively. Magnetic control wells 427 and 429 are thus once again exposed as shown in FIG. 34A. It is noted that magnetic control well 427 is formed from magnetic control subwells 427A and 427B (shown in FIG. 33A). Similarly, magnetic control well 429 is formed from magnetic control subwells 429A and 429B.

A silicon adhesion layer 560 is sputtered onto the upper surface of the partially complete head 100 as shown in FIG. 35B. A DLC layer 565 is deposited by chemical vapor deposition, in a manner similar to that described earlier, onto silicon adhesion layer 560 as shown in FIGS. 35A and 35B. DLC layer 565 is deposited to a thickness equal to the depth of magnetic control wells 427 and 429 which is approximately 5µ in this particular embodiment.

A layer of photoresist (not shown) in then patterned on DLC layer 565 to protect DLC frame 400' and the structures contained therein. The exposed DLC outside of frame 400' is then reactive ion etched to remove DLC and form the structure shown in FIGS. 36A and 36B. The exposed silicon adhesion layer 560 is also removed by reactive ion etching in the formation of the structure of FIGS. 36A and 36B.

DLC layer 565 is then machined down or lapped to expose poles 430, 435 and gap region 550. In one embodiment, poles 430, 435 and gap region 550 are lapped to form a substantially planar top surface 570. Poles 430' and 435' and gap region 550' are thus formed as shown in FIGS. 37A and 37B. Gap region 550' exhibits a substantially L-shaped cross section in this particular embodiment. The exposed poles 430' and 435', gap region 425' and DLC layer 400'' together form the head surface 570 which is situated either touching or in close proximity with a magnetic recording media for playback or recording purposes. In this particular embodiment, gap region 550', magnetic poles 430' and 435' and DLC frame 400'' are provided with a substantially flat contour although other embodiments are possible wherein this contour is rounded or curved.

A simplified embodiment of the invention is formed when the optional additional magnetic control layers 440 and 445 are omitted. In this embodiment, formation of magnetic control wells 427 and 429 is omitted when pole well 425 is formed during the etching of DLC frame 400. First magnetic pole 430 and second magnetic pole 435 are plated in pole well 415 as before. However, since there are no control wells 427 and 429 which require refilling with DLC, the step of depositing an upper DLC layer 565 is omitted. The upper surface of the head 100 thus formed is still machined to shape or contour gap region 550 and magnetic poles 430 and 435. In this embodiment, gap region 550 and magnetic poles 430 and 435, and DLC frame 400 are provided with a substantially flat contour whereas other embodiments are possible wherein this contour is rounded or curved.

It is noted that magnetic poles 430 and 435 are advantageously directly coupled to side poles 265 and 270, respectively, without the use of intermediate layers therebetween in one particular embodiment. Magnetic poles 430 and 435 are simultaneously fabricated and are situated entirely in the same plane as the DLC wear layer 400' in one embodiment.

Another embodiment of the present invention will be described with reference to FIGS. 38 to 56.

As clear from FIGS. 24A and 24B of the aforesaid embodiment, the DLC layer 400 covers at least the top of the magnetic yoke 145 and the immediately surrounding area of the head.

Patterning and reactive ion etching steps are performed to form DLC frame 400', thereby forming pole support wells 415 and 420 which together exhibit a bow-tie like shape as shown in FIGS. 38A and 38B. Pole wells 415 and 420 each exhibit a substantially triangular shape in which vertices 415A and 420A are truncated so as to be substantially parallel to each other and form a DLC gap region or section 425 therebetween. Alternatively, pole wells 415 and 420 can exhibit other geometries such as substantially rectangular, for example. In one embodiment of the invention, the spacing, W_{V}, between truncated vertices 415A and 420A is approximately 10-20 microns. Truncated vertices 415A and 420A form the narrow ends of pole wells 415 and 420 while the wide ends of the pole wells are designated as wide ends 415B and 420B as shown in FIG. 38A. As part of the same reactive ion etching step, the portion of silicon adhesion layer 410 between side poles 265 and 270 is ion etched away to expose seed layer 405 to permit subsequent pole plating thereon.

Pole wells 415 and 420 are excavations in DLC wear layer 400' in which respective magnetic upper pole piece support members 430 and 435 (not shown in FIG. 38A, 38B) will be formed. More particularly, magnetic upper pole piece support members 430 and 435 are plated atop magnetic side poles 265, 270 and seed layer 410 to the top of pole wells 415 and 420 as shown in FIGS. 39A and 39B. Although support members 430 and 435 are situated atop magnetic side poles 265 and 270, side poles 265 and 270 are visible in FIG. 39A via dashed lines.

Another seed layer 440 of material suitable for plating such as Cr-Ni-V is patterned atop the upper surface of partially complete head 100 as shown in FIG. 40B. The lift-off process described earlier is used to pattern seed layer 440 with openings 442 as illustrated. It is noted that in this particular embodiment, seed layer 440 extends partially over the pole wells.

A first upper pole piece extension 445 is patterned on the upper surface of head 100 of FIG. 40B. Pole piece extension 445 extends from pole piece support member 430 toward a gap end 445A. Pole piece extension 445 thus in this particular embodiment includes a gap end 445A which is relatively narrow and a wide and 445B which is relatively wide as seen in FIG. 40A. Magnetic control regions 450 and 455 are plated at the same time that upper pole piece extension 445 is plated. In actual practice, to plate extension 445 on pole piece support member 430 and seed layer 440, the upper surface of head 100 is covered with photoresist (not shown) except for the portion thereof where extension 445 is to be plated. Extension 445 is then plated using magnetic material as the plating material. More particularly, extension 445 is plated atop pole piece support member 430 and seed layer 440. The photoresist layer is then washed away leaving plated extension 445 in the position shown in FIG. 40B.

A substantially rectangular gap region 460 of non-magnetic material is plated adjacent pole end 445A as shown in FIGS. 41A and 41B. One non-magnetic material which may be used to fabricate gap region 460 is NiP. More particularly, the upper surface of partially complete head 100 of FIGS. 41A and 41B is covered with a layer of photoresist (not shown) having an opening at the location where gap region 460 is to be plated. Plating is then conducted atop seed layer 440 through the photoresist opening. The photoresist layer is removed to form gap region 460 as illustrated. Gap region 460 is actually situated between first pole piece extension 445 and a second pole piece extension 465 which is now described.

A second upper pole piece extension 465 is patterned on the upper surface of head 100 of FIGS. 41A and 41B. Pole piece extension 465 extends from pole piece support member 435 toward a gap end 465A. In this particular embodiment, pole piece extension 465 includes a gap end 465A which is relatively narrow and a wide end 465B which is relatively wide as seen in FIG. 41A. Magnetic control regions 470 and 475 are plated at the same time that upper pole piece extension 465 is plated. In actual practice, to plate extension 445 on pole piece support member 435 and seed layer 440, the upper surface of head 100 is covered with photoresist (not shown) except for the portion thereof where extension 465 is to be plated. Extension 465 is then plated atop pole piece support member 435 and seed layer 440 using magnetic material as the plating material. The photoresist layer is then washed away leaving plated extension 465 in the position shown in FIG. 40B, namely atop seed layer 440 and support member 435 and overlapping gap region 460.

At the same time that pole piece extension 445 is plated, additional magnetic control layers 450 and 455 are plated atop head 100 to enhance the plating of extension 445. Likewise at the same time that pole piece extension 465 is plated, additional magnetic control layers 470 and 475 are plated atop head 100 for the same purpose. While optional, it has been found that plating additional magnetic control layers 450, 455 and 470, 475 serves to better control local plating current density. Such current density influences NiFe composition and enhances the effect of the easy axis magnetic orienting field. Magnetic yoke 145 including bottom magnetic layer 150, side poles 266, 270, upper pole piece extensions 430, 435 and pole piece extensions 445, 465 are all subjected to an easy axis magnetic orienting field of approximately 1000 Gauss to approximately 10,000 Gauss, provided by an external magnet. This action gives a desired magnetic domain structure to pole piece extensions 445, 465 and the other components of magnetic yoke 145.

While in the particular embodiment of head 100 illustrated in FIG. 41A, gap region 460 exhibits a substantially rectangular shape, other shapes for gap region 460 may be used as well as long as the selected shape spans the region between narrow gap end 445A and narrow gap end 465A. For example, gap region 460 may exhibit circular, elliptical or other geometries.

After first upper pole piece extension 445 and second upper pole piece extension 465 are formed as described above, magnetic control regions 450, 455, 470 and 475 are removed by etching. To accomplish this, the upper surface of head 100 of FIG. 41A is covered with photoresist which is patterned to leaving openings which expose these control regions to etchant. The photo-resist is then washed away. In this manner, the partially complete head 100 of FIGS. 42A and 42B is formed.

A silicon adhesion layer 480 is then sputtered on the uppermost surface of head 100 as shown in FIG. 43B. A DLC wear layer 485 is deposited atop silicon adhesion layer 480 as shown in FIG. 43B using the same process described earlier. More specifically, DLC layer 485 is deposited on top of adhesion layer 480 by chemical vapor deposition or other suitable deposition technique. DLC layer 485 is then patterned and etched away from the upper surface of head 100 except for the portion of DLC layer 485 atop DLC frame 400'. In this manner, the DLC layer 485' shown in FIGS. 43A and 43B is formed and shaped.

DLC layer 485', upper pole piece extension 445, upper pole piece extension 465 and gap region 460 are machined down or lapped to from an upper contoured surface 490 as illustrated in FIG. 44B. Contoured DLC layer 485'', extension 445', extension 465' and gap region 460' are thus shaped. The direction of motion of the media (not shown) upon which head 100 records and plays is indicated by arrow 495. The leading portion 490A of contoured surface 490 exhibits a substantially convex shape in this particular embodiment. In this particular embodiment, leading portion 490A exhibits a radius of approximately 5 to approximately 15 microns. After machining, gap region 460' exhibits a substantially L-shaped cross section.

In an alternative embodiment of thin film head 100, instead of forming gap region 460 from a relatively soft non-magnetic material such as NiP, gap region 460 is formed from relatively hard diamond-like carbon (DLC) material substantially. In this approach, a DLC layer 500 is deposited on the upper surface of the partially complete head 100 of FIG. 39 to form the head structure shown in FIG. 45. DLC layer 500 is then patterned with photoresist (not shown) and etched such that pole extension wells 505 and 510 are formed in DLC layer 500 as shown in FIGS. 46A and 46B. In this particular embodiment, pole extension wells 505 and 510 are each substantially triangular in shape. Pole extension well 505 includes a substantially rectangular gap end 505A at the central vertex of the triangle. Similarly, pole extension well 510 includes a substantially rectangular gap end 510A at the central vertex of the triangle. A DLC gap region 515 is thus formed between pole extension wells 505 and 510 as illustrated.

At the same time that pole wells 505 and 510 are etched, magnetic control wells 520 and 525 are etched. Also at this same time, DLC layer 500 is etched such that any DLC material laterally outside of the boundary of DLC frame 400' is removed. In actual practice, to form wells 505, 510, 520, 525 and remove DLC outside of the DLC frame 400', a layer of photoresist (not shown) is deposited atop the partially complete head 100. This photoresist layer is patterned to include openings for the portions of DLC layer 500 to be etched away. The photoresist is then subjected to reactive ion etching which etches away the above-specified areas of DLC layer 500 thus forming an etched DLC layer 500' as shown in FIGS. 46A and 46B.

A seed layer 530 of electrically conductive material suitable for plating is sputtered in pole extension wells 505, 510 and control wells 520, 525 thus forming seed layers 530A, 530B, 530C and 530D, respectively. For example, seed layer 530 may be fabricated from Cr-NiV, namely, a chrome or other adhesion-promoting layer followed by a non-magnetic nickelvanadium 7% film. To make sure that seed layer 530 is only formed in pole wells 505, 510 and control wells 520, 525, the remainder of head 100 is covered with protective photoresist (not shown) during sputtering of the seed layer. After seed layer 530 is formed, the photoresist is then washed away leaving the structure shown in FIGS. 47A and 47B.

Alternatively, and in actual practice, seed layer 530 may be formed on the surface of DLC layer 400' prior to the formation of DLC layer 500. This is accomplished in substantially the same manner as in the earlier described "lift-off" process. In this approach, photoresist (not shown) is deposited on the surface of DLC layer 400' and extending over pole piece support members 430 and 435. The photoresist is photopatterned to cover the upper surface of DLC layer 400' and pole piece support members 430 and 435 except for the locations intended to become pole wells 505, 510 and control wells 520, 525 shown in FIGS. 47A and 47B. A layer 530 of electrically conductive material such as Cr-NiV is then deposited on the photoresist layer. The "lift-off" process is then used to remove all portions of the Cr-NiV layer which covers the photoresist layer, thus leaving seed layers 530A, 530B and 530C, 530D. The head fabrication process then continues with the formation of DLC layer 500 and the etching of pole wells and control wells therein.

Pole extension wells 505, 510 are then plated full with a magnetic material such as NiFe to form pole piece extensions 535 and 540 in pole extension wells 505 and 510, respectively. Simultaneously with plating pole piece extensions 535 and 540, magnetic control regions 545 and 550 are plated in magnetic control wells 520 and 525, respectively. A pole piece structure including pole piece extensions 535 and 540 with a DLC gap region 515 therebetween is thus formed as shown in FIGS. 48A and 48B.

The plated material and seed layer in magnetic control wells 520 and 550 is then removed by etching after masking off the remainder of head 100 with protective photoresist which is subsequently washed away. A layer of DLC (not shown) is then deposited on the upper surface of head 100 of FIG. 48B to refill magnetic control wells 520 and 525. The upper surface of head 100 is then machined down as described above with respect to FIG. 44B to provide a contoured surface for the head. While head 100 is provided with a contoured surface in the embodiment described above, an alternative embodiment of head 100 uses a substantially flat upper surface. In this embodiment, the DLC layer which fills magnetic control wells 520 and 525 is machined down such that the upper surface of head 100 exhibits a substantially flat profile such as shown in FIG. 48B.

A simplified embodiment of the invention is formed when the optional additional magnetic control layers 545 and 550 are omitted. In this embodiment, formation of control wells 520 and 525 is omitted when pole wells 505 and 510 are formed by etching DLC frame 500. Pole piece extensions 535 and 540 are plated in pole extension wells 505 and 510 as before. However, since there are no control wells 520 and 525 which require refilling with DLC, the step of depositing a layer of DLC to refill the control wells is omitted.

Another embodiment of the invention is illustrated in FIGS. 49A and 49B. Rather than etching seed layer 275 complete out between side poles 255 and 270, seed layer 275 is removed between side pole 255 and frame 325. Seed layer 275 is also removed from the gap region between first pole 315' and second pole 320'. Seed layer 275 remains in position above the region between the two side poles 255 and 260 where it is available for plating first pole piece extension 315' and second pole piece extension 320'.

An elevating layer is now formed by plating. More specifically, as shown in FIG. 50B, an insulating layer 301 is patterned in photoresist and E-beam cured to define three edges, 316A, 316B and 316C of first pole 316 and three edges 321A, 321B and 321C of second pole 321. Photomask is used to define the remaining edges 316D and 321D. The opening defined by edges 316A-316D and the opening defined by edges 321A-321D are then plated with a magnetic material such as NiFe as shown in FIG. 50B to form third pole piece extension 316 on top of first pole piece extension 315' and to form fourth pole piece extension 321 on top of second pole piece extension 320'.

The earlier described lift-off process is performed with photoresist covering areas 117A and 117B on the substrate surface (see FIG. 3) and extensions 316 and 321 on the pedestal to form a Cr-NiV seed layer 361. Seed layer 361 is situated between extension 316 and 321 as shown in FIG. 51.

A DLC frame 600 and gap region are now formed atop the structure of FIG. 51 in a manner similar to that of the embodiment shown in FIGS. 29 to 37. A silicon adhesion layer 605 is sputtered on the exposed upper surface of head 100 as seen in FIG. 17. A layer of hard durable material 600 such as diamond-like carbon (DLC) is then deposited on adhesion layer 605. Adhesion layer 605 enables DLC layer 600 to stick to the upper surface of head 100. This silicon adhesion layer typically exhibits a thickness within the range of approximately 400A° to approximately 1000A°. DLC layer 600 is patterned and reactive ion etched to remove portions thereof outside of frame 325 thus forming a DLC frame 600 which surrounds frame 325. DLC frame 400 exhibits a Knoop hardness greater than 700 Knoop and preferably greater than 800 Knoop. The hardness of protective layer 400 should be within the range of greater than approximately 700 Knoop to approximately 2000 Knoop. For simplicity, silicon adhesion layer 605 is not shown in the subsequent drawings.

As part of these patterning and reactive ion etching steps which form DLC frame 600, DLC layer 600 is patterned and etched to form a pole well 615. A first magnetic pole 620 is plated in pole well 615 atop extension 316 and seed layer 361 to pole well 615 up to a level even with the top of DLC frame 600 as shown in FIG. 53. First magnetic pole 620 is electrically and magnetically coupled to side pole 265.

A layer of DLC is then deposited by chemical vapor deposition on the uppermost surfaces of the partially formed head 100, such DLC layer then being patterned and reactive ion etched to leave a DLC gap region 625 remaining as shown in FIG. 54. In more detail, a DLC layer (not shown) is deposited by the deposition process described earlier over all the substrate or wafer on which the partially formed head 100 (and other like heads 100) are situated. This DLC layer is then masked off with photoresist so as to only expose the DLC layer at the location of gap region 625 which is shown in FIG. 54. A DLC gap region 625 is thus formed by removal of this DLC layer except for the portion thereof in gap region 625. Reactive ion etching is used to achieve removal of the exposed portions of the DLC layer.

Preparations are now made for the plating of second magnetic pole 630 on seed layer 361 in well 615 as shown in FIG. 55. To implement this plating only in the areas specified above, the remaining areas of the upper surface of partially completed head 100 are covered with photoresist (not shown). NiFe plating is then conducted to form second magnetic pole 630. The photoresist is then removed leaving the pole/gap structure shown in FIG. 55. DLC layer 600 is then machined down or lapped to form a substantially planar top surface 600A as shown in FIG. 56.

In each of the aforesaid embodiments, as shown in FIGS. 17A to 19B, DLC wear layer 385' is machined or lapped as shown in FIG. 19B to expose magnetic gap region 360 as shown in both FIGS. 19A and 19B. DLC wear layer 385' protects head 100, specifically gap region 360 and magnetic poles 345 and 365 from wear when head 100 is brought into contact with a magnetic media for recording or playback purposes. By using the techniques described herein, very narrow gap regions can be produced. The gap width, *W*_{*G*}_{₁} is defined to be the width of gap region 360, namely the distance between gap end 345A and gap end 365A as seen in FIG. 19B.

Unfortunately, as discussed earlier, when the upper surface of head 100 is machined in the manner of the aforesaid embodiments, the soft pole material of poles 345 and 365 may recede below the plane of upper wear layer surface 385A as shown in FIG. 58 from the state of FIG. 57. When this condition occurs, poles 345 and 365 may not be as near to the magnetic media as desirable. To correct this condition, after the machining or lapping step, head 100 or an array of heads 100 on a common substrate is placed on a cathode 500 in an enclosed chamber 505 suitable for plasma etching as shown in FIG. 59. A vacuum pump 510 is coupled to chamber 505 and is activated to pump down and maintain the pressure in chamber 505 within the range of approximately 8 × 10⁻² Torr to approximately 1 × 10⁻¹ Torr.

Chamber 505 is filled with a gas mixture suitable for plasma etching of DLC wear layer 385'. This gas mixture is supplied to chamber 505 by a gas mixture supply 505 which is coupled to chamber 505 by a valve 520. Suitable gas mixtures for supply 515 are oxygen, or oxygen and chlorofluoro carbon, or oxygen and fluorocarbon gas, for example. The etching gas pressure is set between approximately 1 × 10⁻² Torr and 1 × 10⁻¹ Torr.

Radio frequency electrodes 525, namely cathode 500 and anode 525, are situated within chamber 505. Electrodes 525 are coupled to a radio frequency exciter 530 which excites electrodes 525 with a radio frequency signal exhibiting a frequency of approximately 13.56 MHz. Acceptable power density output levels for radio frequency exciter 530 are found to be within the range of approximately .5 Watts/cm² to approximately 1.4 Watts/cm², for example. The radio frequency power supplied to electrodes 525 must be sufficiently large to excite the gas mixture within chamber 505 into a plasma and to etch the DLC or other substance employed for wear layer 385'. The DLC wear layer 385' is etched at the controlled rate of 100-500A°/minute so as to not damage magnetic poles 345 and 365. The amount of DLC wear layer removed is usually less than approximately 500A° and in general the plasma etching time is less than approximately 5 minutes. At the low power density used at a pressure of approximately 1 × 10⁻² Torr, there does not appear to be significant heating of the head being etched, nor does the oxygen-based plasma attack the exposed NiFe pole material.

Etching is continued until wear layer 385' is at substantially the same height as the exposed upper surface of magnetic poles 345 and 365. In this manner, wear layer 385' becomes substantially level with magnetic poles 345 and 365. After etching, the wear layer is designated as etched wear layer 385'' as shown in FIG. 9. At this height, poles 345 and 365 will be as close to the magnetic media as possible and yet head wear protection will still be provided by wear layer 385''. In this particular embodiment, the thickness of magnetic poles 345 and 365 is approximately 5µ and the thickness of etched wear layer 385'' is approximately 5µ.

An embodiment of a thin film magnetic head provided with a magnetic shield layer will be described with reference to FIGS. 61 to 77.

In this embodiment, like parts corresponding to those of the aforesaid embodiments are marked with the same references or symbols and the detailed explanation thereof will be omitted.

At the same time that via caps 120A and 120C are formed, bottom shield 114 also serving as a cap of the via hole 112B is also fabricated as shown in FIG. 61. Bottom shield 114 is conveniently fabricated from the same material as via caps 120A and 120C such as NiFe although other metallic materials suitable for shielding may also be employed. Shield 114 can be fabricated from any soft magnetic material. Bottom shield 114 includes a cap portion 114A which covers via connective member 112B. Bottom shield 114 also includes a main shield base portion 114B upon which the head structure will be subsequently fabricated. Bottom shield 114 further includes a connective portion 114C which electrically couples cap portion 114A to main shield base portion 114B as shown in FIG. 61A.

Since bottom shield 114 can be conveniently fabricated at the same time that via caps 120A and 120C are fabricated, the same photoresist layer (not shown) which is used to make via caps 120A and 120C is patterned to include not only openings for the plating of via caps 120A and 120C, but also an opening for the plating of bottom shield cap portion 114A, bottom shield main base portion 114B and shield connective portion 114C. Shield 114 is then plated at the same time as via caps 120A and 120C. The photoresist layer is then removed. The exposed seed layer 115 is then sputter etched to remove seed layer 115 except for the portions thereof below via caps 120A and 120C and shield 114 this state is shown in FIG. 62.

An electrically insulative base layer 121 is patterned on the upper surface of shield 114 of head 100 as shown in FIGS. 63A and 63B. In this particular embodiment, insulative base layer 121 is formed from photoresist. Insulative base layer 121 covers bottom shield main base portion 114B. Insulative base layer 121 is electron beam cured.

A seed layer 130 of metallic material such as Cr-NiV is formed by using a lift-off process wherein a layer of photoresist (not shown) is patterned to cover areas 117A and 117B of FIG. 63A. Cr-NiV seed layer 130 is then sputtered over head 100. The photoresist is then stripped thus lifting off the sputtered Cr-NiV film from areas 117A and 117B. The remaining portion of seed layer 130 forms a ground structure 125 as shown in FIG. 63A. In FIG. 63A, a wavy line 127 is drawn exterior to head 100 to indicate that head 100 is being fabricated on a wafer or substrate which is in common with other similarly fabricated heads.

Then, an insulative layer 135 and a bottom magnetic layer 150 are formed on the insulative base layer 121 and the seed layer 130 in the same manner shown in FIGS. 4A and 4B. In this case, the bottom magnetic layer 150 of magnetic yoke 145 and the bottom layer 146 of a side shield 147 are plated at the same time. For ease of fabrication, bottom magnetic layer 150 and side shield 147 are plated from the same material, for example, NiFe. Bottom magnetic layer 150 is plated up to a plane substantially level with the top of insulative layer 135. To plate bottom magnetic layer 150 and bottom layer 146, the remainder of the upper surface of head 100 is masked with protective photo-resist except for these regions. Plating is then conducted and the photoresist is removed thus leaving bottom magnetic layer 150 and bottom shield layer 146 as shown in FIG. 64B. It is noted that side shield 147 is built up from a series of layers (later described), of which layer 146 is the first, to substantially surround insulative layer 135 and the structures which are subsequently fabricated thereon.

In FIG. 65B, at the same time that magnetic side pole portions 165 and 170 are being plated, side shield layer 172 of side shield 147 is plated atop side shield layer 146.

Then, as shown in FIGS. 66A and 66B, an insulative layer 200 is formed in the same manner shown in FIGS. 8A and 8B.

Magnetic side pole portions 220 and 225 are plated on side pole portions 175 and 180, respectively, as shown in FIGS. 67A and 67B. Side pole portions 220 and 225 are plated with a magnetic material such as NiFe up to a level even with that of insulative layer 200. At the same time that magnetic side pole portions 220 and 225 are plated, side shield layer 222 of side shield 147 is plated atop side shield layer 172 as shown in FIG. 67B. In this particular embodiment, both side pole portions 220 and 225 are fabricated from magnetic material such as NiFe. To actually conduct the plating operation which forms side pole portions 220, 225 and side shield 222, the remainder of the upper surface of head 100 except for these regions is covered with a layer of patterned photoresist (not shown). Plating is then carried out at side pole portions 220, 225 and side shield 222. The photoresist layer is then removed.

Then as shown in FIG. 68A, at the same time that side pole portions 255 and 260 are plated, side shield layer 262 is plated atop side shield layer 222. To plate magnetic side pole portions 255 and 260 and side shield layer 262, the remainder of the upper surface of head 100 except for the regions in which these structures are to be formed is covered with a patterned photoresist layer (not shown). The photo-resist layer is removed subsequent to plating, thus leaving the structure shown in FIG. 68B.

Subsequently, insulative pedestal 300 is patterned to include open regions 305 and 310 in which side poles portions 315 and 320 are plated as shown in FIG. 69A. At the same time that side pole portions 315 and 320 are plated, a cover shield 322 is also plated as shown in FIGS. 69A and 69B. Cover shield 322 overlaps and extends from side shield 147 to substantially cover the upper surface of the region above coil layers 190, 235 except for pedestal 300. The completed side shield 147 substantially encircles and surrounds the multiple insulative layers which form the main body of head 100. Side shield 147 appears as a vertical wall in FIG. 69B, namely a vertical wall which substantially surrounds or encircles the coil structure of the head as shown in FIG. 69A. Cover shield 322 acts as a substantially sealing cover for side shield 147. Cover 322 meets with the uppermost layer of side shield 147 as shown in FIG. 69B. Hereinafter, a head gap is formed in the same manner as the aforesaid embodiment as shown in FIGS. 70 and 76.

In the embodiment of the invention described above, magnetic yoke 145 is electrically isolated from the shield. This isolation is achieved by an insulative base layer 121 which is situated between shield layer 114 and seed layer 130 upon which bottom magnetic layer 150 of yoke 145 rests. FIGS. 77A and 77B show a modification to the head 100 described above wherein magnetic yoke 145 is electrically coupled to the shield. The modified head is designated head 100'. To fabricate such a head 100', the head is fabricated as described earlier up to and including the step of forming shield 114. The upper surface of partially complete head 100' is then patterned with an insulative layer 135 of photoresist to include on opening at the location where bottom magnetic layer 150 will be plated and an opening where bottom side shield layer 146 will be plated. Plating of bottom magnetic layer 150 and bottom side shield layer 146 is then conducted in the respective openings of photoresist layer 135 to form the partially complete head structure 100' shown in FIG. 77B.

In comparing the partially complete head 100 of FIG. 64B with the partially complete head 100' of FIG. 77B, it is noted that in FIG. 64B the level of bottom side shield layer 146 is below that of insulative layer 135, whereas in FIG. 77B the level of bottom side shield layer 146 is even or planar with insulative layer 135. In view of this difference, the remaining upper layers of head 100' are fabricated in substantially the same manner as with head 100 with the following modification. Since bottom side shield layer 146 is already planar with insulative layer 135 in head 100' as shown in FIG. 77B, the side shield 147 of the head 100' embodiment will omit side shield layer 172 of FIG. 65B. Other than this modification, subsequent fabrication of head 100' continues as before.

FIG. 78 is a plan view showing a plurality of heads of the aforesaid embodiment formed on a common substrate.

FIG. 79A shows a top plan view of an embodiment of the invention which is compatible with magnetic media exhibiting different track widths. More specifically, FIGS. 79, 80 show a head assembly 600 which includes a plurality of heads exhibiting different pole piece and gap geometries. Head assembly 600 is similar to head 100 described above except for the following differences. Head assembly 600 has the same substrate 105 as head 100 except that the substrate is enlarged to accommodate the particular number of heads to be situated on the substrate. Three different heads 601, 602 and 603 are included in this particular embodiment of the head assembly. Substantially the same fabrication techniques as described earlier in this document can be used to fabricate head assemblies with two, three, four or more heads on a common substrate wherein two or more of the heads on the substrate exhibit different pole piece or gap geometries.

Main body 390 of head assembly 600 is similar to main body 390 of head 100 of FIG. 19 except that the main body of head assembly 600 is laterally extended to accommodate multiple heads as depicted in the cross section of head assembly 600 shown in FIG. 80B. Main body 600 can exhibit different geometries, for example a substantially circular geometry or a substantially rectangular geometry. Whereas head 100 included a single magnetic yoke 145, head assembly 600 of FIGS. 79 and 80 includes magnetic yokes 145A, 145B and 145C. Magnetic yokes 145A, 145B and 145C are built up within insulative layers 135, 160, 200 and 240 in substantially the same manner as that magnetic yoke 145 was built up in head 100. Magnetic side poles 255A, 255B, 255C and 260A, 260B, 260C are thus built up layer by layer in the process of forming magnetic yokes 145A, 145B and 145C. Whereas head 100 included a single lower coil layer 190 and a single upper coil layer 235, head assembly 600 includes lower coil layers 190A, 190B, 190C and also includes upper coil layers 235A, 235B, 235C. The heads of head assembly 600 thus share a common main body 390. In the particular embodiment depicted in FIG. 79, heads 601, 602 and 603 are in horizontal alignment as drawn. However, it should be noted that heads 601, 602 and 603 can also be positioned in a staggered fashion.

Lower coil layer 190A and upper coil layer 235A are connected together at a common end. The remaining two ends of lower coil layer 190A and upper coil layer 235A are coupled to via connective members 112A and 112C by connective strips 195A and 237A, respectively. Lower coil layer 190B and upper coil layer 235B are also connected together at a common end. The remaining two ends of lower coil layer 190B and upper coil layer 235B are coupled to via connective members 112D and 112E by connective strips 195B and 237B, respectively. Lower coil layer 190C and upper coil layer 235C are likewise connected together at a common end. The remaining two ends of lower coil layer 190C and upper coil layer 235C are coupled to via connective members 112F and 112G by connective strips 195C and 237C respectively.

Insulative pedestal 300 of head assembly 600 is formed in substantially the same manner as pedestal 300 of head 100 with frame 325 surrounding pedestal 300 to provide structural integrity thereto. Pedestal 300 is situated atop main body 390 as shown in FIG. 80. While in this particular embodiment, pedestal 300 is substantially rectangular, it is not so constrained. Rather, pedestal 300 may assume other geometries consistent with the particular application, for example, a substantially circular geometry. Grounding connective strip 295, which is atop seed layer 130, forms a connection between via connective member 112B and magnetic yokes 145A, 145B and 145C. Magnetic yokes 145A, 145B and 145C are grounded in this manner. Connective strip 295 and via connective member 112B can be eliminated if grounding of the magnetic yokes is not desired in a particular application. All of the heads of head assembly 600 share pedestal 300 in common.

Magnetic poles 345A, 345B and 345C of head assembly 600 are fabricated in substantially the same manner as pole 345 of head 100. Gap regions 360A, 360B and 360C are fabricated in substantially the same way as gap region 360 of head 100. And finally, magnetic poles 365A, 365B and 365C are made in substantially the same way as magnetic pole 365 of head 100. The built-up side poles 255A, 255B, 255C and 260A, 260B, 260C to which the described magnetic poles are plated or otherwise formed are visible in FIG. 79.

At the top surface of the head assembly 600 thus formed, the three heads are surrounded by a durable wear layer 385 fabricated from diamond like carbon (DLC) in a manner similar to DLC layer 385 of head 100. DLC layer 385 is situated atop insulative pedestal 300. DLC wear layer 385 includes portions 385A and 385B which are situated between the heads as shown in FIGS. 79 and 80.

In the top plan view of head assembly 600 of FIG. 79, each of the three heads of head assembly 600 exhibits a different head geometry. It is noted that the geometry of the magnetic poles and the geometry of the gap region of a head together determine the geometry of that particular head. In this particular example, head 601 exhibits a substantially symmetric head geometry, namely a geometry wherein poles 345A and 365A have the same shape. The gap region 360A of head 601 is centered between side poles 255A and 260A. While other pole shapes may be used, in this example, poles 345A and 365A are each somewhat triangular and together exhibit a substantially bow-tie like shape as seen in FIG. 81A. FIG. 81A is a simplified top plan view of a portion of the upper surface of head 601. The track width, W_{G}, of head 601 is approximately 18 microns and the gap length, L_{G}, is approximately .8 microns. Head 601 is compatible with magnetic media exhibiting a track width of approximately 18 microns in this example.

FIGS. 81B and 81C are simplified top plan views of a portion of the upper surfaces of heads 602 and 603, respectively. Heads 602 and 603 are asymmetric heads in that the gap regions of these heads are not centered between the side poles of each head. Rather, the gap region of each head is offset with respect to a center line (not shown) half way between the side poles of the head. The track width, W_{G}, of head 602 is approximately 8 microns and the gap length, L_{G} is approximately .3 microns. Head 602 is compatible with magnetic media exhibiting a track width of approximately 8 microns in this example. In comparison, head 603 exhibits a track width, W_{G}, of approximately 12 microns and a gap length, L_{G}, of approximately .5 microns. Head 603 is compatible with magnetic media exhibiting a track width of approximately 12 microns in this particular example. The particular track widths, gap lengths and media track sizes are given for purposes of illustration and should not be taking as being limiting. It should be appreciated that these values will vary according to the particular application.

While in the example of head assembly 600 depicted in FIG. 79, three different geometry heads are shown, one of these heads can be omitted to form a head assembly with two heads wherein each head exhibits a different pole piece geometry. A structure is also contemplated wherein the head assembly 600 includes three or more heads and at least two of the heads of the head assembly exhibit different pole piece geometries.

While the two coil layers, that is, the upper and lower coil layers are provided in each of the aforesaid embodiments, the present invention is not limited thereto and three or more coil layers may be formed in a laminated fashion in the same manner as the aforesaid embodiments.

The foregoing has described a thin film magnetic head in which the lower element of the magnetic yoke and two side poles are built up from a common seed layer, namely seed layer 130. Advantageously, the disclosed thin head achieves a very narrow gap width which results in correspondingly high density magnetic recording capabilities. The thin film head can be fabricated without excavating a recess within the substrate to contain the head. Moreover, the disclosed thin film head can be fabricated in large quantities using thin film semiconductor fabrication equipment.

Advantageously, the disclosed thin head achieves substantial planarity in the main body of the head and further exhibits a very narrow gap width which results in correspondingly high density magnetic recording capabilities.

It is clear that a method of fabricating such a magnetic head apparatus is also disclosed. Briefly, a method of fabricating a thin film magnetic head is provided which includes the step of depositing a first seed layer on a substrate. The method also includes the step of plating a lower magnetic layer on the first seed layer, the lower magnetic layer having first and second opposed ends, the first seed layer being the seed for plating the lower magnetic layer. The method further includes the step of plating a plurality of layers of magnetic material at the first end of the lower magnetic layer to build-up a first side pole having a first top end, this plating step using the first seed layer as a common seed for the build-up of the plurality of layers of the first side pole. The method includes the step of plating a plurality of layers of magnetic material at the second end of the lower magnetic layer to build-up a second side pole having a second top end, this plating step using the first seed layer as a common seed for the build-up of the plurality of layers of the second side pole. The method also includes the step of forming a coil structure about one of the first and second side poles. The method further includes the step of forming an insulative body about the first and second side poles and the coil structure. The method still further includes the step of forming an insulative pedestal above the insulative body, the first and second top ends extending through the pedestal. The method includes the step of depositing a second seed layer including first and second portions on the insulative pedestal except for the first and second top ends extending through the pedestal. The method also includes the step of depositing a first upper magnetic pole element at the first top end an on the first portion of the second seed layer, the first upper magnetic pole element including a first gap end extending toward the second top end. The method further includes the step of forming a gap region of nonmagnetic material at the first gap end of the first upper magnetic pole element. The method still further includes the step of depositing a second upper magnetic pole element at the second top end and on the second portion of the second seed layer, the second upper magnetic pole element including a second gap end situated adjacent the gap region. The method also includes the step of removing the second layer except for portions of said second seed layer below the first and second upper magnetic pole elements and the gap region. The method further includes the step of forming a diamond-like carbon (DLC) frame above the insulative pedestal and surrounding the first and second upper magnetic pole elements and gap region to provide structural integrity to the head and wear protection therefor.

The disclosed head desirably exhibits enhanced wear characteristics.

Further, the via connective members are protected from potential adverse effects of etching steps used to fabricate the head.

The foregoing has described a thin film magnetic head in which head wear is significantly reduced. The disclosed head exhibits a narrow gap width within the range of approximately 0.5 micron to approximately 1 micron which results in correspondingly high density magnetic recording capabilities.

A method of eliminating pole recession in a thin film magnetic head is thus provided. The disclosed thin film head fabrication process results in a head which features significantly reduced head wear. The disclosed fabrication process also achieves a thin film head in which the poles are close to the media used for recording and playback.

The disclosed head exhibits a narrow gap width within the range of approximately .2 microns to approximately 1 micron which results in correspondingly high density magnetic recording capabilities. Advantageously, the disclosed thin film head can be fabricated in large quantities using thin film semiconductor fabrication equipment.

The disclosed head exhibits a narrow gap width, W_{G}, within the range of approximately .2 microns to approximately .8 microns which results in correspondingly high density magnetic recording capabilities.

While a thin film magnetic head assembly has been described above, it is clear that a method of fabricating such a thin film magnetic head assembly is also disclosed. Briefly, a method of fabricating a thin film magnetic head assembly on a substrate is provided which includes the step of forming an insulative main body on the substrate from a plurality of layers of insulative material. The method includes the step of forming a plurality of magnetic yokes on the substrate and within the main body during the forming of the insulative main body. The method also includes the step of forming a plurality of coil structures within the main body and magnetically coupled to respective magnetic yokes. The method further includes the step of forming a pedestal of insulative material situated atop the main body and exhibiting a lateral dimension less than that of the main body, the pedestal protruding upwardly away from the main body and substrate. In accordance with the method, the step of forming a plurality of magnetic yokes step further includes forming each magnetic yoke to include a pole piece pair situated atop the pedestal, each pole piece pair including first and second magnetic pole pieces. Each magnetic yoke extends through the pedestal to integrally couple to its respective pole piece pair, a respective gap region being formed between the first and second pole pieces of each pole piece pair. The method provides that a plurality of the magnetic yokes include pole piece pairs which exhibit different pole piece geometries.

The foregoing has described a thin film magnetic head assembly which includes a plurality of heads exhibiting different pole piece geometries. Advantageously, the disclosed thin film head achieves a very narrow gap width for recording and playback on high density magnetic media and further includes a wider gap width for recording and playback of less dense magnetic media.

## Claims

1. A thin film magnetic head comprising:
a substrate (FIG.16B, 105) having a first surface which is not recessed relative to the rest of the substrate;
a seed layer (115) of electrically conductive material situated on the first surface of the substrate;
a first insulative layer (135) situated on the seed layer and including an open region;
a lower magnetic layer (150) plated on the seed layer and in the open region, the lower magnetic layer having first and second opposed ends;
a plurality of first side pole magnetic layers (175, 220, 255, 315) built-up by plating magnetic layer upon magnetic layer at the first end of the lower magnetic layer (150) to form a first magnetic side pole (265) including upper and lower ends;
a plurality of second side pole magnetic layers (180, 225, 260, 320) built-up by plating magnetic layer upon magnetic layer at the second end of the lower magnetic layer (150) to form a second magnetic side pole (270) including upper and lower ends;
a first upper magnetic pole element (345) situated at the upper end of the first magnetic side pole (265) and including a first gap end (345A) facing the second magnetic side pole (270);
a second upper magnetic pole element (365) situated at the upper end of the second magnetic side pole (270) and including a second gap end (365A) facing the first gap end (345A); and
a gap region (360) of nonmagnetic material situated between the first gap end and the second gap end.

2. The thin film magnetic head of claim 1, characterized in that the head further comprises a coil structure (190, 235) formed around one of the first and second side poles (265, 270).

3. The thin film magnetic head of claim 2, characterized in that the head further comprises a plurality of insulative layers (200, 240) formed around the first and second side poles and the coil structure to insulate the coil structure (190, 235) from the first and second side poles (265, 270).

4. The thin film magnetic head of claim 1, characterized in that
said substrate (105) is an electrically insulative substrate including said first surface and a second surface on an opposite side of the substrate, the substrate including a via (110) between the first and second surfaces, the via including an interior side surface, said head further comprises;
a via connective member (112) of electrically conductive material situated within the via in contact with the interior side surface of the via and extending between the first and second surfaces of the substrate;
a protective via cap (120) situated atop the via connective member (112) at the first surface (105A) of the substrate;
an insulative body (200, 240) situated about the first and second magnetic side poles (265, 270) and built up from a plurality of layers of electrically insulative material;
a conductor coil layer (190, 240) of electrically conductive material situated within the insulative body (200, 240) and around one of the first and second magnetic side poles (265, 270), the coil being formed by etching portions of the coil layer with an etchant; and
an insulative pedestal (300) situated at the tops of the first and second magnetic side poles (265, 270), the insulative pedestal extending above the plane of the insulative body below and surrounding the tops of the first and second magnetic side poles, wherein
the via protective cap (120) is fabricated of a material which is substantially resistant to etching by the etchant.

5. The thin film magnetic head of claim 1, characterized in that the head further comprises:
an insulative body (200, 240) situated about the first and second side poles (265, 270) and built up from a plurality of layers of electrically insulative material;
a conductor coil (190, 235) situated within the insulative body and around one of the first and second magnetic side poles (265, 270);
an insulative pedestal (300) situated at the tops of the first and second magnetic side poles (265, 270), the insulative pedestal extending above the plane of the insulative body below and surrounding the tops of the first and second magnetic side poles; and
a protective wear member (385') of hard material situated atop the pedestal and surrounding the first and second upper magnetic pole elements (345, 365), the protective wear member providing both structural integrity to the head and wear protection therefor.

6. The thin film magnetic head of claim 5, characterized in that the protective wear member (385') is diamond like carbon (DLC).

7. The thin film magnetic head of claim 5, characterized in that the head further comprises an adhesion layer (380) situated between the pedestal (300) and the protective wear member (385').

8. The thin film magnetic head of claim 1, characterized in that the head further comprises:
an insulative body (200, 240) situated about the first and second magnetic side poles (265, 270) and built up from a plurality of layers of electrically insulative material;
a conductor coil (190, 235) situated within the insulative body and around one of the first and second magnetic side poles (265, 270);
an insulative pedestal (300) situated at the tops of the first and second magnetic side poles (265, 270), the insulative pedestal extending above the plane of the insulative body below and surrounding the tops of the first and second magnetic side poles;
a first protective wear member (FIG. 43, 400') of hard material situated on the insulative pedestal (300) and including first and second pole support wells (415, 420) which are open to the tops of the first and second magnetic side poles below, the first and second pole support wells (415, 420) being laterally spaced apart to form a gap section of the protective wear member therebetween;
first and second pole piece support members (430, 435) of magnetic material situated in the first and second pole support wells (415, 420); and
first and second pole piece extension members (445, 465) of magnetic material situated atop the first and second pole piece support members (430, 435), wherein
the gap region (460) of nonmagnetic material is situated between the first and second pole piece extension members (445, 465), and the first and second magnetic pole piece support members (430, 435) and the first and second pole piece extension members (445, 465) constitute the first and second upper magnetic pole elements, respectively.

9. The thin film head of claim 8, characterized in that the head further comprises a second protective wear member (485') of hard material situated in the same plane as the first and second pole piece extension members (445, 465), the second protective wear member substantially surrounding the first and second pole piece extension members (445, 465), the second DLC layer including an upper surface.

10. The thin film head of claim 9, characterized in that the first and second pole piece extensions, the gap region and the upper surface of the second protective wear member together form the upper surface of the thin film head, a portion of the upper surface of the thin film head exhibiting a substantially convex contour.

11. The thin film magnetic head of claim 9, characterized in that the head further comprises another electrically conductive seed layer (405) situated between the pedestal (300) and the first protective wear member (400'), the another seed layer (405) including open regions at the tops of the first and second magnetic side poles (265, 270).

12. The thin film magnetic head of claim 11, characterized in that the head further comprises a silicon adhesion layer (410) situated on the another seed layer (405) for enhancing the adhesion of the first protective wear member to the insulative pedestal (300).

13. The thin film magnetic head of claim 1, characterized in that the head further comprises:
an insulative body (200, 240) situated about the first and second magnetic side poles (265, 270) and built up from a plurality of layers of electrically insulative material;
a conductor coil (190, 235) situated within the insulative body and around one of the first and second magnetic side poles;
an insulative pedestal (300) situated at the tops of the first and second magnetic side poles (265, 270), the insulative pedestal extending above the plane of the insulative body below and surrounding the tops of the first and second magnetic side poles; and
a protective wear member of hard material (400', FIG. 36) situated on the insulative pedestal and including a pole well (415) which is open to the tops of the first and second magnetic side poles, wherein
the first upper magnetic pole element (430') is situated in the pole well (415), the first upper magnetic pole element being above the first side pole (265) and extending toward the second side pole (270);
the second upper magnetic pole element (435') is situated in the pole well (415), the second upper magnetic pole element being above the second side pole (270) and extending toward the first side pole (265);
the gap region (550') is situated in the pole well (415) between the first and second gap ends (345A, 365A).

14. The thin film magnetic head of claim 13, characterized in that the head further comprises another electrically conductive seed layer (405) situated on the insulative pedestal (300) and below the protective wear member.

15. The thin film magnetic head of claim 14, characterized in that the head further comprises a silicon adhesion layer (410) situated on the another seed layer (405) for enhancing the adhesion of the protective wear member to the insulative pedestal (300).

16. The thin film magnetic head of claim 1, characterized in that the head further comprises:
an insulative body (200, 240) situated about the first and second magnetic side poles (265, 270) and built up from a plurality of layers of electrically insulative material;
a conductor coil (190, 235) situated within the insulative body and around one of the first and second magnetic side poles (265, 270);
an insulative pedestal (300) situated at the tops of the first and second magnetic side poles (265, 270), the insulative pedestal extending above the plane of the insulative body below and surrounding the tops of the first and second magnetic side poles;
a hard protective wear member (400', FIG. 26) situated on the insulative pedestal (300) and including first and second pole wells (415, 420) which are open to the tops of the first and second side poles below, the first and second pole wells (415, 420) being laterally spaced apart to form a hard gap region (425) between the first and second pole wells, and
first and second magnetic poles (430, 435) situated in the first and second pole wells (415, 420) and corresponding to the first and second upper magnetic pole elements, respectively.

17. The thin film magnetic head of claim 16, characterized in that the hard protective wear member is diamond like carbon (DLC).

18. The thin film magnetic head of claim 16, characterized in that the head further comprises another electrically conductive seed layer (405) situated on the insulative pedestal (300) and below the hard protective wear member, the another seed layer including open regions at the tops of the first and second magnetic side poles (265, 270).

19. The thin film magnetic head of claim 18, characterized in that the head further comprises a silicon adhesion layer (410) situated on the another seed layer (405) for enhancing the adhesion of the protective wear member to the insulative pedestal (300).

20. The thin film magnetic head of claim 1, characterized in that the head further comprises:
a bottom shield layer (114, Fig. 61 to 77) situated on the seed layer (115) and including a peripheral edge surface;
an electrically insulative layer (121) situated on the bottom shield layer (114) and under the lower magnetic layer (150);
a layered electrically insulative body (200, 240) situated about the first and second magnetic side poles (265, 270);
a coil structure (190, 235) situated within the insulative body and around one of the first and second magnetic side poles;
an insulative pedestal (300) situated at the tops of the first and second magnetic side poles, the insulative pedestal extending above the plane of the insulative body below and surrounding the tops of the first and second magnetic side poles;
a layered side shield (147, FIG. 70) situated atop the peripheral edge surface of the bottom shield layer (114) and substantially surrounding the insulative body; and
a shield cover (322) situated atop the side shield and covering the insulative body and coil structure, the shield cover including an opening through which the pedestal (300) protrudes, wherein
the first and second upper magnetic pole elements are situated on the pedestal (300).

21. A thin film magnetic head assembly, comprising:
a substrate (105) having a first surface which is not recessed relative to the rest of the substrate;
an insulative main body (390; Fig. 80) situated on the first surface of the substrate (105);
a plurality of magnetic yokes (145) situated on the substrate (105) and within the main body (390);
a plurality of coil structures (190, 235) situated within the main body (390) and magnetically coupled to respective magnetic yokes (145);
a common pedestal (300) of insulative material situated atop the main body (390) and exhibiting a lateral dimension less than that of the main body (390), the pedestal (300) protruding upwardly away from the main body (390) and substrate; and
the magnetic yokes (145) each including a pole piece pair (345, 365) situated atop the common pedestal (300), each pole piece pair (345, 365) including first and second magnetic pole pieces, each magnetic yoke (145) extending through the common pedestal (300) to integrally couple to its respective pole piece pair (345, 365), a respective gap region (360) being formed between the first and second pole pieces of each pole piece pair (345, 365), a plurality of the magnetic yokes (145) including pole piece pairs which exhibit different pole piece geometries so as to be compatible with magnetic media exhibiting different track widths.

22. The thin film magnetic head assembly of claim 21, characterized in that the pole piece geometries of the pole piece pairs (345, 365) exhibit different gap widths.

23. The thin film magnetic head assembly of claim 21, characterized in that the pole piece geometries of the pole piece pairs (345, 365) exhibit different gap lengths.

24. The thin film magnetic head assembly of claim 21 further comprising a frame (325) surrounding the insulative pedestal (300) to provide structural integrity thereto.

25. The thin film magnetic head assembly of claim 21, characterized in that a protective wear member (385) of hard material is situated atop the pedestal (300) and surrounding a plurality of pole piece pairs (345, 365).

26. The thin film magnetic head assembly of claim 21, characterized in that the insulative main body (390) includes a plurality of layers of insulative material (135, 160, 200, 240) from which the main body is built up, the layers of insulative material being oriented generally parallel with respect to the substrate (130).

27. The thin film magnetic head assembly of claim 21, characterized in that each magnetic yoke (145) includes first and second side poles (255, 260) having a plurality of layers of magnetic material built up within the insulative main body (390), the first and second side poles (255, 260) being oriented generally normal with respect to the substrate.

28. A method of fabricating a thin film magnetic head comprising the steps of:
depositing a lower magnetic layer (150) on a first surface on a substrate (105; Fig. 16B) which is not recessed relative to the rest of the substrate, the lower magnetic layer having first and second opposed ends;
depositing a plurality of layers (175, 220, 255, 315) of magnetic material at the first end of the lower magnetic layer (150) to build-up a first side pole (265) having a first top end;
depositing a plurality of layers (180, 225, 260, 320) of magnetic material at the second end of the lower magnetic layer (150) to build-up a second side pole (270) having a second top end;
depositing a first upper magnetic pole element (345) at the first top end, the first upper magnetic pole element including a first gap end (345A) extending toward the second top end;
forming a gap region (360) of nonmagnetic material at the first gap end (345A) of the first upper magnetic pole element (345), and
depositing a second upper magnetic pole element (365) at the second top end, the second upper magnetic pole element including a second gap end (365A) situated adjacent the gap region.

29. The method of claim 28, characterized in that the method further comprises the step of forming a coil element (190, 235) around one of the first and second side poles concurrently with formation of the first and second magnetic side poles (265, 270).

30. The method of claim 29, characterized in that the method further comprises the steps of:
forming a via (110) through the substrate (105) of electrically insulative property which includes first and second opposed major surfaces, the via including an interior side surface;
filling the via (110) with electrically conductive material in contact with the interior side surface of the via to form a via connective member (112) extending between the first and second surfaces of the substrate (105); and
forming a protective via cap (120) atop the via connective member (112) at the first surface of the substrate (105), wherein
the step of forming the coil element includes the step of forming a coil for exciting the head by etching with an etchant, and
the via protective cap (120) being fabricated of a material which is substantially resistant to etching by the etchant.

31. The method of claim 29, characterized in that
the step of forming the coil element includes the step of forming a conductor coil around one of the first and second side poles (265, 270) while the first and second side poles are being formed, the conductor coil being separated from the first and second side poles by insulative layers, the step further comprises the steps of:
forming an insulative pedestal (300) at the tops of the first and second side poles (265, 270), the insulative pedestal extending above the plane of the insulative layers below and surrounding the tops of the first and second side pole members, said insulative pedestal (300) including first and second openings to the tops of the first and second side pole members therebelow;
depositing a durable wear layer (385') on the first and second upper magnetic pole elements (345, 365) and the pedestal (300);
machining the durable wear layer, the gap region, and the first and second upper magnetic pole elements such that the first and second upper magnetic pole elements recede to a greater extent than the durable wear layer; and
plasma etching the durable wear layer down to the level of the first and second upper magnetic pole elements such that the durable wear layer and the first and second upper magnetic pole elements are in the same plane, wherein each of the first and second upper magnetic pole elements (345, 365) is made of magnetic material and formed on the pedestal (300).

32. The method of claim 31 wherein the durable wear layer is fabricated from diamond-like carbon.

33. The method of claim 29, characterized in that the method further comprises the steps of:
depositing a first seed layer (115) on the substrate (105);
forming an insulative body (200, 240) about the first and second side poles (265, 270) and the coil element;
forming an insulative pedestal (300) above the insulative body, the first and second top ends extending through the pedestal;
depositing a second seed layer (330) including first and second portions on the insulative pedestal (300) except for the first and second top ends extending through the pedestal;
removing the second seed layer (330) except for portions of said second seed layer (330) below the first and second upper magnetic pole elements (345, 365) and the gap region (360); and
forming a protective wear member (385') above the insulative pedestal (300) and surrounding the first and second upper magnetic pole elements (345, 365) and the gap region (360) to provide structural integrity to the head and wear protection therefor, wherein the lower magnetic layer (150) is formed on the first seed layer, the first upper magnetic pole element (345) is deposited at the first top end and on the first portion of the second seed layer, and the second upper magnetic pole element (365) is deposited at the second top end and on the second portion of the second seed layer (330).

34. The method of claim 33, characterized in that the method further comprises the step of depositing an adhesion layer (380) on the head prior to the step of forming the protective wear member.

35. The method of claim 33, characterized in that the step of forming the protective wear member includes the steps of:
depositing a protective wear layer on the pedestal (300); and
machining the protective wear layer, the first and second upper magnetic pole elements (345, 365) and the gap region (360) to expose the first and second upper magnetic pole elements and the gap region.

36. The method of claim 35, characterized in that the step of depositing the protective wear layer on the pedestal (300) includes the steps of:
depositing a protective wear coating over the pedestal (300) and the insulative body;
reactive ion etching the protective wear coating to remove the protective wear coating except for the portion thereof above the insulative pedestal (300).

37. The method of claim 29, characterized in that
the step of forming the coil element (190, 235) includes the step of forming a conductor coil around one of the first and second side poles (265, 270) while the first and second side poles are being formed, the conductor coil being separated from the first and second side poles by insulative layers (200, 240), the method further comprises the steps of:
forming an insulative pedestal (300) at the tops of the first and second side poles (265, 270), the insulative pedestal (300) extending above the plane of the insulative layers (200, 240) below and surrounding the tops of the first and second side poles;
depositing a first protective wear member (385') of hard material on the insulative pedestal (300);
excavating first and second pole support wells (415, 420, FIG. 25) in the protective member to expose the tops of the first and second side poles, the first and second pole support wells being laterally spaced apart to form a gap section of the protective wear member therebetween;
forming first and second pole piece support members (430, 435) of magnetic material in the first and second pole support wells (415, 420);
forming a first pole piece extension member (445, Fig. 41) atop the first pole piece support member (430), the first pole piece extension including a first gap end;
forming a gap region (460) of non-magnetic material at the first gap end of the first pole piece extension member (445); and
forming a second pole piece extension member (465, Fig. 41) atop the second pole piece support member (435), the second pole piece extension including a second gap end which abuts the gap region of non-magnetic material, wherein
the first and second magnetic pole piece support members (430, 435) and the first and second pole piece extension members (445, 465) constitute the first and second upper magnetic pole elements, respectively.

38. The method of claim 29, characterized in that,
the step of forming the coil element (190, 235) includes the step of forming a conductor coil around one of the first and second side poles (265, 270) while the first and second side poles are being formed, the conductor coil being separated from the first and second side poles by insulative layers (200, 240), the method further comprises the steps of:
forming an insulative pedestal (300) at the tops of the first and second side poles, the insulative pedestal (300) extending above the plane of the insulative layers (200, 240) below and surrounding the tops of the first and second side poles;
depositing a first protective wear member (385') of hard material on the insulative pedestal (300);
excavating first and second pole support wells (415, 420, FIG. 25) in the protective wear member to expose the tops of the first and second side poles, the first and second pole support wells being laterally spaced apart to form a gap section of the protective wear member therebetween;
forming first and second pole piece support members (430, 435) of magnetic material in the first and second pole support wells (415, 420);
forming a second protective wear member (485') of hard material atop the first protective wear member, the first and second pole piece support members (430, 435) and the gap section, the second protective wear member including first and second pole piece extension wells (535, 540) which open onto the first and second pole piece support members (430, 435), respectively, the second protective wear member including a gap region between the first and second pole piece extension wells (535, 540); and
forming first and second pole piece extension members (445, 465) of magnetic material in the first and second pole piece extension wells, (535, 540), respectively, the first and second pole piece extension members being situated atop the first and second pole piece support members (430, 435), wherein
the first and second magnetic pole piece support members (430, 435) and the first and second pole piece extension members (445, 465) constitute the first and second upper magnetic pole elements, respectively.

39. The method of claim 29, characterized in that
the step of forming the coil element (190, 235) includes the step of forming a conductor coil around one of the first and second side poles (265, 270) while the first and second side poles are being formed, the conductor coil being separated from the first and second side poles by insulative layers (200, 240), the method further comprising the steps of:
forming an insulative pedestal (300) at the tops of the first and second side poles (265, 270), the insulative pedestal extending above the plane of the insulative layers (200, 240) below and surrounding the tops of the first and second side poles;
depositing a first protective wear member (400') of hard material on the insulative pedestal (300);
excavating a pole well (415, FIG. 25) in the protective wear member to expose the tops of the first and second side poles,
forming a first magnetic pole (430', Fig. 37) as the first upper magnetic pole element in the pole well (415), the first magnetic pole being coupled to the first side pole (265) and including a gap end extending toward the second side pole (270);
forming the gap region in the pole well (415) and at the gap end of the first magnetic pole (430'); and
forming a second magnetic pole (435', Fig. 37) as the second upper magnetic pole element in the pole well (415), the second magnetic pole being coupled to the second side pole (270) and extending toward the gap end of the first magnetic pole (265).

40. The method of claim 39, characterized in that the protective wear member (400') is formed by diamond-like carbon.

41. The method of claim 29, characterized in that
the step of forming the coil element (190, 235) includes the step of forming a conductor coil around one of the first and second side poles (265, 270) while the first and second side poles are being formed, the conductor coil being separated from the first and second side poles by insulative layers (220, 240), the method further comprising the steps of:
forming an insulative pedestal (300) at the tops of the first and second side poles (265, 270), the insulative pedestal (300) extending above the plane of the insulative layers below and surrounding the tops of the first and second side poles;
depositing a first protective wear member (400', FIG. 26) of hard material on the insulative pedestal (300);
excavating first and second pole wells (415, 420) in the protective wear member to expose the tops of the first and second side poles, the first and second pole wells being laterally spaced apart to form a gap region of the protective wear member between the first and second pole wells, and
forming first and second magnetic poles as the first and second upper magnetic pole elements in the first and second pole wells, respectively.

42. The method of claim 41, characterized in that the method further comprising the step of:
forming, prior to the depositing the first protective wear member, an electrically conductive seed layer (405) on the insulative pedestal (300) except for the tops of the first and second side poles which remain exposed.

43. The method of claim 41, characterized in that the protective wear member (400') is formed by diamond-like carbon.

44. The method of claim 29, characterized in that
the step of forming the coil element includes the step of forming a coil structure around one of the first and second side poles (265, 270) while the first and second side poles are being formed, the coil structure being separated from the first and second side poles by an layered insulative body (200, 240), the method further comprising the steps of:
forming a lower shield layer (114) on the substrate (105), the lower shield layer including a peripheral edge surface;
forming an electrically insulative layer (121) on the lower shield layer (114);
forming an insulative pedestal (300) at the tops of the first and second side poles (265, 270), the insulative pedestal extending above the plane of the insulative body (200, 240) below and surrounding the tops of the first and second side poles;
forming a layered side shield (147, FIG. 70) atop the peripheral edge surface of the lower shield layer (114) and substantially surrounding the insulative body (200, 240); and
forming a shield cover (322) situated atop the side shield (140) and covering the insulative body (200, 240) and the coil structure, the shield cover including an opening through which the pedestal protrudes, wherein each of the first and second upper magnetic pole elements (345, 365) is made of magnetic material and formed on the pedestal (300).

45. A method of fabricating a thin film magnetic head assembly on a first surface of a substrate (105) which is not recessed relative to the rest of the substrate, comprising the steps of:
forming an insulative main body (390; Fig. 80) on the substrate from a plurality of layers of insulative material (135, 160, 200, 240);
forming a plurality of magnetic yokes (145) on the substrate (105) and within the main body (390) during the forming of the insulative main body (160, 200);
forming a plurality of coil (190, 235) structures within the main body (390) and magnetically coupled to respective magnetic yokes (145); and
forming a pedestal (300) of insulative material situated atop the main body (390) and exhibiting a lateral dimension less than that of the main body (390), the pedestal (300) protruding upwardly away from the main body (390) and substrate (105),
the step of forming a plurality of magnetic yokes (145) including forming each magnetic yoke to include a pole piece pair (345, 365) situated atop the pedestal (300), each pole piece pair including first and second magnetic pole pieces, each magnetic yoke extending through the pedestal (300) to integrally couple to its respective pole piece pair, a respective gap region (360) being formed between the first and second pole pieces of each pole piece pair, a plurality of the magnetic yokes (145) including pole piece pairs which exhibit different pole piece geometries so as to be compatible with magnetic media exhibiting different track widths.

46. The method of fabricating a thin film magnetic head assembly of claim 45, characterized in that the method further comprises the step of building up first and second side poles within the insulative main body (160, 200) for each of the plurality of magnetic yokes (145), the first and second side poles being generally normal with respect to the substrate (130) and being integrally coupled to the first and second magnetic pole pieces, respectively.

47. The method of fabricating a thin film magnetic head assembly of claim 45, characterized in that the pole piece geometries of the pole piece pairs exhibit different gap widths.

48. The method of fabricating a thin film magnetic head assembly of claim 45, characterized in that the pole piece geometries of the pole piece pairs exhibit different gap lengths.

## Patentansprüche

1. Dünnfilm-Magnetkopf, mit
einem Substrat (Fig. 16B, 105) mit einer ersten Oberfläche, die relativ zum übrigen Substrat nicht vertieft ist;
einer Keimschicht (115) aus elektrisch leitendem Material, die sich auf der ersten Oberfläche des Substrats befindet;
einer ersten Isolierschicht (135), die sich auf der Keimschicht befindet und einen offenen Bereich enthält;
einer unteren Magnetschicht (150), die auf die Keimschicht und im offenen Bereich plattiert ist und erste und zweite gegenüberliegende Enden besitzt;
mehreren ersten Seitenpol-Magnetschichten (175, 220, 255, 315), die durch aufeinanderfolgendes Plattieren von Magnetschichten am ersten Ende der unteren Magnetschicht (150) aufgebaut sind, um einen ersten Magnetseitenpol (265) mit oberen und unteren Enden zu bilden;
mehreren zweiten Seitenpol-Magnetschichten (180, 225, 260, 320), die durch aufeinanderfolgendes Plattieren von Magnetschichten am zweiten Ende der unteren Magnetschicht (150) aufgebaut sind, um einen zweiten Magnetseitenpol (270) mit oberen und unteren Enden zu bilden;
einem ersten oberen Magnetpolelement (345), das sich am oberen Ende des ersten Magnetseitenpols (265) befindet und ein erstes Spaltende (345A), das dem zweiten Magnetseitenpol (270) zugewandt ist, enthält;
einem zweiten oberen Magnetpolelement (365), das sich am oberen Ende des zweiten Magnetseitenpols (270) befindet und ein zweites Spaltende (365A), das dem ersten Spaltende (345A) zugewandt ist, enthält; und
einem Spaltbereich (360) aus nichtmagnetischem Material, der sich zwischen dem ersten Spaltende und dem zweiten Spaltende befindet.

2. Dünnfilm-Magnetkopf nach Anspruch 1, dadurch gekennzeichnet, daß der Kopf ferner eine Spulenstruktur (190, 235) umfaßt, die um einen der ersten und zweiten Seitenpole (265, 270) gebildet ist.

3. Dünnfilm-Magnetkopf nach Anspruch 2, dadurch gekennzeichnet, daß der Kopf ferner mehrere Isolierschichten (200, 240) umfaßt, die um die ersten und zweiten Seitenpole und die Spulenstruktur gebildet sind, um die Spulenstruktur (190, 235) von den ersten und zweiten Seitenpolen (265, 270) zu isolieren.

4. Dünnfilm-Magnetkopf nach Anspruch 1, dadurch gekennzeichnet, daß
das Substrat (105) ein elektrisch isolierendes Substrat ist, das die erste Oberfläche und eine zweite Oberfläche auf der gegenüberliegenden Seite des Substrats umfaßt, wobei das Substrat zwischen den ersten und zweiten Oberflächen ein Durchgangsloch (110) aufweist, das eine Innenseitenoberfläche aufweist, wobei der Kopf ferner umfaßt:
ein Durchgangsloch-Verbindungselement (112) aus elektrisch leitendem Material, das sich in dem Durchgangsloch in Kontakt mit der Innenseitenoberfläche des Durchgangslochs befindet und sich zwischen der ersten und der zweiten Oberfläche des Substrats erstreckt;
eine Durchgangslochschutzkappe (120), die sich auf der Oberseite des Durchgangsloch-Verbindungselements (112) an der ersten Oberfläche (105A) des Substrats befindet;
einen isolierenden Körper (200, 240), der um die ersten und die zweiten Magnetseitenpole (265, 270) angeordnet und aus mehreren Schichten aus elektrisch isolierendem Material aufgebaut ist;
eine Leiterspulenschicht (190, 240) aus elektrisch leitendem Material, die in dem isolierenden Körper (200, 240) und um einen der ersten und zweiten Magnetseitenpole (265, 270) angeordnet ist, wobei die Spule durch Ätzen von Abschnitten der Spulenschicht mit einem Ätzmittel gebildet ist; und
einen isolierenden Sockel (300), der sich an den Oberseiten der ersten und zweiten Magnetseitenpole (265, 270) befindet und sich über der Ebene des isolierenden Körpers unter den Oberseiten der ersten und zweiten Magnetseitenpole erstreckt und diese umgibt, wobei
die Durchgangslochschutzkappe (120) aus einem Material gefertigt ist, das gegenüber einem Ätzen durch das Ätzmittel im wesentlichen beständig ist.

5. Dünnfilm-Magnetkopf nach Anspruch 1, dadurch gekennzeichnet, daß der Kopf ferner enthält:
einen isolierenden Körper (200, 240), der um die ersten und zweiten Seitenpole (265, 270) angeordnet und aus mehreren Schichten eines elektrisch isolierenden Material aufgebaut ist;
eine Leiterspule (190, 235), die in dem isolierenden Körper und um einen der ersten und zweiten Magnetseitenpole (265, 270) angeornet ist;
einen isolierenden Sockel (300), der sich an den Oberseiten der ersten und zweiten Magnetseitenpole (265, 270) befindet und sich über der Ebene des isolierenden Körpers unter den Oberseiten der ersten und zweiten Magnetseitenpole erstreckt und diese umgibt; und
einen Verschleißschutzelement (385') aus einem harten Material, das sich auf der Oberseite des Sockels befindet und die ersten und zweiten oberen Magnetpolelemente (345, 365) umgibt und sowohl eine strcukturelle Integrität des Kopfes als auch einen Verschleißschutz hierfür schafft.

6. Dünnfilm-Magnetkopf nach Anspruch 5, dadurch gekennzeichnet, daß das Verschleißschutzelement (385') diamantähnlicher Kohlenstoff (DLC) ist.

7. Dünnfilm-Magnetkopf nach Anspruch 5, dadurch gekennzeichnet, daß der Kopf ferner eine Haftschicht (380) umfaßt, die sich zwischen dem Sockel (300) und dem Verschleißschutzelement (385') befindet.

8. Dünnfilm-Magnetkopf nach Anspruch 1, dadurch gekennzeichnet, daß der Kopf ferner enthält:
einen isolierenden Körper (200, 240), der um die ersten und zweiten Magnetseitenpole (265, 270) angeordnet und aus mehreren Schichten eines elektrisch isolierenden Materials aufgebaut ist;
eine Leiterspule (190, 235), die in dem isolierenden Körper und um einen der ersten und zweiten Magnetseitenpole (265, 270) angeordnet ist;
einen isolierenden Sockel (300), der sich an den Oberseiten der ersten und zweiten Magnetseitenpole (265, 270) befindet und sich über der Ebene des isolierenden Körpers unter den Oberseiten der ersten und zweiten Magnetseitenpole erstreckt und diese umgibt;
ein erstes Verschleißschutzelement (Fig. 43, 400') aus einem harten Material, das sich auf dem isolierenden Sockel (300) befindet und erste und zweite Polträgerschächte (415, 420) enthält, die zu den Oberseiten der unterhalb befindlichen ersten und zweiten Magnetseitenpole offen sind und seitlich voneinander beabstandet sind, um dazwischen einen Spaltabschnitt des Verschleißschutzelements zu bilden;
erste und zweite Polstück-Unterstützungselemente (430, 435) aus magnetischem Material, die sich in den ersten und zweiten Polunterstützungsschächten (415, 420) befinden; und
erste und zweite Polstück-Verlängerungselemente (445, 465) aus magnetischem Material, die sich auf der Oberseite der ersten und zweiten Polstück-Unterstützungselemente (430, 435) befinden, wobei
sich der Spaltbereich (460) aus nichtmagnetischem Material zwischen den ersten und zweiten Polstück-Verlängerungselementen (445, 465) und den ersten und zweiten Polstück-Unterstützungselementen (430, 435) befindet und die ersten und die zweiten Polstück-Verlängerungselemente (445, 465) die ersten bzw. zweiten oberen Magnetpolelemente bilden.

9. Dünnfilm-Kopf nach Anspruch 8, dadurch gekennzeichnet, daß der Kopf ferner ein zweites Verschleißschutzelement (485') aus einem harten Material enthält, das sich in derselben Ebene wie die ersten und zweiten Polstück-Verlängerungselemente (445, 465) befindet, wobei das zweite Verschleißschutzelement die ersten und zweiten Polstück-Verlängerungselemente (445, 465) im wesentlichen umgibt, wobei die zweite DLC-Schicht eine obere Oberfläche aufweist.

10. Dünnfilm-Kopf nach Anspruch 9, dadurch gekennzeichnet, daß die ersten und zweiten Polstück-Verlängerungen, der Spaltbereich und die obere Oberfläche des zweiten Verschleißschutzelements zusammen die obere Oberfläche des Dünnfilm-Kopfes bilden, wobei ein Abschnitt der oberen Oberfläche des Dünnfilm-Kopfes einen im wesentlichen konvexen Umriß besitzt.

11. Dünnfilm-Magnetkopf nach Anspruch 9, dadurch gekennzeichnet, daß der Kopf ferner eine weitere elektrisch leitende Keimschicht (405) umfaßt, die sich zwischen dem Sockel (300) und dem ersten Verschleißschutzelement (400') befindet, wobei die weitere Keimschicht (405) an den Oberseiten der ersten und zweiten Magnetseitenpole (265, 270) offene Bereiche enthält.

12. Dünnfilm-Magnetkopf nach Anspruch 11, dadurch gekennzeichnet, daß der Kopf ferner eine Siliciumhaftschicht (410) enthält, die sich auf der weiteren Keimschicht (405) befindet, um die Haftung des ersten Verschleißschutzelements am isolierenden Sockel (300) zu erhöhen.

13. Dünnfilm-Magnetkopf nach Anspruch 1, dadurch gekennzeichnet, daß der Kopf ferner enthält:
einen isolierenden Körper (200, 240), der um die ersten und zweiten Magnetseitenpole (265, 270) angeordnet ist und aus mehreren Schichten aus elektrisch isolierendem Material aufgebaut ist;
eine Leiterspule (190, 235), die in dem isolierenden Körper und um einen der ersten und zweiten Magnetseitenpole angeordnet ist;
einen isolierenden Sockel (300), der sich an den Oberseiten der ersten und zweiten Magnetseitenpole (265, 270) befindet und sich über der Ebene des isolierenden Körpers unterhalb der Oberseiten der ersten und zweiten Magnetseitenpole erstreckt und diese umgibt; und
ein Verschleißschutzelement aus hartem Material (400', Fig. 36), das sich auf dem isolierenden Sockel befindet und einen Polschacht (415) besitzt, der zu den Oberseiten der ersten und zweiten Magnetseitenpole offen ist, wobei
das erste obere Magnetpolelement (430') sich im Polschacht (415) und über dem ersten Seitenpol (265) befindet und sich zum zweiten Seitenpol (270) erstreckt;
das zweite obere Magnetpolelemente (435') sich im Polschacht (415) und über dem zweiten Seitenpol (270) befindet und sich zum ersten Seitenpol (265) erstreckt;
der Spaltbereich (550') sich im Polschacht (415) zwischen den ersten und zweiten Spaltenden (345A, 365A) befindet.

14. Dünnfilm-Magnetkopf nach Anspruch 13, dadurch gekennzeichnet, daß der Kopf ferner eine weitere elektrisch leitende Keimschicht (405) enthält, die sich auf dem isolierenden Sockel (300) und unterhalb des Verschleißschutzelements befindet.

15. Dünnfilm-Magnetkopf nach Anspruch 14, dadurch gekennzeichnet, daß der Kopf ferner eine Siliciumhaftschicht (410) enthält, die sich auf der weiteren Keimschicht (405) befindet, um die Haftung des Verschleißschutzelements am isolierenden Sockel (300) zu erhöhen.

16. Dünnfilm-Magnetkopf nach Anspruch 1, dadurch gekennzeichnet, daß der Kopf ferner enthält:
einen isolierenden Körper (200, 240), der sich um die ersten und zweiten Magnetseitenpole (265, 270) befindet und aus mehreren Schichten aus elektrisch isolierendem Material aufgebaut ist;
eine Leiterspule (190, 235), die sich im isolierenden Körper und einen der ersten und zweiten Magnetseitenpole (265, 270) angeordnet ist;
einen isolierenden Sockel (300), der sich an den Oberseiten der ersten und zweiten Magnetseitenpole (265, 270) befindet und sich über der Ebene des isolierenden Körpers unter den Oberseiten der ersten und zweiten Magnetseitenpole erstreckt und diese umgibt;
ein hartes Verschleißschutzelement (400', Fig. 26), das sich auf dem isolierenden Sockel (300) befindet und erste und zweite Polschächte (415, 420) enthält, die zu den Oberseiten der darunter befindlichen ersten und zweiten Seitenpole offen sind, wobei die ersten und zweiten Polschächte (415, 420) seitlich voneinander beabstandet sind, um zwischen den ersten und zweiten Polschächten einen harten Spaltbereich (425) zu bilden, und
erste und zweite Magnetpole (430, 435), die sich in den ersten und zweiten Polschächten (415, 420) befinden und den ersten bzw. zweiten oberen Magnetpolelementen entsprechen.

17. Dünnfilm-Magnetkopf nach Anspruch 16, dadurch gekennzeichnet, daß das harte Verschleißschutzelement diamantähnlicher Kohlenstoff (DLC) ist.

18. Dünnfilm-Magnetkopf nach Anspruch 16, dadurch gekennzeichnet, daß der Kopf ferner eine weitere elektrisch leitende Keimschicht (405) enthält, die sich auf dem isolierenden Sockel (300) und unter dem harten Verschleißschutzelement befindet und offene Bereiche an den Oberseiten der ersten und zweiten Magnetseitenpole (265, 270) aufweist.

19. Dünnfilm-Magnetkopf nach Anspruch 18, dadurch gekennzeichnet, daß der Kopf ferner eine Siliciumhaftschicht (410) enthält, die sich über der weiteren Keimschicht (405) befindet, um die Haftung des Verschleißschutzelements an dem isolierenden Sockel (300) zu erhöhen.

20. Dünnfilm-Magnetkopf nach Anspruch 1, dadurch gekennzeichnet, daß der Kopf ferner enthält:
eine Boden-Abschirmungsschicht (114, Fig. 61 bis 77), die sich auf der Keimschicht (115) befindet und eine Umfangskantenoberfläche enthält;
eine elektrisch isolierende Schicht (121), die sich auf der Boden-Abschirmungsschicht (114) und unter der unteren Magnetschicht (150) befindet;
einen geschichteten elektrisch isolierenden Körper (200, 240), der sich über den ersten und zweiten Magnetseitenpolen (265, 270) befindet;
eine Spulenstruktur (190, 235), die in dem isolierenden Körper und um einen der ersten und zweiten Magnetseitenpole angeordnet ist;
einen isolierenden Sockel (300), der sich an den Oberseiten der ersten und zweiten Magnetseitenpole befindet, wobei sich der isolierende Sockel über der Ebene des isolierenden Körpers unter den Oberseiten der ersten und zweiten Magnetseitenpole erstreckt und diese umgibt;
eine geschichtete Seitenabschirmung (147, Fig. 70), die sich an der Oberseite der Umfangskantenoberfläche der Boden-Abschirmungsschicht (114) befindet und den isolierenden Körper im wesentlichen umgibt; und
eine Abschirmungsabdeckung (322), die sich auf der Oberseite der Seitenabschirmung befindet und den isolierenden Körper und die Spulenstruktur abdeckt, wobei die Abschirmungsabdeckung eine Öffnung enthält, durch die der Sockel (300) vorsteht, wobei
die ersten und zweiten oberen Magnetpolelemente sich auf dem Sockel (300) befinden.

21. Dünnfilm-Magnetkopfbaueinheit, mit
einem Substrat (105) mit einer ersten Oberfläche, die relativ zum übrigen Substrat nicht vertieft ist;
einem isolierenden Hauptkörper (390; Fig. 80), der sich auf der ersten Oberfläche des Substrats (105) befindet;
mehreren Magnetjochen (145), die sich auf dem Substrat (105) und in dem Hauptkörper (390) befinden;
mehreren Spulenstrukturen (190, 235), die sich im Hauptkörper (390) befinden und mit jeweiligen Magnetjochen (145) magnetisch gekoppelt sind;
einem gemeinsamen Sockel (300) aus isolierendem Material, der sich an der Oberseite des Hauptkörpers (390) befindet und seitliche Abmessungen besitzt, die kleiner als diejenigen des Hauptkörpers (390) sind, wobei der Sockel (300) nach oben vom Hauptkörper (390) und vom Substrat vorsteht; und
wobei die Magnetjoche (145) jeweils ein Polstück-Paar (345, 365) enthalten, das sich an der Oberseite des gemeinsamen Sockels (300) befindet, wobei jedes Polstück-Paar (345, 365) erste und zweite Magnetpolstücke enthält, wobei sich jedes Magnetjoch (145) durch den gemeinsamen Sockel (300) erstreckt, um mit seinem entsprechenden Polstück-Paar (345, 365) einteilig gekoppelt zu sein, wobei zwischen den ersten und zweiten Polstücken jedes Polstück-Paars (345, 365) ein entsprechender Spaltbereich (360) ausgebildet ist, wobei mehrere der Magnetjoche (145) Polstück-Paare besitzen, die unterschiedliche Polstück-Geometrien besitzen, damit sie mit magnetischen Medien kompatibel sind, die verschiedene Spurweiten besitzen.

22. Dünnfilm-Magnetkopfbaueinheit nach Anspruch 21, dadurch gekennzeichnet, daß die Polstück-Geometrien der Polstück-Paare (345, 365) unterschiedliche Spaltbreiten besitzen.

23. Dünnfilm-Magnetkopfbaueinheit nach Anspruch 21, dadurch gekennzeichnet, daß die Polstück-Geometrien der Polstück-Paare (345, 365) unterschiedliche Spaltlängen besitzen.

24. Dünnfilm-Magnetkopfbaueinheit nach Anspruch 21, ferner mit einem Rahmen (325), der den isolierenden Sockel (300) umgibt, um diesem eine strukturelle Integrität zu verleihen.

25. Dünnfilm-Magnetkopfbaueinheit nach Anspruch 21, dadurch gekennzeichnet, daß sich an der Oberseite des Sockels (300) ein Verschleißschutzelement (385) aus hartem Material befindet, das mehrere Polstück-Paare (345, 365) umgibt.

26. Dünnfilm-Magnetkopfbaueinheit nach Anspruch 21, dadurch gekennzeichnet, daß der isolierende Hauptkörper (390) mehrere Schichten aus Isoliermaterial (135, 160, 200, 240) enthält, aus denen der Hauptkörper aufgebaut ist, wobei die Schichten aus Isoliermaterial im allgemeinen parallel zum Substrat (130) orientiert sind.

27. Dünnfilm-Magnetkopfbaueinheit nach Anspruch 21, dadurch gekennzeichnet, daß jedes Magnetjoch (145) erste und zweite Seitenpole (255, 260) enthält, die mehrere Schichten aus magnetischem Material besitzen, die im isolierenden Hauptkörper (390) aufgebaut sind, wobei die ersten und zweiten Seitenpole (255, 260) im allgemeinen senkrecht zum Substrat orientiert sind.

28. Verfahren zum Herstellen eines Dünnfilm-Magnetkopfes, mit den folgenden Schritten:
Ablagern einer unteren Magnetschicht (150) auf einer ersten Oberfläche auf einem Substrat (105; Fig. 16B), die relativ zum übrigen Substrat nicht vertieft ist, wobei die untere Magnetschicht erste und zweite gegenüberliegende Enden besitzt;
Ablagern mehrerer Schichten (175, 220, 255, 315) aus magnetischem Material am ersten Ende der unteren Magnetschicht (150), um einen ersten Seitenpol (265) mit einem ersten oberen Ende aufzubauen;
Ablagern mehrerer Schichten (180, 225, 260, 320) aus magnetischem Material am zweiten Ende der unteren Magnetschicht (150), um einen zweiten Seitenpol (270) mit einem zweiten oberen Ende aufzubauen;
Ablagern eines ersten oberen Magnetpolelements (345), wobei das erste obere Magnetpolelement ein erstes Spaltende (345A) enthält, das sich zum zweiten oberen Ende erstreckt;
Ausbilden eines Spaltbereichs (360) aus nichtmagnetischem Material am ersten Spaltende (345A) des ersten Magnetpolelements (345) und
Ablagern eines zweiten oberen Magnetpolelements (365) am zweiten oberen Ende, wobei das zweite obere Magnetpolelement ein zweites Spaltende (365A) enthält, das sich in der Nähe des Spaltbereichs befindet.

29. Verfahren nach Anspruch 28, dadurch gekennzeichnet, daß das Verfahren ferner den Schritt des Bildens eines Spulenelements (190, 235) um einen der ersten und zweiten Seitenpole gleichzeitig zum Bilden der ersten und zweiten Magnetseitenpole (265, 270) umfaßt.

30. Verfahren nach Anspruch 29, dadurch gekennzeichnet, daß das Verfahren ferner die folgenden Schritte enthält:
Bilden eines Durchgangslochs (110) durch das Substrat (105) mit elektrischer Isolationseigenschaft, das erste und zweite gegenüberliegende Hauptflächen enthält, wobei das Durchgangsloch eine Innenseitenoberfläche enthält;
Füllen des Durchgangslochs (110) mit elektrisch leitendem Material, das in Kontakt mit der Innenseitenoberfläche des Durchgangslochs ist, um ein Durchgangsloch-Verbindungselement (112) zu bilden, das sich zwischen den ersten und zweiten Oberflächen des Substrats (105) erstreckt; und
Bilden einer Durchgangsloch-Schutzkappe (120) an der Oberseite des Durchgangsloch-Verbindungselements (112) an der ersten Oberfläche des Substrats (105), wobei
der Schritt des Bildens des Spulenelements den Schritt des Bildens einer Spule zum Erregen des Kopfes durch Ätzen mit einem Ätzmittel umfaßt, und
die Durchgangsloch-Schutzkappe (120) aus einem Material hergestellt wird, das gegenüber der Ätzung durch das Ätzmittel im wesentlichen resistent ist.

31. Verfahren nach Anspruch 29, dadurch gekennzeichnet, daß
der Schritt des Bildens des Spulenelements den Schritt des Bildens einer Leiterspule um einen der ersten und zweiten Seitenpole (265, 270) während der Bildung der ersten und zweiten Seitenpole umfaßt, wobei die Leiterspule von den ersten und zweiten Seitenpolen durch Isolierschichten getrennt ist, wobei der Schritt die folgenden Schritte enthält:
Bilden eines isolierenden Sockels (300) an den Oberseiten der ersten und zweiten Seitenpole (265, 270), wobei sich der isolierende Sockel über der Ebene der isolierenden Schichten unter den Oberseiten der ersten und zweiten Seitenpolelemente erstreckt und diese umgibt, wobei der isolierende Sockel (300) erste und zweite Öffnungen zu den Oberseiten der darunter befindlichen ersten und zweiten Seitenpolelemente enthält;
Ablagern einer dauerhaften Verschleißschicht (385') auf den ersten und zweiten oberen Magnetpolelementen (345, 365) und des Sockels (300);
spanabhebendes Bearbeiten der dauerhaften Verschleißschicht, des Spaltbereichs und der ersten und zweiten Magnetpolelemente in der Weise, daß die ersten und zweiten oberen Magnetpolelemente stärker als die dauerhafte Verschleißschicht zurücktreten; und
Plasmaätzen der dauerhaften Verschleißschicht nach unten bis zur Höhe der ersten und zweiten oberen Magnetpolelemente, so daß die dauerhafte Verschleißschicht und die ersten und zweiten oberen Magnetpolelemente in derselben Ebene liegen, wobei jedes der ersten und zweiten oberen Magnetpolelemente (345, 365) aus einem magnetischen Material hergestellt ist und auf dem Sockel (300) gebildet ist.

32. Verfahren nach Anspruch 31, wobei die dauerhafte Verschleißschicht aus diamantähnlichem Kohlenstoff hergestellt ist.

33. Verfahren nach Anspruch 29, dadurch gekennzeichnet, daß das Verfahren ferner die folgenden Schritte enthält:
Ablagern einer ersten Keimschicht (115) auf dem Substrat (105);
Bilden eines isolierenden Körpers (200, 240) um die ersten und zweiten Seitenpole (265, 270) und das Spulenelement;
Bilden eines isolierenden Sockels (300) um den isolierenden Körper, wobei sich die ersten und zweiten oberen Enden durch den Sockel erstrecken;
Ablagern einer zweiten Keimschicht (330), die erste und zweite Abschnitte des isolierenden Sockels (300) mit Ausnahme der ersten und zweiten oberen Enden, die sich durch den Sockel erstrecken, enthält;
Entfernen der zweiten Keimschicht (330) mit Ausnahme der Abschnitte der zweiten Keimschicht (330) unterhalb der ersten und zweiten oberen Magnetpolelemente (345, 365) und des Spaltabschnitts (360); und
Bilden eines Verschleißschutzelements (385') über dem isolierenden Sockel (300) und um die ersten und zweiten oberen Magnetpolelemente (345, 365) und den Spaltbereich (360), um eine strukturelle Integrität für den Kopf und den Verschleißschutz hierfür zu schaffen, wobei die untere Magnetschicht (150) auf der ersten Keimschicht gebildet wird, das erste obere Magnetpolelement (345) auf dem ersten oberen Ende und auf dem ersten oberen Abschnitt der zweiten Keimschicht abgelagert ist und das zweite Magnetpolelement (365) auf dem zweiten oberen Ende und auf dem zweiten Abschnitt der zweiten Keimschicht (330) abgelagert wird.

34. Verfahren nach Anspruch 33, dadurch gekennzeichnet, daß das Verfahren ferner vor dem Schritt des Bildens des Verschleißschutzelements den Schritt des Ablagerns einer Haftschicht (380) auf dem Kopf umfaßt.

35. Verfahren nach Anspruch 33, dadurch gekennzeichnet, daß der Schritt des Bildens des Verschleißschutzelements die folgenden Schritte enthält:
Ablagern einer Verschleißschutzschicht auf dem Sockel (300); und
spanabhebendes Bearbeiten der Verschleißschutzschicht, der ersten und zweiten oberen Magnetpolelemente (345, 365) und des Spaltbereichs (360), um die ersten und zweiten oberen Magnetpolelemente und den Spaltbereich freizulegen.

36. Verfahren nach Anspruch 35, dadurch gekennzeichnet, daß der Schritt des Ablagerns der Verschleißschutzschicht auf dem Sockel (300) die folgenden Schritte enthält:
Ablagern einer Verschleißschutzbeschichtung über dem Sockel (300) und dem isolierenden Körper;
reaktives Ionenätzen der Verschleißschutzbeschichtung, um die Verschleißschutzbeschichtung mit Ausnahme des Abschnitts über dem isolierenden Sockel (300) zu entfernen.

37. Verfahren nach Anspruch 29, dadurch gekennzeichnet, daß
der Schritt des Bildens des Spulenelements (190, 235) den Schritt des Bildens einer Leiterspule um einen der ersten und zweiten Seitenpole (265, 270) während der Bildung der ersten und zweiten Seitenpole umfaßt, wobei die Leiterspule von den ersten und zweiten Seitenpolen durch Isolierschichten (200, 240) getrennt ist, wobei das Verfahren ferner die folgenden Schritte enthält:
Bilden eines isolierenden Sockels (300) an den Oberseiten der ersten und zweiten Seitenpole (265, 270), wobei sich der isolierende Sockel (300) über der Ebene der Isolierschichten (200, 240) unterhalb der Oberseiten der ersten und zweiten Seitenpole erstreckt und diese umgibt;
Ablagern eines ersten Verschleißschutzelements (385') aus hartem Material auf dem isolierenden Sockel (300);
Ausheben erster und zweiter Polunterstützungsschächte (415, 420, Fig. 25) in dem Schutzelement, um die Oberseiten der ersten und zweiten Seitenpole freizulegen, wobei die ersten und zweiten Polunterstützungsschächte seitlich beabstandet sind, um dazwischen einen Spaltabschnitt des Verschleißschutzelements zu bilden;
Bilden erster und zweiter Polstück-Unterstützungselemente (430, 435) aus magnetischem Material in den ersten und zweiten Polunterstützungsschächten (415, 420);
Bilden eines ersten Polstück-Verlängerungselements (445, Fig. 41) an der Oberseite des ersten Polstück-Unterstützungselements (430), wobei die erste Polstückverlängerung ein erstes Spaltende enthält;
Bilden eines Spaltbereichs (460) aus nichtmagnetischem Material am ersten Spaltende des ersten Polstück-Verlängerungselements (445); und
Bilden eines zweiten Polstück-Verlängerungselements (465, Fig. 41) an der Oberseite des zweiten Polstück-Unterstützungselements (435), wobei die zweite Polstückverlängerung ein zweites Spaltende aufweist, das am Spaltbereich aus nichtmagnetischem Material anliegt, wobei
die ersten und zweiten Magnetpolstück-Unterstützungselemente (430, 435) um die ersten und zweiten Polstück-Verlängerungselemente (445, 465) die ersten bzw. zweiten oberen Magnetpolelemente bilden.

38. Verfahren nach Anspruch 29, dadurch gekennzeichnet, daß
der Schritt des Bildens des Spulenelements (190, 235) den Schritt des Bildens einer Leiterspule um einen der ersten und zweiten Seitenpole (265, 270) während der Bildung der ersten und zweiten Seitenpole umfaßt, wobei die Leiterspule von den ersten und zweiten Seitenpolen durch isolierende Schichten (200, 240) getrennt ist, wobei das Verfahren ferner die folgenden Schritte umfaßt:
Bilden eines isolierenden Sockels (300) an den Oberseiten der ersten und zweiten Seitenpole, wobei sich der isolierende Sockel (300) über der Ebene der isolierenden Schichten (200, 240) unter den Oberseiten der ersten und zweiten Seitenpole erstreckt und diese umgibt;
Ablagern eines ersten Verschleißschutzelements (385') aus hartem Material auf dem isolierenden Sockel (300);
Ausheben erster und zweiter Polunterstützungsschächte (415, 420, Fig. 25) in dem Verschleißschutzelement, um die Oberseiten der ersten und zweiten Seitenpole freizulegen, wobei die ersten und zweiten Polunterstützungsschächte seitlich beabstandet sind, um dazwischen einen Spaltabschnitt des Verschleißschutzelements zu bilden;
Bilden erster und zweiter Polstück-Unterstützungselemente (430, 435) aus magnetischem Material in den ersten und zweiten Polunterstützungsschächten (415, 420);
Bilden eines zweiten Verschleißschutzelements (485') aus hartem Material auf der Oberseite des ersten Verschleißschutzelements, der ersten und zweiten Polstück-Unterstützungselemente (430, 435) und des Spaltabschnitts, wobei das zweite Verschleißschutzelement erste und zweite Polstück-Verlängerungsschächte (535, 540) enthält, die zu den ersten bzw. zweiten Polstück-Unterstützungselementen (430, 435) münden, wobei das zweite Verschleißschutzelement einen Spaltbereich zwischen den ersten und zweiten Polstück-Verlängerungsschächten (535, 540) enthält; und
Bilden erster und zweiter Polstück-Verlängerungselemente (445, 465) aus magnetischem Material in den ersten bzw. zweiten Polstück-Verlängerungsschächten (535, 540), wobei sich die ersten und zweiten Polstück-Verlängerungselemente an den Oberseiten der ersten und zweiten Polstück-Unterstützungselemente (430, 435) befinden, wobei
die ersten und zweiten Magnetpolstück-Unterstützungselemente (430, 435) und die ersten und zweiten Polstück-Verlängerungselemente (445, 465) die ersten bzw. zweiten oberen Magnetpolelemente bilden.

39. Verfahren nach Anspruch 29, dadurch gekennzeichnet, daß
der Schritt des Bildens des Spulenelements (190, 235) den Schritt des Bildens einer Leiterspule um einen der ersten und zweiten Seitenpole (265, 270) während der Bildung der ersten und zweiten Seitenpole umfaßt, wobei die Leiterspule von den ersten und zweiten Seitenpolen durch isolierende Schichten (200, 240) getrennt ist, wobei das Verfahren ferner die folgenden Schritte enthält:
Bilden eines isolierenden Sockels (300) an den Oberseiten der ersten und zweiten Seitenpole (265, 270), wobei sich der isolierende Sockel über der Ebene der isolierenden Schichten (200, 240) unterhalb der Oberseiten der ersten und zweiten Seitenpole erstreckt und diese umgibt;
Ablagern eines ersten Verschleißschutzelements (400') aus hartem Material auf dem isolierenden Sockel (300);
Ausheben eines Polschachts (415, Fig. 25) in dem Verschleißschutzelement, um die Oberseiten der ersten und zweiten Seitenpole freizulegen,
Bilden eines ersten Magnetpols (430', Fig. 37) als erstes oberes Magnetpolelement in dem Polschacht (415), wobei der erste Magnetpol mit dem ersten Seitenpol (265) gekoppelt ist und ein Spaltende enthält, das sich zum zweiten Seitenpol (270) erstreckt;
Bilden des Spaltbereichs im Polschacht (415) und am Spaltende des ersten Magnetpols (430'); und
Bilden eines zweiten Magnetpols (435', Fig. 37) als zweites oberes Magnetpolelement in dem Polschacht (415), wobei der zweite Magnetpol mit dem zweiten Seitenpol (270) gekoppelt ist und sich zum Spaltende des ersten Magnetpols (265) erstreckt.

40. Verfahren nach Anspruch 39, dadurch gekennzeichnet, daß das Verschleißschutzelement (400') durch diamantähnlichen Kohlenstoff gebildet ist.

41. Verfahren nach Anspruch 29, dadurch gekennzeichnet, daß
der Schritt des Bildens des Spulenelements (190, 235) den Schritt des Bildens einer Leiterspule um einen der ersten und zweiten Seitenpole (265, 270) während der Bildung der ersten und zweiten Seitenpole umfaßt, wobei die Leiterspule von den ersten und zweiten Seitenpolen durch isolierende Schichten (220, 240) getrennt ist, wobei das Verfahren ferner die folgenden Schritte enthält:
Bilden eines isolierenden Sockels (300) an den Oberseiten der ersten und zweiten Seitenpole (265, 270), wobei sich der isolierende Sockel (300) über der Ebene der isolierenden Schichten unterhalb der Oberseiten der ersten und zweiten Seitenpole erstreckt und diese umgibt;
Ablagern eines ersten Verschleißschutzelements (400', Fig. 26) aus hartem Material auf dem isolierenden Sockel (300);
Ausheben erster und zweiter Polschächte (415, 420) in dem Verschleißschutzelement, um die Oberseiten der ersten und zweiten Seitenpole freizulegen, wobei die ersten und zweiten Polschächte seitlich beabstandet sind, um einen Spaltbereich des Verschleißschutzelements zwischen den ersten und zweiten Polschächten zu bilden, und
Bilden und erster und zweiter Magnetpole als erste und zweite obere Magnetpolelemente in den ersten bzw. zweiten Polschächten.

42. Verfahren nach Anspruch 41, dadurch gekennzeichnet, daß das Verfahren ferner den folgenden Schritt enthält:
Bilden einer elektrisch leitenden Keimschicht (405) auf dem isolierenden Sockel (300) mit Ausnahme der frei bleibenden Oberseiten der ersten und zweiten Seitenpole vor dem Ablagern des Verschleißschutzelements.

43. Verfahren nach Anspruch 41, dadurch gekennzeichnet, daß das Verschleißschutzelement (400') durch diamantähnlichen Kohlenstoff gebildet ist.

44. Verfahren nach Anspruch 29, dadurch gekennzeichnet, daß
der Schritt des Bildens des Spulenelements den Schritt des Bildens einer Spulenstruktur um einen der ersten und zweiten Seitenpole (265, 270) während der Bildung der ersten und zweiten Seitenpole umfaßt, wobei die Spulenstruktur von den ersten und zweiten Polen durch einen geschichteten isolierenden Körper (200, 240) getrennt ist, wobei das Verfahren ferner die folgenden Schritte enthält:
Bilden einer unteren Abschirmungsschicht (114) auf dem Substrat (105), die eine Umfangskantenoberfläche enthält;
Bilden einer elektrisch isolierenden Schicht (121) auf der unteren Abschirmungsschicht (114);
Bilden eines isolierenden Sockels (300) auf den Oberseiten der ersten und zweiten Seitenpole (265, 270), wobei sich der isolierende Sockel über der Ebene des isolierenden Körpers (200, 240) unterhalb der Oberseiten der ersten und zweiten Seitenpole erstreckt und diese umgibt;
Bilden einer geschichteten seitlichen Abschirmung (147, Fig. 70) an der Oberseite der Umfangskantenoberfläche der unteren Abschirmungsschicht (114), die den isolierenden Körper (200, 240) im wesentlichen umgibt; und
Bilden einer Abschirmungsabdeckung (322), die sich an der Oberseite der seitlichen Abschirmung (140) befindet und den isolierenden Körper (200, 240) und die Spulenstruktur abdeckt, wobei die Abschirmungsabdeckung eine Öffnung aufweist, durch die der Sockel vorsteht, wobei jedes der ersten und zweiten oberen Magnetpolelemente (345, 365) aus magnetischem Material hergestellt ist und auf dem Sockel (300) gebildet ist.

45. Verfahren zum Herstellen einer Dünnfilm-Magnetkopfbaueinheit auf einer ersten Oberfläche eines Substrats (105), die relativ zum übrigen Substrat nicht vertieft ist, mit den folgenden Schritten:
Bilden eines isolierenden Hauptkörpers (390, Fig. 80) auf dem Substrat aus mehreren Schichten aus isolierendem Material (135, 160, 200, 240);
Bilden mehrerer Magnetjoche (145) auf dem Substrat (105) und in dem Hauptkörper (390) während der Bildung des isolierenden Hauptkörpers (160, 200);
Bilden mehrerer Spulenstrukturen (190, 235) in dem Hauptkörper (390), die mit den Magnetjochen (145) magnetisch gekoppelt sind; und
Bilden eines Sockels (300) aus isolierendem Material, der sich auf der Oberseite des Hauptkörpers (390) befindet und seitliche Abmessungen besitzt, die kleiner als diejenigen des Hauptkörpers (390) sind, wobei der Sockel (300) vom Hauptkörper (390) und vom Substrat (105) nach oben vorsteht,
wobei der Schritt des Bildens mehrerer Magnetjoche (145) das Bilden jedes Magnetjochs in der Weise umfaßt, daß sich ein Polstück-Paar (345, 365) an der Oberseite des Sockels (300) befindet, wobei jedes Polstück-Paar erste und zweite Magnetpolstücke enthält, wobei sich jedes Magnetjoch durch den Sockel (300) erstreckt, um mit dem jeweiligen Polstück-Paar einteilig gekoppelt zu werden, wobei zwischen den ersten und zweiten Polstücken jedes Polstück-Paars ein jeweiliger Spaltbereich (360) gebildet wird, wobei mehrere der Magnetjoche (145) Polstück-Paare umfassen, die unterschiedliche Polstück-Geometrien besitzen, so daß sie mit magnetischen Medien, die unterschiedliche Spurweiten besitzen, kompatibel sind.

46. Verfahren zum Herstellen einer Dünnfilm-Magnetkopfbaueinheit nach Anspruch 45, dadurch gekennzeichnet, daß das Verfahren ferner den Schritt des Aufbauens erster und zweiter Seitenpole in dem isolierenden Hauptkörper (160, 200) für jedes der mehreren Magnetjoche (145) umfaßt, wobei die ersten und zweiten Seitenpole zum Substrat (130) im wesentlichen senkrecht sind und mit den ersten bzw. zweiten Magnetpolstücken einteilig gekoppelt sind.

47. Verfahren zum Herstellen einer Dünnfilm-Magnetkopfbaueinheit nach Anspruch 45, dadurch gekennzeichnet, daß die Polstück-Geometrien der Polstück-Paare unterschiedliche Spaltweiten besitzen.

48. Verfahren zum Herstellen einer Dünnfilm-Magnetkopfbaueinheit nach Anspruch 45, dadurch gekennzeichnet, daß die Polstück-Geometrien der Polstück-Paare unterschiedliche Spaltlängen besitzen.

## Revendications

1. Tête magnétique à film mince, comportant :
un substrat (figure 16B, 105) ayant une première surface qui n'est pas enfoncée par rapport au reste du substrat,
une couche d'ensemencement (115) constituée d'un matériau électriquement conducteur située sur la première surface du substrat,
une première couche isolante (135) située sur la couche d'ensemencement et incluant une région ouverte,
une couche magnétique inférieure (150) plaquée sur la couche d'ensemencement et dans la région ouverte, la couche magnétique inférieure ayant des première et seconde extrémités opposées,
une pluralité de premières couches magnétiques formant pôle latéral (175, 220, 255, 315) réalisées par plaquage d'une couche magnétique sur une couche magnétique au niveau de la première extrémité de la couche magnétique inférieure (150) pour former un premier pôle latéral magnétique (265) incluant des extrémités supérieure et inférieure,
une pluralité de secondes couches magnétiques formant pôle latéral (180, 225, 260, 320) réalisées par plaquage d'une couche magnétique sur une couche magnétique au niveau de la seconde extrémité de la couche magnétique inférieure (150) pour former un second pôle latéral magnétique (270) incluant des extrémités supérieure et inférieure,
un premier élément supérieur de pôle magnétique (345) situé au niveau de l'extrémité supérieure du premier pôle latéral magnétique (265) et incluant une première extrémité d'ouverture (345A) faisant face au second pôle latéral magnétique (270),
un second élément supérieur de pôle magnétique (365) situé au niveau de l'extrémité supérieure du second pôle latéral magnétique (270) et incluant une seconde extrémité d'ouverture (365A) faisant face à la première extrémité d'ouverture (345A), et
une région d'ouverture (365) constituée d'un matériau non-magnétique située entre la première extrémité d'ouverture et la seconde extrémité d'ouverture.

2. Tête magnétique à film mince selon la revendication 1, caractérisée en ce que la tête comporte de plus une structure de bobine (190, 235) formée autour d'un des premier et second pôles latéraux (265, 270).

3. Tête magnétique à film mince selon la revendication 2, caractérisée en ce que la tête comporte de plus une pluralité de couches isolantes (200, 240) formées autour des premier et second pôles latéraux et de la structure de bobine pour isoler la structure de bobine (190, 235) vis-à-vis des premier et second pôles latéraux (265, 270).

4. Tête magnétique à film mince selon la revendication 1, caractérisée en ce que
ledit substrat (105) est un substrat électriquement isolant comportant ladite première surface et une seconde surface sur un côté opposé du substrat, le substrat incluant une traversée (110) entre les première et seconde surfaces, la traversée incluant une surface latérale intérieure, ladite tête comportant de plus :
un élément de connexion de traversée (112) constitué d'un matériau électriquement conducteur situé dans la traversée en contact avec la surface latérale intérieure de la traversée et s'étendant entre les première et seconde surfaces du substrat,
un capuchon protecteur de traversée (120) situé au-dessus de l'élément de connexion de traversée (112) au niveau de la première surface (105A) du substrat,
un corps isolant (200, 240) situé autour des premier et second pôles latéraux magnétiques (265, 270) et réalisé à partir d'une pluralité de couches constituées d'un matériau électriquement isolant,
une couche de bobine conductrice (190, 240) constituée d'un matériau électriquement conducteur située dans le corps isolant (200, 240) et autour d'un des premier et second pôles latéraux magnétiques (265, 270), la bobine étant formée en gravant des parties de la couche de bobine à l'aide d'un réactif de gravure, et
un socle isolant (300) situé au niveau des parties supérieures des premier et second pôles latéraux magnétiques (265, 270), le socle isolant s'étendant au-dessus du plan du corps isolant situé au-dessous et entourant les parties supérieures des premier et second pôles latéraux magnétiques,
le capuchon protecteur de traversée (120) étant constitué d'un matériau qui est fortement résistant à une gravure par le réactif de gravure.

5. Tête magnétique à film mince selon la revendication 1, caractérisée en ce que la tête comporte de plus :
un corps isolant (200, 240) situé autour des premier et second pôles latéraux (265, 270) et réalisé à partir d'une pluralité de couches d'un matériau électriquement isolant,
une bobine conductrice (190, 235) située dans le corps isolant et autour d'un des premier et second pôles latéraux magnétiques (265, 270),
un socle isolant (300) situé au niveau des parties supérieures des premier et second pôles latéraux magnétiques (265, 270), le socle isolant s'étendant au-dessus du plan du corps isolant situé au-dessous et entourant les parties supérieures des premier et second pôles latéraux magnétiques, et
un élément de protection contre l'usure (385') constitué d'un matériau dur situé au-dessus du socle et entourant les premier et second éléments supérieurs de pôle magnétique (345, 365), l'élément de protection contre l'usure fournissant à la fois une intégrité structurelle à la tête et une protection contre l'usure à celle-ci.

6. Tête magnétique à film mince selon la revendication 5, caractérisée en ce que l'élément de protection contre l'usure (385') est un carbone du type diamant (DLC).

7. Tête magnétique à film mince selon la revendication 5, caractérisée en ce que la tête comporte de plus une couche d'adhérence (380) située entre le socle (300) et l'élément de protection contre l'usure (385').

8. Tête magnétique à film mince selon la revendication 1, caractérisée en ce que la tête comporte de plus :
un corps isolant (200, 240) situé autour des premier et second pôles latéraux magnétiques (265, 270) et réalisé à partir d'une pluralité de couches d'un matériau électriquement isolant,
une bobine conductrice (190, 235) située dans le corps isolant et autour d'un des premier et second pôles latéraux magnétiques (265, 270),
un socle isolant (300) situé au niveau des parties supérieures des premier et second pôles latéraux magnétiques (265, 270), le socle isolant s'étendant au-dessus du plan du corps isolant situé au-dessous et entourant les parties supérieures des premier et second pôles latéraux magnétiques,
un premier élément de protection contre l'usure (figure 43, 400') constitué d'un matériau dur situé sur le socle isolant (300) et incluant des premier et second puits de support de pôle (415, 420) qui sont ouverts dans les parties supérieures des premier et second pôles latéraux magnétiques situés en-dessous, les premier et second puits de support de pôle (415, 420) étant espacés latéralement pour former une partie d'ouverture de l'élément de protection contre l'usure entre ceux-ci,
des premier et second éléments de support de pièce polaire (430, 435) constitués d'un matériau magnétique situés dans les premier et second puits de support de pôle (415, 420), et
des premier et second éléments d'extension de pièce polaire (445, 465) constitués d'un matériau magnétique situés au-dessus des premier et second éléments de support de pièce polaire (430, 435),
la région d'ouverture (460) constituée d'un matériau non-magnétique étant située entre les premier et second éléments d'extension de pièce polaire (445, 465), et les premier et second éléments de support de pièce polaire (430, 435) et les premier et second éléments d'extension de pièce polaire (445, 465) constituant les premier et second éléments supérieurs de pôle magnétique, respectivement.

9. Tête à film mince selon la revendication 8, caractérisée en ce que la tête comporte de plus un second élément de protection contre l'usure (485') constitué d'un matériau dur situé dans le même plan que les premier et second éléments d'extension de pièce polaire (445, 465), le second élément de protection contre l'usure entourant pratiquement les premier et second éléments d'extension de pièce polaire (445, 465), la seconde couche DLC comportant une surface supérieure.

10. Tête à film mince selon la revendication 9, caractérisé en ce que les première et seconde extensions de pièce polaire, la région d'ouverture et la surface supérieure du second élément de protection contre l'usure forment ensemble la surface supérieure de la tête à film mince, une partie de la surface supérieure de la tête à film mince présentant un contour pratiquement convexe.

11. Tête magnétique à film mince selon la revendication 9, caractérisée en ce que la tête comporte de plus une autre couche d'ensemencement (405) électriquement conductrice située entre le socle (300) et le premier élément de protection contre l'usure (400'), l'autre couche d'ensemencement (405) incluant des régions ouvertes au niveau des parties supérieures des premier et second pôles latéraux magnétiques (265, 270).

12. Tête magnétique à film mince selon la revendication 11, caractérisée en ce que la tête comporte de plus une couche d'adhérence de silicium (410) située sur l'autre couche d'ensemencement (405) pour augmenter l'adhérence entre le premier élément de protection contre l'usure et le socle isolant (300).

13. Tête magnétique à film mince selon la revendication 1, caractérisée en ce que la tête comporte de plus :
un corps isolant (200, 240) situé autour des premier et second pôles latéraux magnétiques (265, 270) et réalisé à partir d'une pluralité de couches constituées d'un matériau électriquement isolant,
une bobine conductrice (190, 235) située dans le corps isolant et autour d'un des premier et second pôles latéraux magnétiques,
un socle isolant (300) situé au niveau des parties supérieures des premier et second pôles latéraux magnétiques (265, 270), le socle isolant s'étendant au-dessus du plan du corps isolant situé au-dessous et entourant les parties supérieures des premier et second pôles latéraux magnétiques, et
un élément de protection contre l'usure (400', figure 36) constitué d'un matériau dur situé sur le socle isolant et incluant un puits polaire (415) qui est ouvert dans les parties supérieures des premier et second pôles latéraux magnétiques, dans laquelle
le premier élément supérieur de pôle magnétique (430') est situé dans le puits polaire (415), le premier élément supérieur de pôle magnétique étant au-dessus du premier pôle latéral (265) et s'étendant en direction du second pôle latéral (270),
le second élément supérieur de pôle magnétique (435') est situé dans le puits polaire (415), le second élément supérieur de pôle magnétique étant au-dessus du second pôle latéral (270) et s'étendant en direction du premier pôle latéral (265),
la région d'ouverture (550') est située dans le puits polaire (415) entre les première et seconde extrémités d'ouverture (345A, 365A).

14. Tête magnétique à film mince selon la revendication 13, caractérisée en ce que la tête comporte de plus une autre couche d'ensemencement (405) électriquement conductrice située sur le socle isolant (300) et au-dessous de l'élément de protection contre l'usure.

15. Tête magnétique à film mince selon la revendication 14, caractérisée en ce que la tête comporte de plus une couche d'adhérence de silicium (410) située sur l'autre couche d'ensemencement (405) pour augmenter l'adhérence entre l'élément de protection contre l'usure et le socle isolant (300).

16. Tête magnétique à film mince selon la revendication 1, caractérisée en ce que la tête comporte de plus :
un corps isolant (200, 240) situé autour des premier et second pôles latéraux magnétiques (265, 270) et réalisé à partir d'une pluralité de couches de matériau électriquement isolant,
une bobine conductrice (190, 235) située dans le corps isolant et autour d'un des premier et second pôles latéraux magnétiques (265, 270),
un socle isolant (300) situé au niveau des parties supérieures des premier et second pôles latéraux magnétiques (265, 270), le socle isolant s'étendant au-dessus du plan du corps isolant situé au-dessous et entourant les parties supérieures des premier et second pôles latéraux magnétiques,
un élément de protection contre l'usure dur (400', figure 26) situé sur le socle isolant (300) et comportant des premier et second puits polaires (415, 420) qui sont ouverts dans les parties supérieures des premier et second pôles latéraux situés au-dessous, les premier et second puits polaires (415, 420) étant espacés latéralement pour former une région d'ouverture dure (425) entre les premier et second puits polaires, et
des premier et second pôles magnétiques (430, 435) situés dans les premier et second puits polaires (415, 420) et correspondant aux premier et second éléments supérieurs de pôle magnétique, respectivement.

17. Tête magnétique à film mince selon la revendication 16, caractérisée en ce que l'élément de protection contre l'usure dur est un carbone du type diamant (DLC).

18. Tête magnétique à film mince selon la revendication 16, caractérisée en ce que la tête comporte de plus une autre couche d'ensemencement (405) électriquement conductrice située sur le socle isolant (300) et au-dessous de l'élément de protection contre l'usure dur, l'autre couche d'ensemencement incluant des régions ouvertes au niveau des parties supérieurs des premier et second pôles latéraux magnétiques (265, 270).

19. Tête magnétique à film mince selon la revendication 18, caractérisée en ce que la tête comporte de plus une couche d'adhérence de silicium (410) située sur l'autre couche d'ensemencement (405) pour augmenter l'adhérence entre l'élément de protection contre l'usure et le socle isolant (300).

20. Tête magnétique à film mince selon la revendication 1, caractérisée en ce que la tête comporte de plus :
une couche de blindage inférieure (114, figures 61 à 77) située sur la couche d'ensemencement (115) et incluant une surface de rebord périphérique,
une couche électriquement isolante (121) située sur la couche de blindage inférieure (114) et sous la couche magnétique inférieure (150),
un corps électriquement isolant stratifié (200, 240) situé autour des premier et second pôles latéraux magnétiques (265, 270),
une structure de bobine (190, 235) située dans le corps isolant et autour d'un des premier et second pôles latéraux magnétiques,
un socle isolant (300) situé au niveau des parties supérieures des premier et second pôles latéraux magnétiques, le socle isolant s'étendant au-dessus du plan du corps isolant situé au-dessous et entourant les parties supérieures des premier et second pôles latéraux magnétiques,
un blindage latéral stratifié (147, figure 70) situé au-dessus de la surface de rebord périphérique de la couche de blindage inférieure (114) et entourant pratiquement le corps isolant, et
un couvercle de blindage (322) situé au-dessus du blindage latéral et recouvrant le corps isolant et la structure de bobine, le couvercle de blindage incluant une ouverture à travers laquelle fait saillie le socle (300),
les premier et second éléments supérieurs de pôle magnétique étant situés sur le socle (300).

21. Ensemble de tête magnétique à film mince, comportant :
un substrat (105) ayant une première surface qui n'est pas enfoncée par rapport au reste du substrat,
un corps principal isolant (390 ; figure 80) situé sur la première surface du substrat (105),
une pluralité de blocs de déviation magnétiques (145) situés sur le substrat (105) et dans le corps principal (390),
une pluralité de structures de bobine (190, 235) situées dans le corps principal (390) et couplées magnétiquement à des blocs de déviation magnétiques respectifs (145),
un socle commun (300) constitué d'un matériau isolant situé au-dessus du corps principal (390) et présentant une dimension latérale inférieure à celle du corps principal (390), le socle (300) faisant saillie vers le haut depuis le corps principal (390) et le substrat, et
les blocs de déviation magnétiques (145) comportant chacun une paire de pièces polaires (345, 365) située au-dessus du socle commun (300), chaque paire de pièces polaires (345, 365) incluant des première et seconde pièces polaires magnétiques, chaque bloc de déviation magnétique (145) s'étendant à travers le socle commun (300) pour se coupler en un seul bloc à sa paire de pièces polaires respective (345, 365), une région d'ouverture respective (360) étant formée entre les première et seconde pièces polaires de chaque paire de pièces polaires (345, 365), une pluralité de blocs de déviation magnétiques (145) comportant des paires de pièces polaires qui présentent différentes géométries de pièce polaire de manière à être compatibles avec des supports magnétiques présentant différentes largeurs de piste.

22. Ensemble de tête magnétique à film mince selon la revendication 21, caractérisé en ce que les géométries de pièce polaire des paires de pièces polaires (345, 365) présentent différentes largeurs d'ouverture.

23. Ensemble de tête magnétique à film mince selon la revendication 21, caractérisé en ce que les géométries de pièce polaire des paires de pièces polaires (345, 365) présentent différentes longueurs d'ouverture.

24. Ensemble de tête magnétique à film mince selon la revendication 21, comportant de plus un cadre (325) entourant le socle isolant (300) pour attribuer une intégrité structurelle à celui-ci.

25. Ensemble de tête magnétique à film mince selon la revendication 21, caractérisé en ce qu'un élément de protection contre l'usure (385) constitué d'un matériau dur est situé au-dessus du socle (300) et entourant une pluralité de paires de pièces polaires (345, 365).

26. Ensemble de tête magnétique à film mince selon la revendication 21, caractérisé en ce que le corps principal isolant (390) comporte une pluralité de couches d'un matériau isolant (135, 160, 200, 240) à partir duquel est réalisé le corps principal, les couches du matériau isolant étant orientées généralement parallèlement au substrat (130).

27. Ensemble de tête magnétique à film mince selon la revendication 21, caractérisé en ce que chaque bloc de déviation magnétique (145) comporte des premier et second pôles latéraux (255, 260) ayant une pluralité de couches de matériau magnétique réalisées dans le corps principal isolant (390), les premier et second pôles latéraux (255, 260) étant orientés généralement perpendiculairement au substrat.

28. Procédé de fabrication d'une tête magnétique à film mince comportant les étapes consistant à :
déposer une couche magnétique inférieure (150) sur une première surface sur un substrat (105 ; figure 16B), qui n'est pas enfoncée par rapport au reste du substrat, la couche magnétique inférieure ayant des première et seconde extrémités opposées,
déposer une pluralité de couches (175, 220, 255, 315) d'un matériau magnétique au niveau de la première extrémité de la couche magnétique inférieure (150) pour réaliser un premier pôle latéral (265) ayant une première extrémité supérieure,
déposer une pluralité de couches (180, 225, 260, 320) d'un matériau magnétique au niveau de la seconde extrémité de la couche magnétique inférieure (150) pour réaliser un second pôle latéral (270) ayant une seconde extrémité supérieure,
déposer un premier élément supérieur de pôle magnétique (345) au niveau de la première extrémité supérieure, le premier élément supérieur de pôle magnétique comportant une première extrémité d'ouverture (345A) s'étendant en direction de la seconde extrémité supérieure,
former une région d'ouverture (360) d'un matériau non-magnétique au niveau de la première extrémité d'ouverture (345A) du premier élément supérieur de pôle magnétique (345), et
déposer un second élément supérieur de pôle magnétique (365) au niveau de la seconde extrémité supérieure, le second élément supérieur de pôle magnétique comportant une seconde extrémité d'ouverture (365A) située adjacente à la région d'ouverture.

29. Procédé selon la revendication 28, caractérisé en ce que le procédé comporte de plus l'étape consistant à former un élément de bobine (190, 235) autour d'un des premier et second pôles latéraux simultanément à la formation des premier et second pôles latéraux magnétiques (265, 270).

30. Procédé selon la revendication 29, caractérisé en ce que le procédé comporte de plus les étapes consistant à :
former une traversée (110) à travers le substrat (105) ayant une propriété électriquement isolante qui comporte des première et seconde surfaces principales opposées, la traversée comportant une surface latérale intérieure,
remplir la traversée (110) d'un matériau électriquement conducteur en contact avec la surface latérale intérieure de la traversée pour former un élément de connexion de traversée (112) s'étendant entre les première et seconde surfaces du substrat (105), et
former un capuchon protecteur de traversée (120) au-dessus de l'élément de connexion de traversée (112) au niveau de la première surface du substrat (105), dans lequel
l'étape de formation de l'élément de bobine inclut l'étape consistant à former une bobine pour exciter la tête par gravure à l'aide d'un réactif de gravure, et
le capuchon protecteur de traversée (120) étant constitué d'un matériau qui est fortement résistant à la gravure par le réactif de gravure.

31. Procédé selon la revendication 29, caractérisé en ce que
l'étape de formation d'élément de bobine inclut l'étape consistant à former une bobine conductrice autour d'un des premier et second pôles latéraux (265, 270), alors que les premier et second pôles latéraux sont en cours de formation, la bobine conductrice étant séparée des premier et second pôles latéraux par des couches isolantes, l'étape comportant de plus les étapes consistant à :
former un socle isolant (300) au niveau des parties supérieures des premier et second pôles latéraux (265, 270), le socle isolant s'étendant au-dessus du plan des couches isolantes situées au-dessous et entourant les parties supérieures des premier et second pôles latéraux, ledit socle isolant (300) incluant des première et seconde ouvertures dans les parties supérieures des premier et second pôles latéraux, situés au-dessous,
déposer une couche résistant à l'usure (385') sur les premier et second éléments supérieurs de pôle magnétique (345, 365) et le socle (300),
usiner la couche résistant à l'usure, la région d'ouverture et les premier et second éléments supérieurs de pôle magnétique de sorte que les premier et second éléments supérieurs de pôle magnétique sont enfoncés sur une plus grande étendue que la couche résistant à l'usure, et
graver au plasma la couche résistant à l'usure jusqu'au niveau des premier et second éléments supérieurs de pôle magnétique de sorte que la couche résistant à l'usure et les premier et second éléments supérieurs de pôle magnétique sont dans le même plan, de sorte que chacun des premier et second éléments supérieurs de pôle magnétique (345, 365) est constitué d'un matériau magnétique et formé sur le socle (300).

32. Procédé selon la revendication 31, dans lequel la couche résistant à l'usure est fabriquée à partir d'un carbone du type diamant.

33. Procédé selon la revendication 29, caractérisé en ce que le procédé comporte de plus les étapes consistant à :
déposer une première couche d'ensemencement (115) sur le substrat (105),
former un corps isolant (200, 240) autour des premier et second pôles latéraux (265, 270) et de l'élément de bobine,
former un socle isolant (300) au-dessus du corps isolant, les première et seconde extrémités supérieures s'étendant à travers le socle,
déposer une seconde couche d'ensemencement (330) incluant des première et seconde parties sur le socle isolant (300) à l'exception des première et seconde extrémités supérieures s'étendant à travers le socle,
éliminer la seconde couche d'ensemencement (330) à l'exception des parties de ladite seconde couche d'ensemencement (330) situées au-dessous des premier et second éléments supérieurs de pôle magnétique (345, 365) et de la région d'ouverture (360), et
former un élément de protection contre l'usure (385') au-dessus du socle isolant (300) et entourant les premier et second éléments supérieurs de pôle magnétique (345, 365) et la région d'ouverture (360) pour attribuer une intégrité structurelle à la tête et une protection contre l'usure à celle-ci, de sorte que la couche magnétique inférieure (150) est formée sur la première couche d'ensemencement, le premier élément supérieur de pôle magnétique (345) est déposé au niveau de la première extrémité supérieure et sur la première partie de la seconde couche d'ensemencement, et le second élément supérieur de pôle magnétique (365) est déposé au niveau de la seconde extrémité supérieure et sur la seconde partie de la seconde couche d'ensemencement (330).

34. Procédé selon la revendication 33, caractérisé en ce que le procédé comporte de plus l'étape consistant à déposer une couche d'adhérence (380) sur la tête avant l'étape de formation de l'élément de protection contre l'usure.

35. Procédé selon la revendication 33, caractérisé en ce que l'étape de formation de l'élément de protection contre l'usure inclut les étapes consistant à :
déposer une couche de protection contre l'usure sur le socle (300), et
usiner la couche de protection contre l'usure, les premier et second éléments supérieurs de pôle magnétique (345, 365) et la région d'ouverture (360) pour exposer les premier et second éléments supérieurs de pôle magnétique et la région d'ouverture.

36. Procédé selon la revendication 35, caractérisé en ce que l'étape consistant à déposer la couche de protection contre l'usure sur le socle (300) inclut les étapes consistant à :
déposer un revêtement de protection contre l'usure sur le socle (300) et le corps isolant,
effectuer une gravure ionique réactive du revêtement de protection contre l'usure pour éliminer le revêtement de protection contre l'usure à l'exception de la partie de celui-ci située au-dessus du socle isolant (300).

37. Procédé selon la revendication 29, caractérisé en ce que
l'étape de formation de l'élément de bobine (190, 235) inclut l'étape de formation d'une bobine conductrice autour d'un des premier et second pôles latéraux (265, 270) alors que les premier et second pôles latéraux sont en cours de formation, la bobine conductrice étant séparée des premier et second pôles latéraux par des couches isolantes (200, 240), le procédé comportant de plus les étapes consistant à :
former un socle isolant (300) au niveau des parties supérieures des premier et second pôles latéraux (265, 270), le socle isolant (300) s'étendant au-dessus du plan des couches isolantes (200, 240) situées au-dessous et entourant les parties supérieures des premier et second pôles latéraux,
déposer un premier élément de protection contre l'usure (385') constitué d'un matériau dur sur le socle isolant (300),
creuser des premier et second puits de support de pôle (415, 420, figure 25) dans l'élément protecteur pour exposer les parties supérieures des premier et second pôles latéraux, les premier et second puits de support de pôle étant espacés latéralement pour former une partie d'ouverture de l'élément de protection contre l'usure entre ceux-ci,
former des premier et second éléments de support de pièce polaire (430, 435) constitués d'un matériau magnétique dans les premier et second puits de support de pôle (415, 420),
former un premier élément d'extension de pièce polaire (445, figure 41) au-dessus du premier élément de support de pièce polaire (430), la première extension de pièce polaire incluant une première extrémité d'ouverture,
former une région d'ouverture (460) constituée d'un matériau non-magnétique au niveau de la première extrémité d'ouverture du premier élément d'extension de pièce polaire (445), et
former un second élément d'extension de pièce polaire (465, figure 41) au-dessus du second élément de support de pièce polaire (435), la seconde extension de pièce polaire incluant une seconde extrémité d'ouverture qui vient en butée contre la région d'ouverture constituée d'un matériau non-magnétique,
les premier et second éléments de support de pièce polaire magnétique (430, 435) et les premier et second éléments d'extension de pièce polaire (445, 465) constituent les premier et second éléments supérieurs de pôle magnétique, respectivement.

38. Procédé selon la revendication 29, caractérisé en ce que
l'étape de formation de l'élément de bobine (190, 235) inclut l'étape consistant à former une bobine conductrice autour d'un des premier et second pôles latéraux (265, 270) alors que les premier et second pôles latéraux sont en cours de formation, la bobine conductrice étant séparée des premier et second pôles latéraux par des couches isolantes (200, 240), le procédé comportant de plus les étapes consistant à :
former un socle isolant (300) au niveau des parties supérieures des premier et second pôles latéraux, le socle isolant (300) s'étendant au-dessus du plan des couches isolantes (200, 240) situées au-dessous et entourant les parties supérieures des premier et second pôles latéraux,
déposer un premier élément de protection contre l'usure (385') constitué d'un matériau dur sur le socle isolant (300),
creuser des premier et second puits de support de pôle (415, 420, figure 25) dans l'élément de protection contre l'usure pour exposer les parties supérieures des premier et second pôles latéraux, les premier et second puits de support de pôle étant espacés latéralement pour former une partie d'ouverture de l'élément de protection contre l'usure entre ceux-ci,
former des premier et second éléments de support de pièce polaire (430, 435) constitués d'un matériau magnétique dans les premier et second puits de support de pôle (415, 420),
former un second élément de protection contre l'usure (485') d'un matériau dur au-dessus du premier élément de protection contre l'usure, des premier et second éléments de support de pièce polaire (430, 435) et de la partie d'ouverture, le second élément de protection contre l'usure incluant les premier et second puits d'extension de pièce polaire (535, 540) qui s'ouvrent dans les premier et second éléments de support de pièce polaire (430, 435), respectivement, le second élément de protection contre l'usure incluant une région d'ouverture entre les premier et second puits d'extension de pièce polaire (535, 540), et
former des premier et second éléments d'extension de pièce polaire (445, 465) d'un matériau magnétique dans les premier et second puits d'extension de pièce polaire (535, 540), respectivement, les premier et second éléments d'extension de pièce polaire étant situés au-dessus des premier et second éléments de support de pièce polaire (430, 435),
les premier et second éléments de support de pièce polaire magnétique (430, 435) et les premier et second éléments d'extension de pièce polaire (445, 465) constituant les premier et second éléments supérieurs de pôle magnétique, respectivement.

39. Procédé selon la revendication 29, caractérisé en ce que
l'étape de formation de l'élément de bobine (190, 235) inclut l'étape consistant à former une bobine conductrice autour d'un des premier et second pôles latéraux (265, 270) alors que les premier et second pôles latéraux sont en cours de formation, la bobine conductrice étant séparée des premier et second pôles latéraux par des couches isolantes (200, 240), le procédé comportant de plus les étapes consistant à :
former un socle isolant (300) au niveau des parties supérieures des premier et second pôles latéraux (265, 270), le socle isolant s'étendant au-dessus du plan des couches isolantes (200, 240) situées au-dessous et entourant les parties supérieures des premier et second pôles latéraux,
déposer un premier élément de protection contre l'usure (400') constitué de matériau dur sur le socle isolant (300),
creuser un puits polaire (415, figure 25) dans l'élément de protection contre l'usure pour exposer les parties supérieures des premier et second pôles latéraux,
former un premier pôle magnétique (430', figure 37) en tant que le premier élément supérieur de pôle magnétique dans le puits polaire (415), le premier pôle magnétique étant couplé au premier pôle latéral (265) et incluant une extrémité d'ouverture s'étendant en direction du second pôle latéral (270),
former la région d'ouverture dans le puits polaire (415) et au niveau de l'extrémité d'ouverture du premier pôle magnétique (430'), et
former un second pôle magnétique (435', figure 37) lorsque le second élément supérieur de pôle magnétique dans le puits polaire (415), le second pôle magnétique étant couplé au second pôle latéral (270) et s'étendant en direction de l'extrémité d'ouverture du premier pôle magnétique (265).

40. Procédé selon la revendication 39, caractérisé en ce que l'élément de protection contre l'usure (400') est formé d'un carbone du type diamant.

41. Procédé selon la revendication 29, caractérisé en ce que
l'étape de formation de l'élément de bobine (190, 235) inclut l'étape consistant à former une bobine conductrice autour d'un des premier et second pôles latéraux (265, 270) alors que les premier et second pôles latéraux sont en cours de formation, la bobine conductrice étant séparée des premier et second pôles latéraux par des couches isolantes (220, 240), le procédé comportant de plus les étapes consistant à :
former un socle isolant (300) au niveau des parties supérieures des premier et second pôles latéraux (265, 270), le socle isolant (300) s'étendant au-dessus du plan des couches isolantes situées au-dessous et entourant les parties supérieures des premier et second pôles latéraux,
déposer un premier élément de protection contre l'usure (400', figure 26) constitué d'un matériau dur sur le socle isolant (300),
creuser des premier et second puits polaires (415, 420) dans l'élément de protection contre l'usure pour exposer les parties supérieures des premier et second pôles latéraux, les premier et second puits polaires étant espacés latéralement pour former une région d'ouverture de l'élément de protection contre l'usure entre les premier et second puits polaires, et
former des premier et second pôles magnétiques en tant que les premier et second éléments supérieurs de pôle magnétique dans les premier et second puits polaires, respectivement.

42. Procédé selon la revendication 41, caractérisé en ce que le procédé comporte de plus l'étape consistant à :
former, avant le dépôt du premier élément de protection contre l'usure, une couche d'ensemencement (405) électriquement conductrice sur le socle isolant (300) à l'exception des parties supérieures des premier et second pôles latéraux qui restent exposées.

43. Procédé selon la revendication 41, caractérisé en ce que l'élément de protection contre l'usure (400') est formé d'un carbone du type diamant.

44. Procédé selon la revendication 29, caractérisé en ce que
l'étape de formation de l'élément de bobine inclut l'étape consistant à former une structure de bobine autour d'un des premier et second pôles latéraux (265, 270) alors que les premier et second pôles latéraux sont en cours de formation, la structure de bobine étant séparée des premier et second pôles latéraux par un corps isolant stratifié (200, 240), le procédé comportant de plus les étapes consistant à :
former une couche de blindage inférieure (114) sur le substrat (105), la couche de blindage inférieure incluant une surface de rebord périphérique,
former une couche électriquement isolante (121) sur la couche de blindage inférieure (114),
former un socle isolant (300) au niveau des parties supérieures des premier et second pôles latéraux (265, 270), le socle isolant s'étendant au-dessus du plan du corps isolant (200, 240) situé au-dessous et entourant les parties supérieures des premier et second pôles latéraux,
former un blindage latéral stratifié (147, figure 70) au-dessus de la surface de rebord périphérique de la couche de blindage inférieure (114) et entourant pratiquement le corps isolant (200, 240), et
former un couvercle de blindage (322) situé au-dessus du blindage latéral (140) et recouvrant le corps isolant (200, 240) et la structure de bobine, le couvercle de blindage incluant une ouverture à travers laquelle fait saillie le socle,
chacun des premier et second éléments supérieurs de pôle magnétique (345, 365) est constitué d'un matériau magnétique et est formé sur le socle (300).

45. Procédé de fabrication d'un ensemble de tête magnétique à film mince sur une première surface d'un substrat (105) qui n'est pas enfoncée par rapport au reste du substrat, comportant les étapes consistant à :
former un corps principal isolant (390 ; figure 80) sur le substrat à partir d'une pluralité de couches de matériau isolant (135, 160, 200, 240),
former une pluralité de blocs de déviation magnétiques (145) sur le substrat (105) et dans le corps principal (390) pendant la formation du corps principal isolant (160, 200),
former une pluralité de structures de bobine (190, 235) dans le corps principal (390) et reliées magnétiquement à des blocs de déviation magnétiques respectifs (145), et
former un socle (300) d'un matériau isolant situé au-dessus du corps principal (390) et présentant une dimension latérale inférieure à celle du corps principal (390), le socle (300) faisant saillie vers le haut depuis le corps principal (390) et le substrat (105),
l'étape consistant à former une pluralité de blocs de déviation magnétiques (145) incluant la formation de chaque bloc de déviation magnétique pour inclure une paire de pièces polaires (345, 365) située au-dessus du socle (300), chaque paire de pièces polaires incluant des première et seconde pièces polaires magnétiques, chaque bloc de déviation magnétique s'étendant à travers le socle (300) pour se coupler en un seul bloc à sa paire de pièces polaires respective, une région d'ouverture respective (360) étant formée entre les première et seconde pièces polaires de chaque paire de pièces polaires, une pluralité de blocs de déviation magnétiques (145) incluant des paires de pièces polaires qui présentent différentes géométries de pièces polaires, de manière à être compatibles avec des supports magnétiques présentant différentes largeurs de piste.

46. Procédé de fabrication d'un ensemble de tête magnétique à film mince selon la revendication 45, caractérisé en ce que le procédé comporte de plus l'étape consistant à réaliser des premier et second pôles latéraux dans le corps principal isolant (160, 200) pour chaque bloc de la pluralité de blocs de déviation magnétiques (145), les premier et second pôles latéraux étant généralement perpendiculaires au substrat (130) et étant couplés d'un seul bloc aux première et seconde pièces polaires magnétiques, respectivement.

47. Procédé de fabrication d'un ensemble de tête magnétique à film mince selon la revendication 45, caractérisé en ce que les géométries de pièce polaire des paires de pièces polaires présentent différentes largeurs d'ouverture.

48. Procédé de fabrication d'un ensemble de tête magnétique à film mince selon la revendication 45, caractérisé en ce que les géométries de pièce polaire des paires de pièces polaires présentent différentes longueurs d'ouverture.
